# EUROPEAN PATENT APPLICATION

(11) **EP 4 546 166 A1**
(43) Date of publication of application: **30.04.2025**
(21) Application number: 24209075.1
(22) Date of filing: 25.10.2024
(51) Int. Cl.: G06F 16/951

(54) **SYSTEM AND METHOD FOR EXTRACTION FOR SMART SPIDER**

(30) Priority: 25.10.2023 US 202363593052 P; 25.10.2023 US 202363593020 P; 25.10.2023 US 202363593058 P; 25.10.2023 US 202363593023 P; 19.07.2024 US 202463673357 P; 24.10.2024 US 202418925946
(71) Applicant: Zyte Group Limited, Ballincollig, P31 DW66 (IE)
(72) Inventor: Korobov, Mikhail, Ballincollig, P31 DW66 (IE); Lopukhin, Konstantin, Ballincollig, P31 DW66 (IE); Bernal, Kevin, Ballincollig, P31 DW66 (IE); Casas, Javier, Ballincollig, P31 DW66 (IE); Mehta, Rakesh, Ballincollig, P31 DW66 (IE); Constantin, Cristi, Ballincollig, P31 DW66 (IE); Sánchez, Iván, Ballincollig, P31 DW66 (IE); Shevchenko, Taras, Ballincollig, P31 DW66 (IE); Vostretsov, Nikita, Ballincollig, P31 DW66 (IE)
(74) Representative: Okoampah, Rene

(57) **Abstract**

A smart spider and web scraping system with custom templates, artificial intelligence for custom attribute extraction, artificial intelligence for providing quick fixes for machine learning extracted web page data, and direct HTTP request extraction without crawling.

## Description

### Technical Field

The invention relates to a system for a computer comprising an input and a memory including non-transitory program memory for storing at least instructions and a processor that is operative to execute instructions for scraping and processing a web page.

### Technological Background

Software that extracts structured information from the web automatically is conventionally handled by creating custom crawlers ("spiders") for each website being crawled using manually specified rules. Zyte Group Limited is a creator and maintainer of the most popular open-source framework for creating such spiders (Scrapy). While this approach works, conventional crawlers require development and maintenance efforts for each website, which is slow, costly, and does not scale well to a large number of websites.

### Summary of the invention

Described herein are embodiments of technology to obtain structured data, including text, image and other kinds of data, from web pages, and process them for, among other advantages, more efficient web crawling, website analysis, creating knowledge databases and graphs, and providing more useful web page representation for other automated web page processing components. For example, embodiments described herein include machine learning components employing Deep Learning to extract and classify information from web pages. Embodiments also include a multi-modal neural network architecture that processes text content and HTML structure to achieve good quality and to do so efficiently to decrease extraction time.

Accordingly described are implementations of a computer system, computer system components, computer apparatus, a method, and computer program products configured to execute program instructions for the method for scraping and processing a web page. The method is performed by a computer system that comprises one or more processors and a computer-readable storage medium encoded with instructions executable by at least one of the processors and operatively coupled to at least one of the processors.

In an implementation, described is system, process, and computer program product for a computer comprising an input and a memory including non-transitory program memory for storing at least instructions and a processor that is operative to execute instructions for scraping and processing a web page, comprising:
an Application Programming Interface (API) including a smart crawling selector and further comprising;
custom spiders and template spiders configured to implement a crawling strategy;
a Machine Learning (ML) module configured for extraction, including an ML rendering extraction module, an ML HTML extraction module for extracting raw HTML, or an LLM enhanced ML Custom Attributes extraction module, or any combination thereof; and/or
an interface module configured to allow a user to select a fix for at least one ML prediction error.

In an implementation, described is system, process, and computer program product for a computer comprising an input and a memory including non-transitory program memory for storing at least instructions and a processor that is operative to execute instructions for scraping and processing a web page, comprising:
an Application Programming Interface (API);
a smart crawling selector; and
plurality of spiders including template spiders and custom spiders; and
instructions that enable actions comprising: extracting a web page and extracting target data from the web page with at least one of the plurality of spiders.

In an implementation, described is a system, process, and computer program product for a computer comprising an input and a memory including non-transitory program memory for storing at least instructions and a processor that is operative to execute instructions for scraping and processing a web page, comprising:
accepting inputs for custom attribute data from a user;
accessing a web page from a website;
extracting HTML text from the web page;
processing the HTML text from the web page with a lightweight machine learning (ML) artificial intelligence (Al) model;
inputting data from the ML AI model and the custom attribute data from the user to a Large Language Model (LLM) Al;
prompting the LLM AI to perform extraction;
obtaining LLM AI extracted attributes from the LLM Al.

In an implementation, described is a system, process, and computer program product for a computer comprising an input and a memory including non-transitory program memory for storing at least instructions and a processor that is operative to execute instructions for scraping and processing a web page, comprising:
tokenizing a source text as N-question tokens and a context
concatenating the N question tokens and the context, wherein N is a hyper-parameter indicating the number of questions the model can answer;
training a Named Entity Recognition (NER) model to predict, for each of the N question tokens, a probability that the token is a start of an answer and a probability that the token is the end of an answer; and
extracting N answers from the source text using the highest probability start token and the highest probability end token for each of the N question tokens

In an implementation, described is a system, process, and computer program for a computer comprising an input and a memory including non-transitory program memory for storing at least instructions and a processor that is operative to execute instructions for scraping and processing a web page, comprising:
accessing a web page from a website;
extracting data from the web page;
processing the data from the web page with a machine learning (ML) model to generate predictions for web page elements, wherein the ML model assigns a probability to the web page elements that are higher than an ML model threshold;
identifying at least one ML prediction error from the predictions;
providing an interface to an operator including a fix for the at least one ML prediction error.

### Brief description of the drawings

Non-limiting and non-exhaustive embodiments are described with reference to the following drawings. In the drawings, like reference numerals refer to like parts throughout the various figures unless otherwise specified.

For a better understanding, reference will be made to the following Detailed Description, which is to be read in association with the accompanying drawings, wherein:
FIG. 1A shows an embodiment of a computer that can be included in a system such as that shown in FIGS. 2A-2E;
FIG. 1B shows an embodiment of a scraping architecture that can be included in a system such as that shown in FIGS. 2A-2E;
FIG. 1C shows an embodiment of a scraping architecture that can be included in a system such as that shown in FIGS. 2A-2E;
FIG. 2A is a logical architecture of a system for in accordance with at least one of the various embodiments;
FIG. 2B is a logical architecture of a system for a scraping module architecture and system including a scraping module application programming interface (API) gateway;
FIG. 2C is a logical architecture of a system and system flow for a scraping module architecture and system including a scraping module API gateway;
FIG. 2D shows an illustrative cloud computing environment;
FIG. 2E shows an illustrative cloud computing environment.
FIG. 3A shows an embodiment of a scraping system architecture and system flow such as that shown in FIGS. 2A-2E.
FIGS. 3B-3F show logical flows for a scraping architecture.
FIGS. 4A-4D represent graphical user interfaces for generating and running spider templates with at least one of the various embodiments.
FIG. 5 is a flowchart for a process in accordance with at least one of the various embodiments.
FIG. 6A is a flowchart and architecture for a process in accordance with at least another one of the various embodiments.
FIG. 6B shows a data generation process.
FIG. 6C shows a chart of evaluation metrics.
FIGS. 7A-7B show examples of extractive question answering.
FIGS. 8A-8F represent graphical user interfaces for an implementation of the API for custom attribute extraction.
FIG. 9 is a flowchart and architecture for a process in accordance with at least one of the various embodiments;
FIGS. 10A-10D show example of a machine learning (ML) extraction employing an Autoextract model and an extraction API
FIGS. 11A-11D show an Include XPath example.
FIGS. 12A-12B show an Exclude XPath example.

### Detailed description of preferred embodiments

Various embodiments now will be described more fully hereinafter with reference to the accompanying drawings, which form a part hereof, and which show, by way of illustration, specific embodiments by which the innovations described herein can be practiced. The embodiments can, however, be embodied in many different forms and should not be construed as limited to the embodiments set forth herein. Rather, these embodiments are provided so that this disclosure will be thorough and complete, and will fully convey the scope of the embodiments to those skilled in the art. Among other things, the various embodiments can be methods, systems, media, or devices. Accordingly, the various embodiments can take the form of an entirely hardware embodiment, an entirely software embodiment, or an embodiment combining software and hardware aspects. The following detailed description is, therefore, not to be taken in a limiting sense.

Throughout the specification and claims, the following terms take the meanings explicitly associated herein, unless the context clearly dictates otherwise. The term "herein" refers to the specification, claims, and drawings associated with the current application. The phrase "in an embodiment" or "in at least one of the various embodiments" as used herein does not necessarily refer to the same embodiment, though it can. Furthermore, the phrase "in another embodiment" as used herein does not necessarily refer to a different embodiment, although it can. Thus, as described below, various embodiments can be readily combined, without departing from the scope or spirit of the present disclosure.

In addition, as used herein, the term "or" is an inclusive "or" operator, and is equivalent to the term "and/or" unless the context clearly dictates otherwise. In addition, throughout the specification, the meaning of "a" "an" and "the" include plural references. The meaning of "in" includes "in" and "on."

The terms "operatively connected" and "operatively coupled", as used herein, mean that the elements so connected or coupled are adapted to transmit and/or receive data, or otherwise communicate. The transmission, reception or communication is between the particular elements, and may or may not include other intermediary elements. This connection/coupling may or may not involve additional transmission media, or components, and can be within a single module or device or between one or more remote modules or devices.

For example, a computer hosting a web scraping and classification engine can communicate to a computer hosting one or more classifier programs, websites, and/or event databases via local area networks, wide area networks, direct electronic or optical cable connections, dial-up telephone connections, or a shared network connection including the Internet using wire and wireless based systems.

The following briefly describes embodiments to provide a basic understanding of some aspects of the innovations described herein. This brief description is not intended as an extensive overview. It is not intended to identify key or critical elements, or to delineate or otherwise narrow the scope. Its purpose is merely to present some concepts in a simplified form as a prelude to the more detailed description that is presented later.

Described herein are embodiments of technology to obtain structured data, including text, image and other kinds of data, from web pages, and process them for, among other advantages, more efficient web crawling, website analysis, creating knowledge databases and graphs, and providing more useful web page representation for other automated web page processing components. For example, embodiments as described herein include machine learning components employing Deep Learning to extract and classify information from web pages. Embodiments also include a multi-modal neural network architecture which processes text content and HTML structure to achieve good quality and to do so efficiently to decrease extraction time.

Briefly stated, various embodiments are directed to systems and methods for scraping and classifying web pages.

The present disclosure provides a system, method, and computer program product comprising a computer-readable storage medium encoded with instructions that, when executed by at least one processor in a computer system that comprises one or more processors and a memory operatively coupled to at least one of the processors, cause the computer system at least to carry out the processes as described herein. The instructions comprise instructions that, when executed by at least one of the processors, can cause the computer system at least to execute the method of the embodiments for scraping and processing a web page as described herein.

### Illustrative Computer

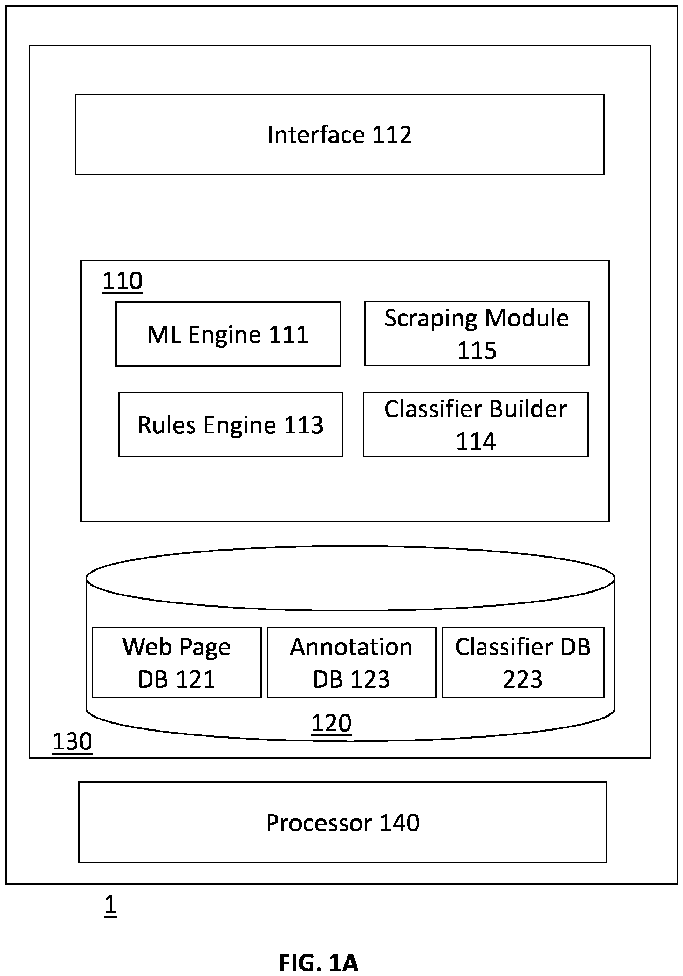

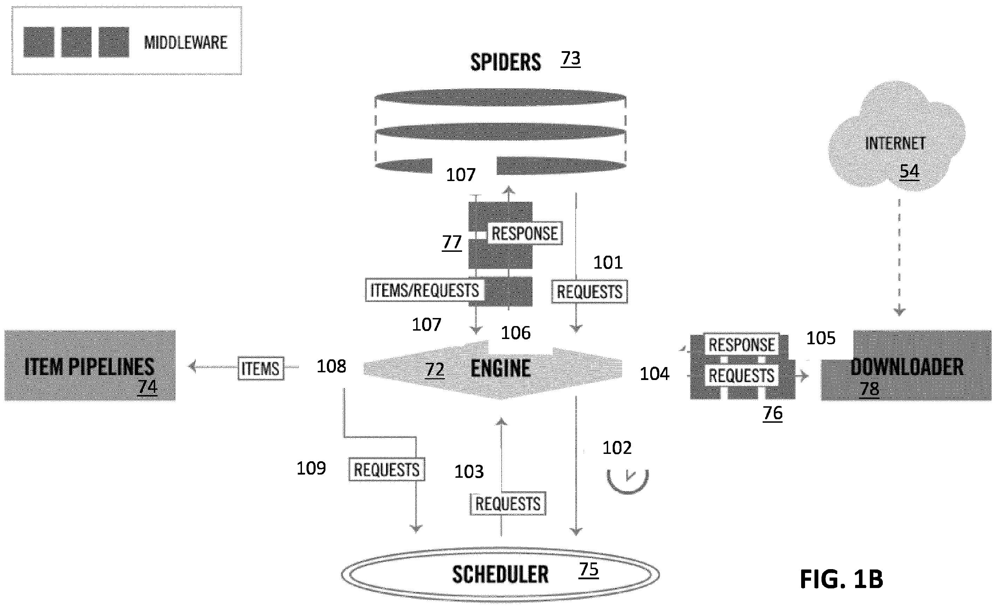

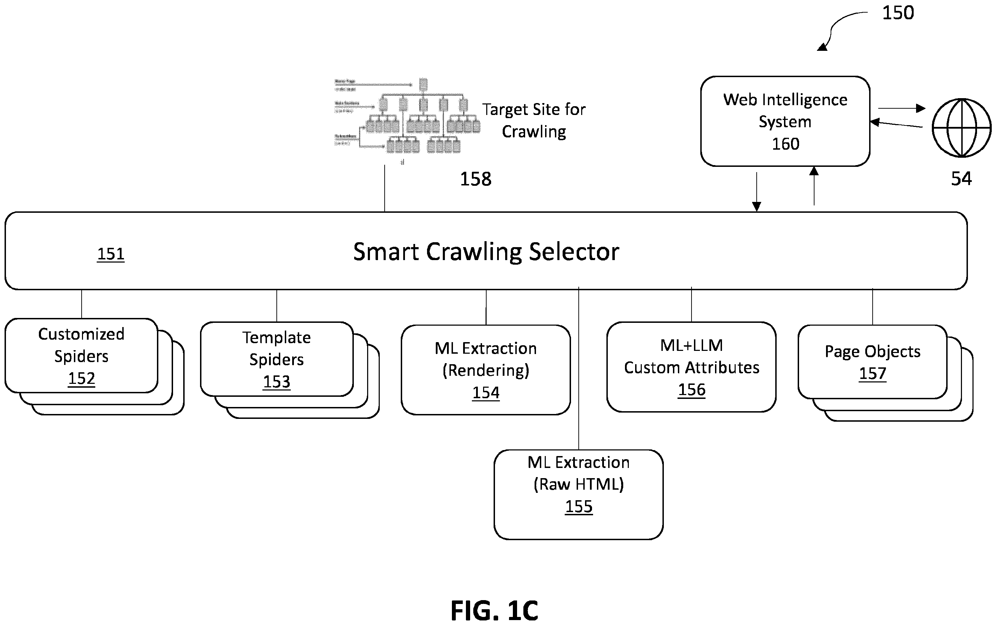

FIG. 1A shows an embodiment of a system for web page and web page parts scraping, processing and classification of the present disclosure. In at least one embodiment, a system or a network computer, generally represented by reference numeral 1, comprises a network computer including a signal input/output, such as via a network interface or interface unit 112, for receiving input, such as URLs of pages, to extract data from or content of these pages, a processor 140 and memory 6 that includes program memory 110, all in communication with each other via a bus. In some embodiments, processor 140 can include one or more central processing units. In some embodiments, processor 140 can include additional hardware devices such as Graphical Processing Units (GPUs) or AI accelerator application-specific integrated circuits. As illustrated in FIG. 1, network computer 1 also can communicate with the Internet, or some other communications network, via network interface unit 112, which is constructed for use with various communication protocols including the TCP/IP protocol. Network interface unit 112 is sometimes known as a transceiver, transceiving device, or network interface card (NIC). Network computer 1 also comprises input/output interface for communicating with external devices, such as a keyboard, or other input or output devices not shown. Input/output interface can utilize one or more communication technologies, such as USB, infrared, BluetoothTM, or the like.

Memory 130 generally includes RAM, ROM and one or more permanent mass storage devices, such as hard disk drive, flash drive, SSD drive, tape drive, optical drive, and/or floppy disk drive. Memory 130 stores operating system for controlling the operation of network computer 1. Any general-purpose operating system can be employed. Basic input/output system (BIOS) is also provided for controlling the low-level operation of network computer 1. Memory 130 can include processor readable storage media 110. Program memory, that can be a processor readable storage media 110, can be referred to and/or include computer readable media, computer readable storage media, and/or processor readable storage device. Processor readable storage media 110 can include volatile, nonvolatile, removable, and non-removable media implemented in any method or technology for storage of information, such as computer readable instructions, data structures, program modules, or other data. Examples of processor readable storage media include RAM, ROM, EEPROM, SSD, flash memory or other memory technology, CD-ROM, digital versatile disks (DVD) or other optical storage, magnetic cassettes, magnetic tape, magnetic disk storage or other magnetic storage devices, or any other media that can be used to store the desired information and can be accessed by a computer.

Memory 130 further includes one or more data storage 120, which can be utilized by network computer to store, among other things, applications and/or other data. For example, data storage 120 can also be employed to store information that describes various capabilities of network computer 1. The information can then be provided to another computer based on any of a variety of events, including being sent as part of a header during a communication, sent upon request, or the like. Data storage 120 can also be employed to store messages, web page content, or the like. At least a portion of the information can also be stored on another component of network computer, including, but not limited to, processor readable storage media, hard disk drive, or other computer readable storage medias (not shown) in network computer 1.

Data storage 120 can include a database, text, spreadsheet, folder, file, or the like, that can be configured to maintain and store user account identifiers, user profiles, email addresses, IM addresses, and/or other network addresses, or the like.

In at least one embodiment, data storage 120 can include databases, which can contain information determined from one or more events for one or more entities.

Data storage 120 can further include program code, data, algorithms, and the like, for use by a processor, such as processor 140, to execute and perform actions. In one embodiment, at least some of data store 120 might also be stored on another component of network computer 1, including, but not limited to, processor readable storage media 110, hard disk drive, or the like.

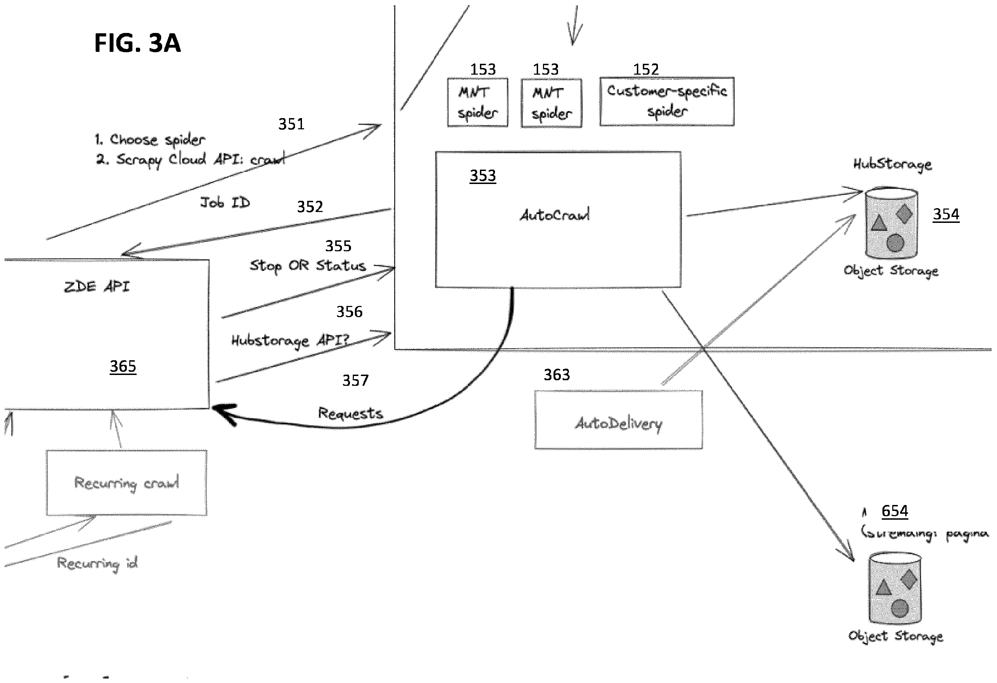

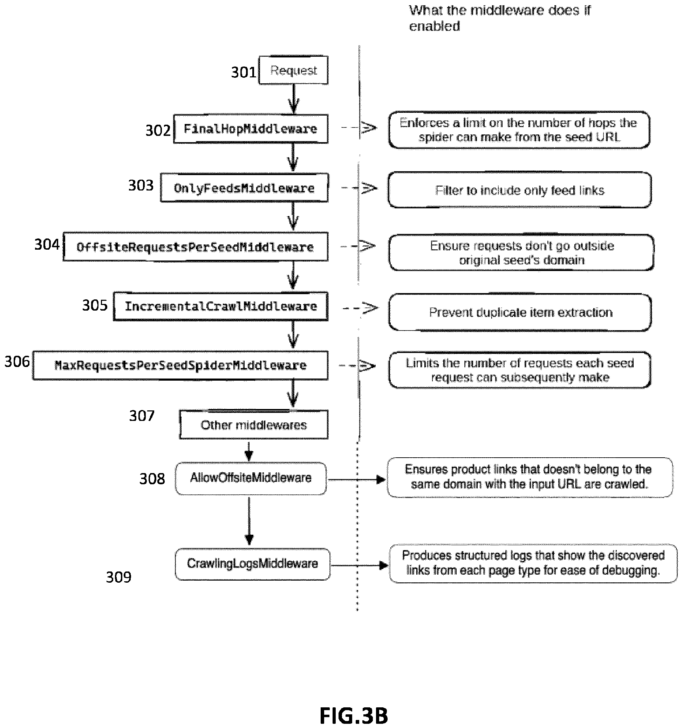

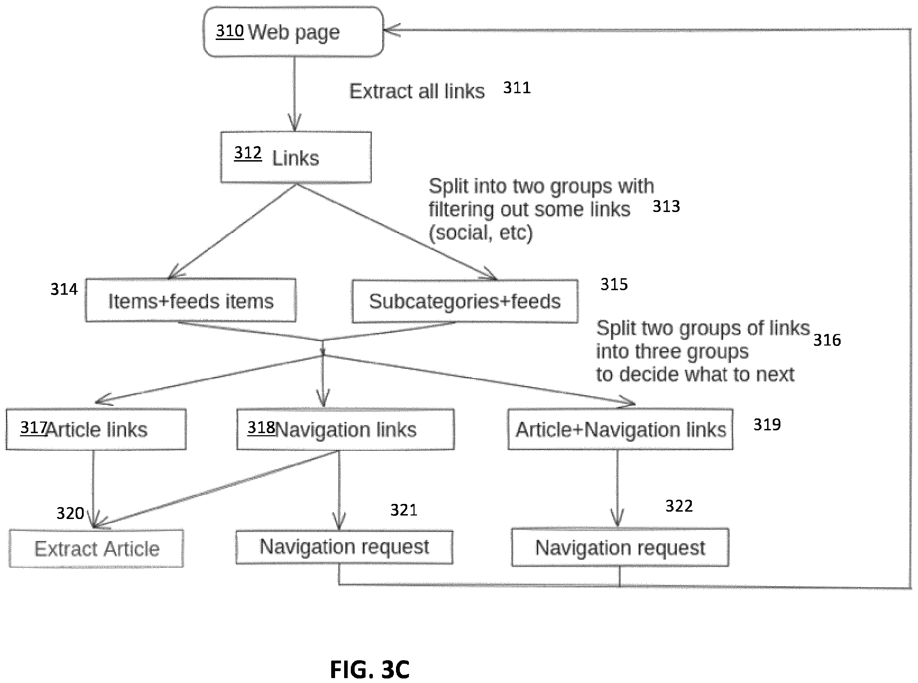

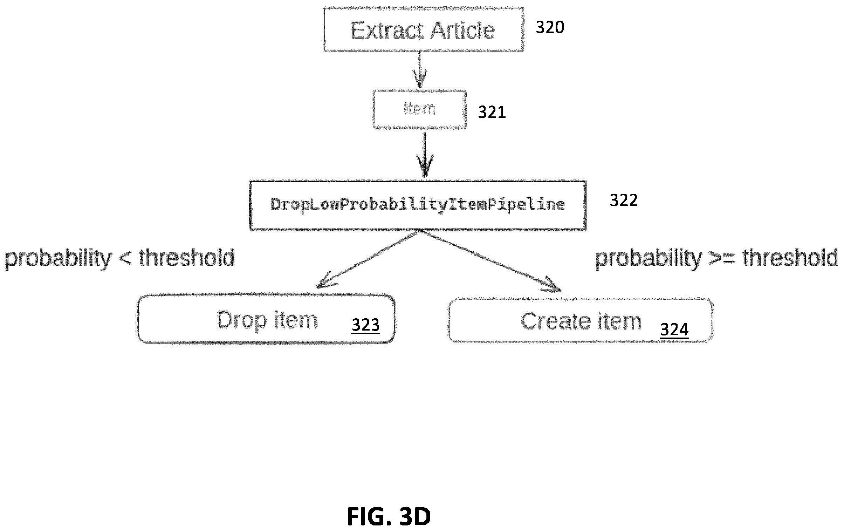

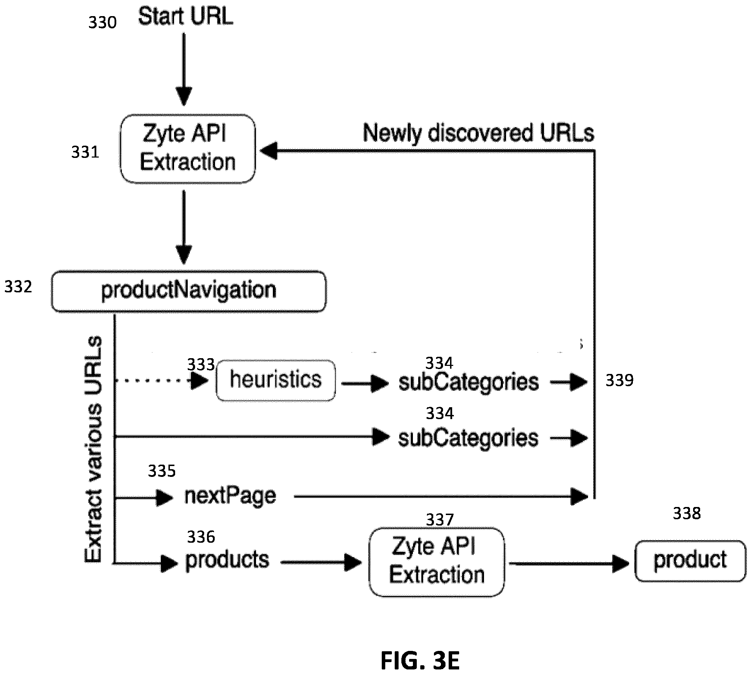

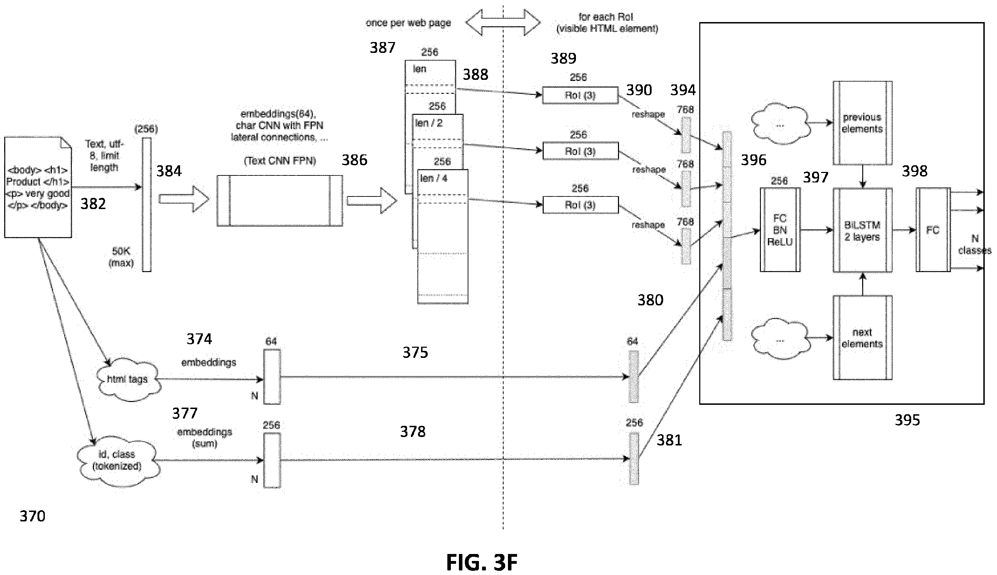

System 1 includes a web scraping and classification engine 110. Web scraping and classification engine 110 includes a scraping module 115 and Machine Learning-based processing engine 111. Web scraping and classification engine 110 can also include rule-based processing engine 113. The web scraping and classification engine 110 can be arranged and configured to employ processes, or parts of processes, such as those described in conjunction with FIG. 3, to perform at least some of its actions. For example, in embodiments, the web scraping and classification engine 110 can be arranged and configured to employ processes, or parts of processes, for an image processing part, a text processing part, and a classifier such as those described in conjunction with FIG. 3, to perform at least some of its actions.

Scraping module 115 can include a program or algorithm for, when executed by the processor, performing some or all of these actions: rendering a web page in a web browser, downloading of the related resources like images or CSS files, executing JavaScript and other instructions, obtaining screenshots of web pages and its parts, measuring on-screen coordinates, colors, visibility, and other properties of HTML elements and other parts of web pages, obtaining final HTML representation of the web pages, and automatically executing commands to control the browser. In an implementation, in an API and/or a crawler, the scraping module 115 can include a template or code configured to allow a user to describe and input custom attributes they wish to extract.

In an implementation, the system can be configured to perform extraction of attributes which are either custom or would be difficult with conventional spider development, (e.g.: if product color is mentioned in a free-form description).

Web scraping and classification engine 110 can include Artificial Intelligence (Al) machine learning (ML)-based processing engine 11, including AI machine learning classification, which can be based on any of a number of known machine learning algorithms, including classifiers such as the classifiers described herein, for example, neural nets (including fully connected, convolutional and recurrent neural nets, or neural nets created as a combination of these blocks), decision trees, conditional random fields (CRFs), propositional rule learner, logistic regression, and the like, and NER models. ML-based processing engine 111 can be implemented as a multi-modal neural network. ML-based processing engine can be separated into inference and training (classifier building) components, which can be employed at different points of time.

Web scraping and classification engine 110 can include rule-based classification and extraction module 13. If present, rule-based classification and extraction module 113 can process results of the scraping module 115, or process results of the Machine Learning-based processing engine 111, or combine results, or do all of these tasks, or any combination of these tasks.

System 1 also includes data storage memory 120 including a number of data stores 121, 123, 125 that can be hosted in the same computer or hosted in a distributed network architecture. System 1 includes a data store 121 for a set of processed web pages, which can contain images, HTML, measurement results and other metadata about web pages. System 1 can further include a data store for human-provided annotations 123, including examples of the desired classification and extraction results for a set of input web pages. System 1 includes a classifier component, ML-based processing engine 111, including a parameters and configuration classifier store 25 comprising a set of web page and web page parts classifiers, as well as a classifier model building (training) program 114 for, when executed by processor 140, training and evaluating ML algorithms for web page and web page part classification and extraction, and storing the resulting parameters and configurations in classifier store 125, using either training database of web pages 21, or a data store of human-provided annotations 123, or both as a training data. Classifier model building program 114 can be employed to build classifiers operable to classify other web pages and parts of web pages, including other web sites, based on learning from the previously classified web pages and parts of web pages.

Although FIG. 1 illustrates system 1 as a single network computer, the innovations described herein are not so limited. For example, one or more functions of system 1 can be distributed across one or more distinct network computers. Moreover, system or computer 1 is not limited to a particular configuration. Thus, in one embodiment, computer 1 has a plurality of network computers. In another embodiment, a network server computer 1 has a plurality of network computers that operate using a master/slave approach, where one of the plurality of network computers of network server computer is operative to manage and/or otherwise coordinate operations of the other network computers. In other embodiments, a network server computer 1 operates as a plurality of network computers arranged in a cluster architecture, a peer-to-peer architecture, and/or even within a cloud architecture. System 1 can be implemented on a general-purpose computer under the control of a software program and configured to include the technical innovations as described herein. Alternatively, system 1 can be implemented on a network of general-purpose computers and including separate system components, each under the control of a separate software program, or on a system of interconnected parallel processors, system 1 being configured to include the technical innovations as described herein. Thus, the innovations described herein are not to be construed as being limited to a single environment, and other configurations, and architectures are also envisaged.

An exemplary architecture for a web crawler 41 and scraper is shown in FIGS 1B-1C. As shown in FIGS. 1B-1C, an execution engine 72 is configured to control a scraping data flow for the web scraper. In an implementation, the web scraper is external to the architecture, and the execution engine accepts requests via and API downloader.

At block 101, the engine 72 obtains one or more requests to crawl a targeted websites 71 from a spider 73 of a crawler 41. At block 102 the engine 106 schedules the requests in a scheduler 75 and asks for the next requests to crawl. At block 103, the scheduler returns the next requests to the engine 72. At block 104, the engine sends the requests to a downloader 78, passing through a downloader middleware 76. Once the page of the targeted website 71 finishes downloading, at block 105 the downloader 78 generates a response with the page and sends it to the engine 72, passing through the downloader middleware 76. At block 106, the engine 72 receives the response from the downloader and sends it to the crawler 41 spider 73 for processing, passing through the crawler middleware 77.

At block 107, the spider 73 processes the response and returns scraped items and new requests to the engine 72, passing through the spider 77 middleware. At block 108, the engine sends processed items to item pipelines 74, then at block 109 sends processed requests to the scheduler 75 and asks for possible next requests to crawl. The process repeats starting at block 101 until there are no more requests from the scheduler 75. Results are sent back to the external web scraper.

As shown in FIG. 1C, a Smart Crawling system 150 is an adaptive technology solution solving many of the existing problems with state of the art crawling existing today, for example, as shown in FIG. 1B. Current solutions tend to split between custom coding approaches or generic machine driven crawling. Challenges include: custom coding: requires manual maintenance if underlying website changes structure; and machine driven: limited ability to adjust crawling strategies.

Smart crawling enables all current and future approaches (custom coding and machine driven) to be incorporated with a smart crawling selector 151 configured to decide which technology or technologies to apply to achieve a required result. This is a fully adaptive system based on the current underlying state of each target website 158.

Advantages of the smart crawling system 150 include the ability to utilize a portfolio of custom coded solutions and generic reusable solutions, plus a portfolio of machine extraction solutions (covering simple to complex extraction requirements). The system 150 also is configured to easily add new crawling solutions in a highly modular manner, which advantageously enables platform users or customers to augment the system.

Another advantage is the system's 150 ability to dynamically alter a crawling strategy based on input about the target site's 158 web ecosystem. A web intelligence sub-system 160 is configured to continually provide new input about the evolving target site's 158 web environment 54 to allow the smart crawling selector 151 adjust a crawling strategy automatically. The web intelligence sub system is configured with dual-feedback that also takes input from active crawls to dynamically adjust a crawling strategy.

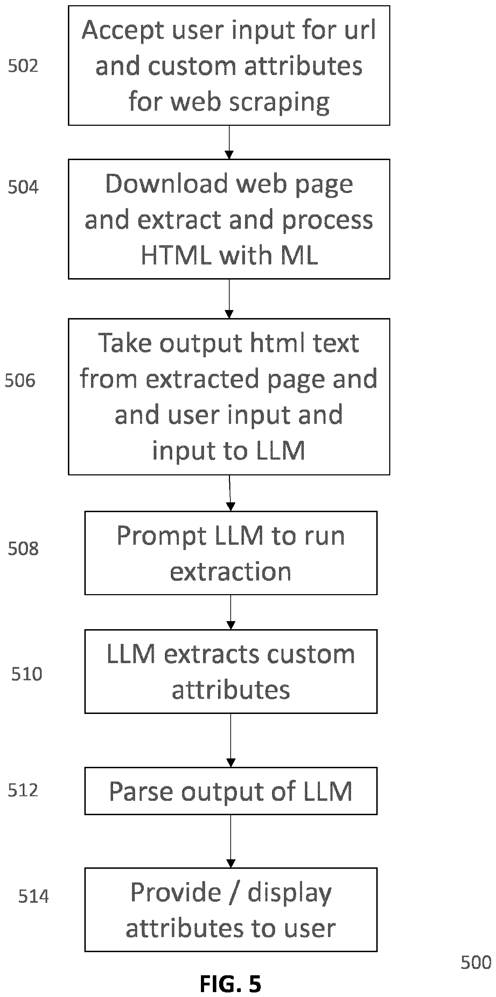

When the crawl begins, the smart crawling selector 151 decides which combination of machine extraction and/or custom coded solutions can be utilized and a crawling strategy is determined. To that end, the smart crawling system 150 comprises custom spiders 152 and template spiders 153 configured to implement a crawling strategy. The smart crawling system 150 also comprises a number of Machine Learning (ML) modules configured for extraction, including an ML rendering extraction module 154, and ML HTML extraction module 155 for extracting raw HTML, and an LLM enhanced ML Custom Attributes extraction module 156. An exemplary system and method for extraction from raw HTML in an Application Programming Interface scraping is described in more detail with respect to FIG. 3F and in U.S. Provisional Patent Application No.: 63/593,023 filed on October 25, 2023, the entirety of which is incorporated by reference hereby. An exemplary system and method for ML web scraping with Custom Attributes is described in more detail with respect to FIGS. 5-6C and in U.S. Provisional Patent Application No.: 63/593,058 filed on October 25, 2023, the entirety of which is incorporated by reference hereby. The ML rendering extraction module 154 and ML HTML extraction module 155 can each comprise pre-trained machine extraction for defined schemas, for example, employing web-RCNN's. The smart crawling system also includes Page Objects 157 including bespoke coded components.

In an implementation, as described herein, the spider can be configured to extract article data from news or blog websites and ecommerce sites. The spider efficiently crawls one or more websites to yield articles or products, making it ideal for aggregating content from various sources. The spider follows a strategy aimed at maximizing the discovery and extraction of articles or products by following most links within each domain provided in the list of seed URLs. The spider can make use of article or product machine learning model from a scraping API, allowing it to extract article content and discard any non-article links.

### Illustrative Operating Environment

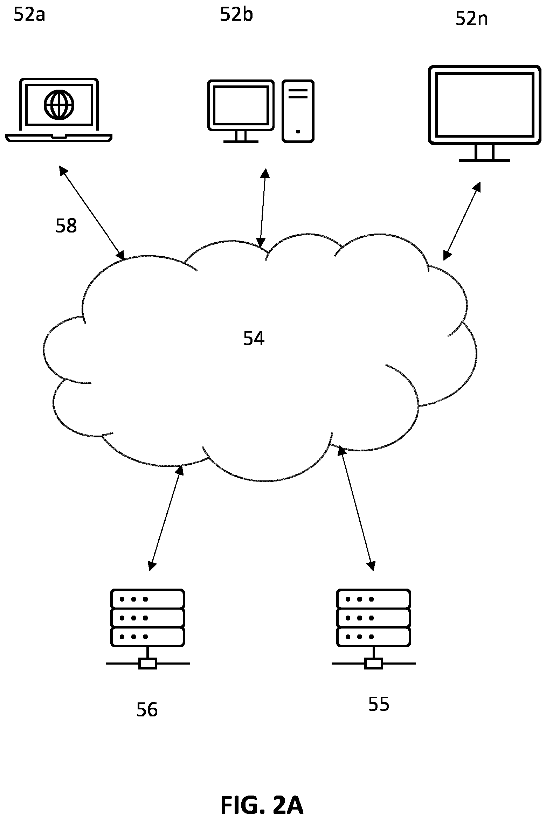

FIG. 2A shows components of one embodiment of an environment in which embodiments of the innovations described herein can be practiced. Not all components are required to practice the innovations, and variations in the arrangement and type of the components can be made without departing from the spirit or scope of the innovations.

FIG. 2A shows a network environment adapted to support the present disclosure. The exemplary environment includes a network 54, and a plurality of computers, or computer systems, including client computers 52 (a) ... (n) (where "n" is any suitable number), a web server 55, and a web scraping and analysis server 56. Computers 52(a) ... (n), web server 55, and server 56 can also include wired and wireless systems. Data storage, processing, data transfer, and program operation can occur by the inter-operation of the components of network environment. For example, a component including a program in server 52(a) can be adapted and arranged to respond to data stored in server 56 and data input from web server 55. This response can occur as a result of preprogrammed instructions and can occur without intervention of an operator.

Network 54 is, for example, any combination of linked computers, or processing devices, adapted to access, transfer and/or process data. Network 54 can be private Internet Protocol (IP) networks, as well as public IP networks, such as the Internet that can utilize World Wide Web (www) browsing functionality, or a combination of private networks and public networks.

In one embodiment, at least some of computers 52(a) ... (n), web server 55 and server 56 can operate over a wired and/or wireless network, such as networks 54. Generally, computers 52(a) ... (n), web server 55 and server 56 can include virtually any computer capable of communicating over a network to send and receive information, perform various online activities, offline actions, or the like. In one embodiment, one or more of computers 52(a) ... (n), web server 55 and server 56 can be configured to operate within a business or other entity to perform a variety of services for the business or other entity. For example, client computers 52(a) ... (n), web server 55 and server 56 can be configured to operate as a web server, a host server, or the like. However, computers 52(a) ... (n), web server 55 and server 56 are not constrained to these services and can also be employed, for example, as an end-user computing node, in other embodiments. It should be recognized that more or less computers can be included in system 1 such as described herein, and embodiments are therefore not constrained by the number or type of client computers employed.

Computers 52(a) ... (n), web server 55 and server 56 can include computers that typically connect using a wired or wireless communications medium such as personal computers, multiprocessor systems, microprocessor-based or programmable electronic devices, network PCs, or the like. In some embodiments, computers 52(a) ... (n) can include virtually any portable personal computer capable of connecting to another computing device and receiving information such as, servers, a laptop computer, smart mobile telephone, and tablet computers, and the like. However, portable computers are not so limited and can also include other portable devices such as cellular telephones, display pagers, radio frequency (RF) devices, infrared (IR) devices, Personal Digital Assistants (PDAs), handheld computers, wearable computers, integrated devices combining one or more of the preceding devices, and the like.

As such, computers 52(a) ... (n), web server 55 and server 56 typically range widely in terms of capabilities and features. Moreover, computers 52(a) ... (n), web server 55 and server 56 can access various computing applications, including a browser, or other web-based application.

A web-enabled computer can include a browser application that is configured to receive and to send web pages, web-based messages, and the like. The browser application can be configured to receive and display graphics, text, multimedia, and the like, employing virtually any web-based language, including a wireless application protocol messages (WAP), and the like. In one embodiment, the browser application is enabled to employ Handheld Device Markup Language (HDML), Wireless Markup Language (WML), WMLScript, JavaScript, Standard Generalized Markup Language (SGML), HyperText Markup Language (HTML), eXtensible Markup Language (XML), and the like, to display and send a message. In one embodiment, a user of client computer or computer 52(a) ... (n) can employ the browser application to perform various activities over a network (online). However, another application can also be used to perform various online activities.

Computers 52(a) ... (n), web server 55 and server 56 can also include at least one other client application that is configured to receive and/or send content between another computer. The client application can include a capability to send and/or receive content, or the like. The client application can further provide information that identifies itself, including a type, capability, name, and the like. In one embodiment, computers 52(a) ... (n), web server 55 and server 56 can uniquely identify themselves through any of a variety of mechanisms, including an Internet Protocol (IP) address, a phone number, Mobile Identification Number (MIN), an electronic serial number (ESN), or other device identifier. Such information can be provided in a network packet, or the like, sent between other computers.

Network 54 is configured to couple network computers with other computers and/or computing devices, through a wired or wireless network. Network 54 is enabled to employ any form of computer readable media for communicating information from one electronic device to another. Also, network 54 can include the Internet in addition to local area networks (LANs), wide area networks (WANs), direct connections, such as through a universal serial bus (USB) port, other forms of computer-readable media, or any combination thereof. On an interconnected set of LANs, including those based on differing architectures and protocols, a router acts as a link between LANs, enabling messages to be sent from one to another. In addition, communication links in LANs typically include twisted wire pair or coaxial cable, while communication links between networks may utilize analog telephone lines, full or fractional dedicated digital lines including T1 , T2, T3, and T4, and/or other carrier mechanisms including, for example, E-carriers, Integrated Services Digital Networks (ISDNs), Digital Subscriber Lines (DSLs), wireless links including satellite links, or other communications links known to those skilled in the art. Moreover, communication links can further employ any of a variety of digital signaling technologies. Furthermore, remote computers and other related electronic devices could be remotely connected to either LANs or WANs via a modem and temporary telephone link. In one embodiment, network 54 can be configured to transport information of an Internet Protocol (IP). In essence, network 54 includes any communication method by which information can travel between computing devices.

Additionally, communication media typically embodies computer readable instructions, data structures, program modules, or other transport mechanism and includes any information delivery media. By way of example, communication media includes wired media such as twisted pair, coaxial cable, fiber optics, wave guides, and other wired media and wireless media such as acoustic, RF, infrared, and other wireless media.

The computers 52(a)... (n), web server 55 and server 56 can be operatively connected to a network, via bi-directional communication channel, or interconnector, 58, which can be, for example, a serial bus such as IEEE 1394, or other wire or wireless transmission media. Examples of wireless transmission media include transmission between a modem (not shown), such as a cellular modem, utilizing a wireless communication protocol, or wireless service e provider or a device utilizing a wireless application protocol and a wireless transceiver (not shown). Interconnector 58 can be used to feed, or to provide data.

A wireless network can include any of a variety of wireless sub-networks that can further overlay stand-alone ad-hoc networks, and the like, to provide an infrastructure-oriented connection for computers 52(a)...(n), web server 55 and server 56. Such sub-networks can include mesh networks, Wireless LAN (WLAN) networks, cellular networks, and the like. In one embodiment, system 1 includes more than one wireless network. A wireless network can further include an autonomous system of terminals, gateways, routers, and the like connected by wireless radio links, and the like. These connectors can be configured to move freely and randomly and organize themselves arbitrarily, such that the topology of wireless network may change rapidly. A wireless network can further employ a plurality of access technologies including 2nd (2G), 3rd (3G), 4th (4G) 5th (5G) generation radio access for cellular systems, WLAN, Wireless Router (WR) mesh, and the like. Access technologies, such as 2G, 3G, 4G, 5G, and future access networks can enable wide area coverage for mobile devices, such as client computers, with various degrees of mobility. In one non-limiting example, wireless network enables a radio connection through a radio network access such as Global System for Mobil communication (GSM), General Packet Radio Services (GPRS), Enhanced Data GSM Environment (EDGE), code division multiple access (CDMA), time division multiple access (TDMA), Wideband Code Division Multiple Access (WCDMA), High Speed Downlink Packet Access (HSDPA), Long Term Evolution (LTE), and the like. In essence, a wireless network can include virtually any wireless communication mechanism by which information may travel between a computer and another computer, network, and the like.

A computer for the system can be adapted to access data, transmit data to, and receive data from, other computers 52(a) ... (n), web server 55 and server 56 via the network or network 54. The computers 52(a)...(n), web server 55 and server 56 typically utilize a network service provider, such as an Internet Service Provider (ISP) or Application Service Provider (ASP) (ISP and ASP are not shown) to access resources of network 54.

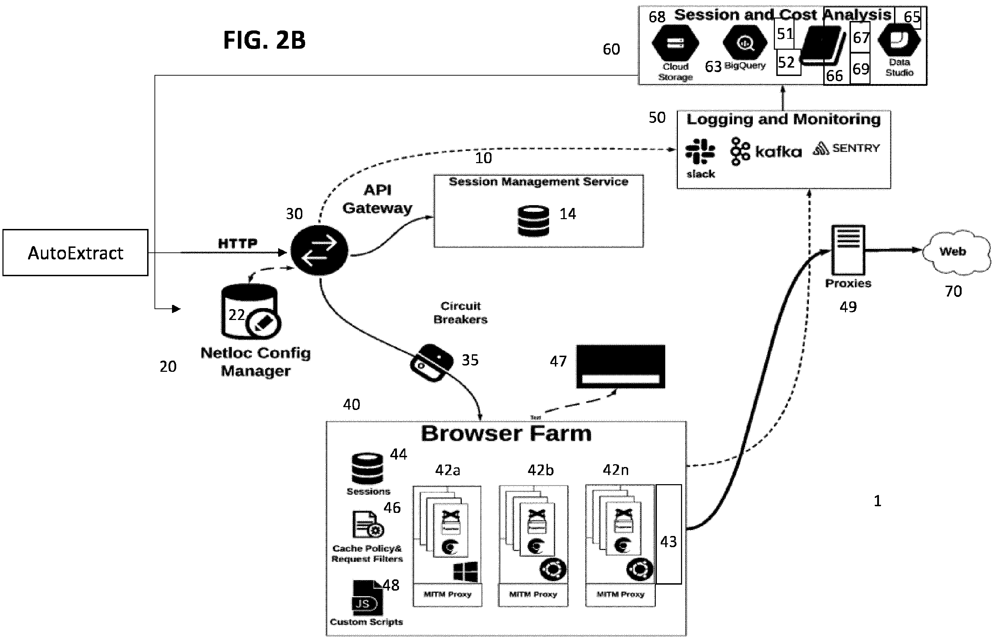

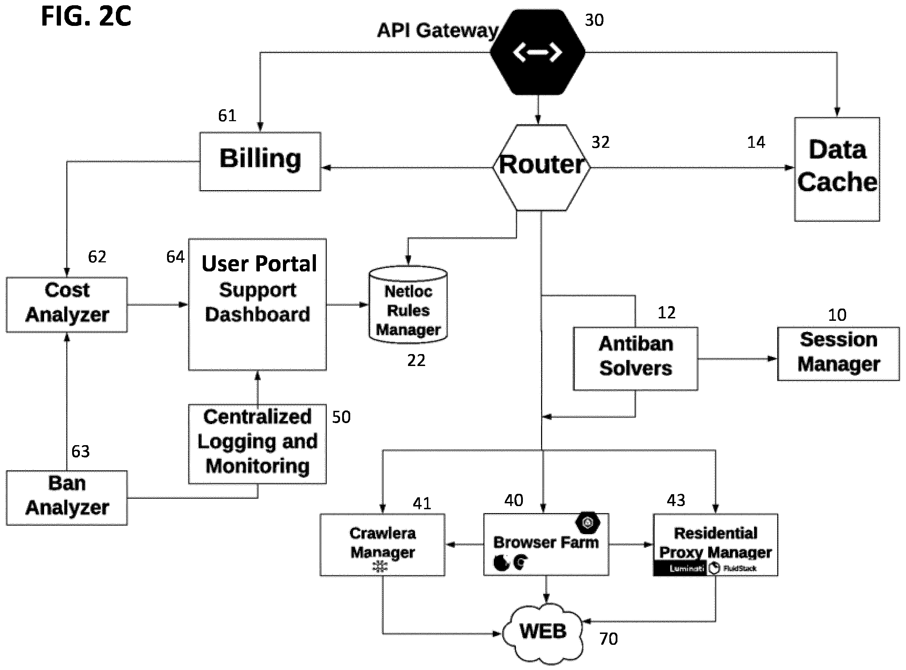

FIG. 2B shows an embodiment of a system for accessing and scraping web pages. FIG. 2C shows a logical architecture and system flow for processing a webpage request in accord with an implementation.

In an implementation, FIGS. 2B-2C shows a scraping module application programming interface (API) gateway 30 between a session management server 10, a configuration manager 20 and a browser farm 40.

The configuration manager 20 comprises a rules manager database 22 and is configured to identify and store a website configuration a website page request based on one or more webpage configuration parameters. The configuration manager is configured to generate an enriched semantic webpage of a target website for a website request. The enriched semantic webpage of the website comprises: a website structure, a page type, a page visibility to search engines, a page domain (DOM) structure, and webpage traffic statistics. The configuration parameters for the enriched semantic webpage of the target website can comprise a set of ban rules, a session strategy, a set of selectors, a Javascript manager, a Proxy Type, a Proxy Region, Website Specific Scripts, Retry Logic, Domain Structure, Page Structure, Page resources, and Website Traffic Statistics.

A browser farm 40 comprises: a plurality of proxy servers 42a...42n. each of which are configured as web browser clients (browser stacks). The proxy servers 42a...42n are configured execute webpage session requests to target websites 71 from a session management server 10 in a manner that that simulates manual user requests. A browser client is configured with a specific browser. The browser farm can be configured to choose the optimal proxy server 42a to launch the web browser client that is best for a given target website 71. For example, the website parameters for a target website can instruct the browser farm 40 to select a proxy server 42a that employs a Chrome (TM) web browser, a Firefox (TM) web browser, or a custom browser, depending on the parameters identified by the configuration manager 20 for that website 71. Browsers can be configured or modified to include specialized scraping tools, for example, a custom browser to prevent headless mode detection, a browser configured with patching tools, a headful browser configured for a conventional web browser Operating System environment, and/or a mobile device emulator configured to emulate a browser launched from a mobile device (e.g, smartphone or tablet).

The browser farm 40 also comprises a session database 44 comprising session caches, including intelligent cookie and cache management to prevent poisoning and client detection, a policy database 46 comprising a plurality of cache policies and request filters, a custom script program 48 comprising auto-executing scripts, including a script configured to mask a headless browser, and/or a script to emulate real browser fingerprints. For example, in an embodiment, the browser farm 40 can use containerised autoscaling setup to orchestrate spawning of browsers and devices to meet downstream requirements. An exemplary application for containerised autoscaling can be, for example, a Kubernetes-based containerised autoscaling. The browser farm can be configured to manage the entire browser/device lifecycle. For example, the browser farm can comprise a proxy manager 41 is configured to execute cache policies and request filters or a custom script program. The browser farm can include a program or algorithm for, when executed by the processor, performing some or all of these actions: rendering a web page in a web browser, downloading of the related resources like images or CSS files, executing JavaScript and other instructions, obtaining screenshots of web pages and its parts, measuring on-screen coordinates, colors, visibility, and other properties of HTML elements and other parts of web pages, obtaining final HTML representation of the web pages, and automatically executing commands to control the browser.

In an embodiment, the browser proxy farm is configured to inject stealth scripts 48 into browser context before a page load. In an embodiment, page and browser contexts can be isolated from the management process by the session management server 10. The browser stack also includes session database 44 logic to solve antibot challenges 47 (e.g. CAPTCHAs) and leverages the browser stealth to solve Javascript challenges. The browser farm 40 also comprises a custom solver tool comprising a session manager antiban solver configured to deploy a bespoke webpage solution for a webpage requirement, including a unique or unusual webpage requirement. The browser stack session database 14 is also configured to use similar user visits to the website to avoid recurrent Javascript challenges or CAPTCHAs and simulate user-like website access patterns.

The browser farm also comprises a proxy manager 43 configured to interface with external proxy servers 49. The proxy manager comprises a datacenter and residential proxies based on downstream requirements such as region, session id, target netloc, and other requirements. The proxy manager 43 scheduler also takes into account number of connections to the same IP address, last used time as well as usage history. The proxy manager 43 can be configured to select a proxy server type and a region for a proxy server 49, which are routed via external IP addresses, to fetch a geofenced targeted content from the webpage.

The browser farm 40 also comprises a circuit breaker 35 and rate limiter for stopping or slowing a web traffic flow from the API gateway. The circuit breaker 35 can be configured for global webpage fetching rate limits to prevent degradation and service performance of a target website 71 and to provide federated access to the underlying content of the target website 71.

In an embodiment, the session service 44, the proxy scheduler service, policy database 46, and the custom script program 48 are integrated directly in the API gateway 30 (not shown). Instead of a browser farm, a stateless browser stack is employed for downloading websites. An exemplary stateless browser can include, for example, a serverless container run on a clustered node cloud integration. For example, the stateless browser can be a serverless deployment such as Knative serving and eventing platform executed on Kubernetes API.

A session management server 10 is operatively connected to the browser farm via the API gateway comprises a session database 14 comprising session state data to persist a website session for the target website 71 based on the configuration parameters for the enriched semantic webpage of the target website from configuration manager 20. The session state data comprises a header, a browser profile, and/or a browser user directory for the target website 71. The session management server 10 is configured to emulate an organic crawling behavior and simulate manual web browsing behavior and manual user requests based on the configuration parameters from the configuration manager 20. Configuration parameters to persist a session can comprise, for example, a regional split of traffic, a bounce rate, average pages visited, a duration, and/ or a page SEO visibility. For example, a session can either consist of a combination of header, browser profile and proxy or the browser user directory. The session management server 10 can be configured to take a combination of approaches to store session state, such as persisting session information in a database, persisting connections with a browser that includes the session state or storing browser user directory on a network file storage to reuse the session based on the use case and target website.

In an embodiment, the system 1 comprises a logging server 53 configured to track and log target webpage 71 request responses from the browser farm 40. The logging server can provide session data to a web data store 52. Session tracking data can include for example, files that comprise, for example, session response bodies, timings, resource types, cookies, and session metadata, such as HTTP archive (HAR) files. Logged data can also by annotated manually to annotation data stores 54 for, inter alia, machine intelligence training by a session analysis server 60 as described below.

In an embodiment, the system comprises a session analysis server 60 comprising a response analyzer 63 configured to process the logged responses to a webpage request, the response analyzer 63 comprising: a machine intelligence engine 66 configured to train on web page response data in a response database 68 to identify patterns and anomalies, and generate one or more configuration profiles for the configuration rules manager 22 based on the analysis.

Machine intelligence engine 66 can comprise Artificial Intelligence (Al) machine learning (ML)-based processing and classification. At machine learning classification can be based on any of a number of known machine learning algorithms, for example, neural nets (including fully connected, convolutional and recurrent neural nets, or neural nets created as a combination of these blocks), decision trees, conditional random fields (CRFs), propositional rule learner, logistic regression, and the like). In at least one embodiment, ML-based processing engine 66 is implemented as a multi-modal neural network. At machine intelligence engine 66 can be separated into inference and training (classifier building) components, which can be employed at different points of time.

The machine intelligence engine 66 can include a rule-based classification and extraction module 65. If present, rule-based classification and extraction module 65 can process results of the proxy manager 41, cache policy and requests 46, or process results of the AI processing engine 66, or combine results, or do all of these tasks, or any combination of these tasks.

The session analysis server 60 can comprise memory 68 including a number of data stores that can be hosted in the same computer or hosted in a distributed network architecture. The machine intelligence engine 66 comprises a web page data store 52 for a set of logged, tracked and processed web pages, which can contain images, HTML, measurement results and other metadata about web pages. The session analysis server 60 can further include an annotation data store 51 for human-provided annotations, including examples of the desired classification and extraction results for a set of input web pages. The session analysis server 60 can further include parameters and configuration classifier store 69 for storing solution classifiers, as well as a classifier model building (training) program 67 for, when executed a processor, training and evaluating ML algorithms for target web page 71 solution, profile classification, and extraction, and storing the resulting parameters and configurations in classifier store 69, using either a training database from the web page data store 52 of tracked and logged web page data, or the annotation data store 51 of human-provided annotations, or both as a training data. The classifier model building program 67 can be employed to build classifiers operable to classify profiles and solutions for other web pages and other web sites, based on learning from the previously classified web pages.

The session analysis server 60 response analyzer 63 can be configured to analyze sessions to provide machine intelligence to automatically detects bans, CAPTCHAs and other anomalies. The response analyzer can be configured to process HTTP archive (HAR) files which contains, for example, session response bodies, timings, resource types, cookies, and session metadata through a machine learning pipeline to identify patterns and anomalies, as well as antiban solver 12 solutions, which can then be provided to the to the configuration rules manager database 22 and/or the browse farm policy database 46 and scripts database 48. In an embodiment, the session analysis server analyses the web page data to identify the configuration profile parameters as disclosed herein and provides these to the to the configuration rules manager database 22 for the creation of an enriched semantic webpage.

In an implementation, a scraping module application programming interface (API) gateway 30 is configured to process a webpage request between the session management server 10, the configuration manager 20 and the browser farm 40, the API gateway 30.

As shown in FIG. 2C, the scraping module API gateway 30 comprises a router 32 configured to route web page requests to the plurality of the proxy servers 42a...42n of the browser farm 40 based on one or more website parameters from the configuration manager 20. The API Gateway 30 comprises a tracer configured to trace the webpage through one or more components. An exemplary tracer can be, for example, OpenZipKin. The API Gateway 30 can be configured to be exposed to track user intent such as actions to perform on the page, HTTP methods pertaining to the request, customer scripts etc.

As described herein, embodiments of the system 1, processes and algorithms can be configured to run on a web services platform host such as Amazon Web Services (AWS), Microsoft Azure, or Google Cloud Platform. A cloud computing architecture is configured for convenient, on-demand network access to a shared pool of configurable computing resources (e.g. networks, network bandwidth, servers, processing, memory, storage, applications, virtual machines, and services). A cloud computer platform can be configured to allow a platform provider to unilaterally provision computing capabilities, such as server time and network storage, as needed automatically without requiring human interaction with the service's provider. Further, cloud computing is available over a network and accessed through standard mechanisms that promote use by heterogeneous thin or thick client platforms (e.g., mobile phones, laptops, and PDAs). In a cloud computing architecture, a platform's computing resources can be pooled to serve multiple consumers, partners or other third party users using a multi-tenant model, with different physical and virtual resources dynamically assigned and reassigned according to demand. A cloud computing architecture is also configured such that platform resources can be rapidly and elastically provisioned, in some cases automatically, to quickly scale out and rapidly released to quickly scale in.

Cloud computing systems can be configured with systems that automatically control and optimize resource use by leveraging a metering capability at some level of abstraction appropriate to the type of service (e.g., storage, processing, bandwidth, and active user accounts). Resource usage can be monitored, controlled, and reported. As described herein, in embodiments, the system 1 is advantageously configured by the platform provider with innovative algorithms and database structures for antibot challenge responses and solutions.

A Software as a Service (SaaS) platform is configured to allow a platform provider to use the provider's applications running on a cloud infrastructure. The applications are accessible from various client devices through a thin client interface such as a web browser (e.g., web-based e-mail). The consumer typically does not manage or control the underlying cloud infrastructure including network, servers, operating systems, storage, or even individual application capabilities, with the possible exception of limited user-specific application configuration settings.

A cloud computing environment is service oriented with a focus on statelessness, low coupling, modularity, and semantic interoperability. At the heart of cloud computing is an infrastructure comprising a network of interconnected nodes.

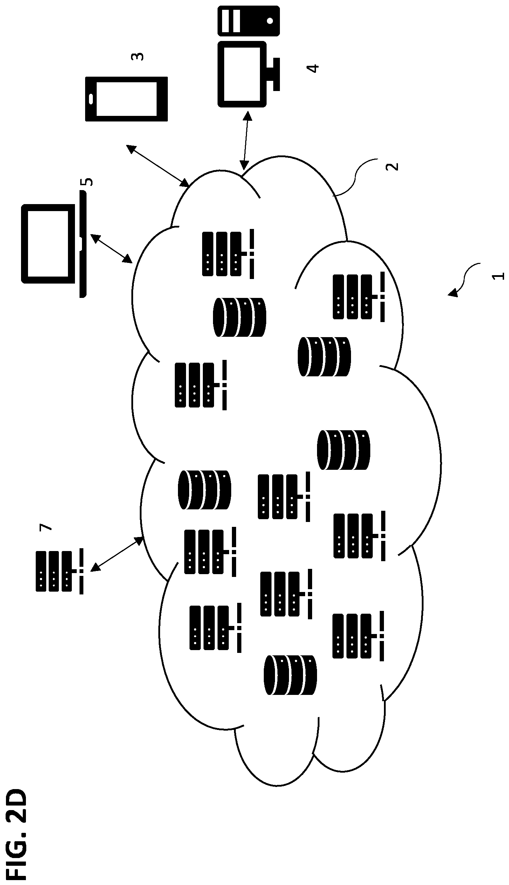

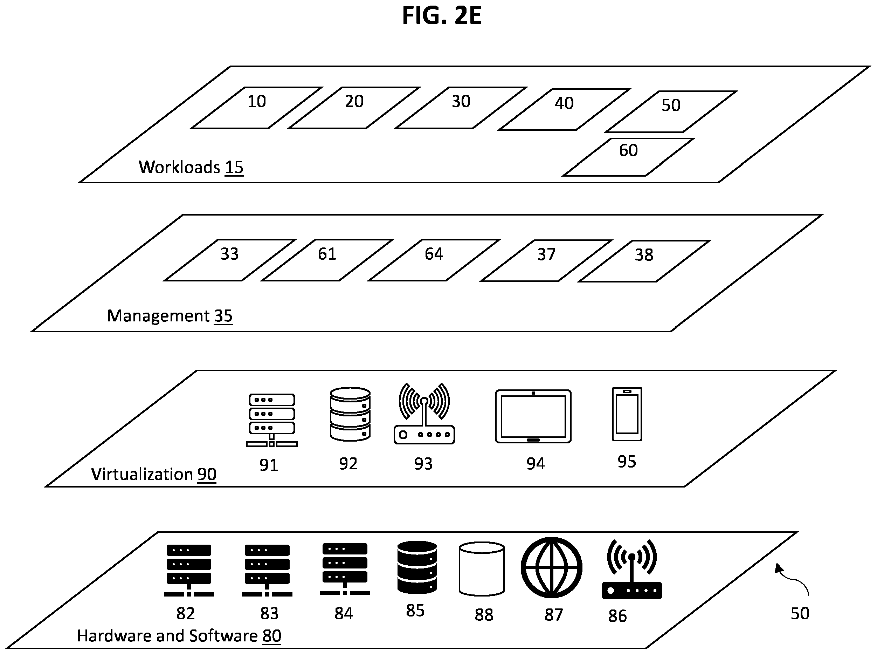

Referring now to FIG. 2D an illustrative cloud computing environment for the system 1 is depicted. As shown, cloud computing environment 1 comprises one or more cloud computing nodes 7 with which local computing devices used by cloud consumers, such as, for example, personal digital assistant (PDA) or cellular telephone 3, desktop computer 4, and laptop computer 5 data source 14, and network computer 6. Nodes 30 can communicate with one another. They can be grouped (not shown) physically or virtually, in one or more networks, such as private, community, public, or hybrid clouds as described herein, or a combination thereof. The cloud computing environment 1 is configured to offer infrastructure, platforms and/or software as services for which a cloud consumer does not need to maintain resources on a local computing device. It is understood that the types of computing devices shown in FIG. 2E are intended to be illustrative only and that computing nodes 7 and cloud computing environment 1 can communicate with any type of computerized device over any type of network and/or network addressable connection (e.g., using a web browser).

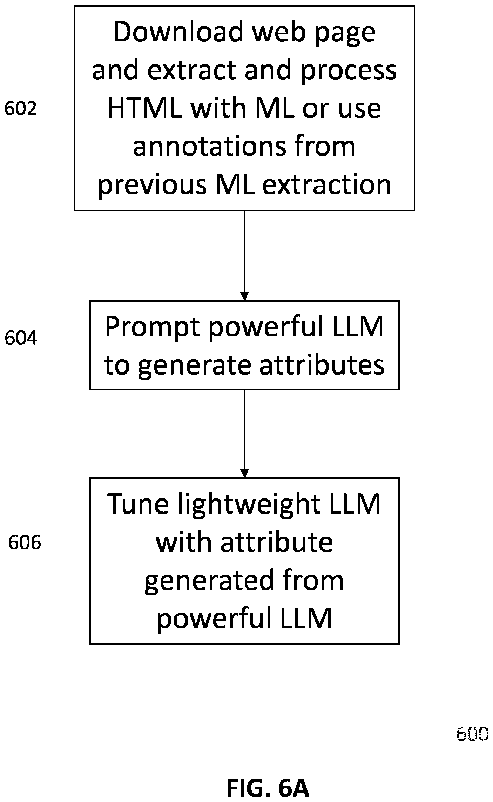

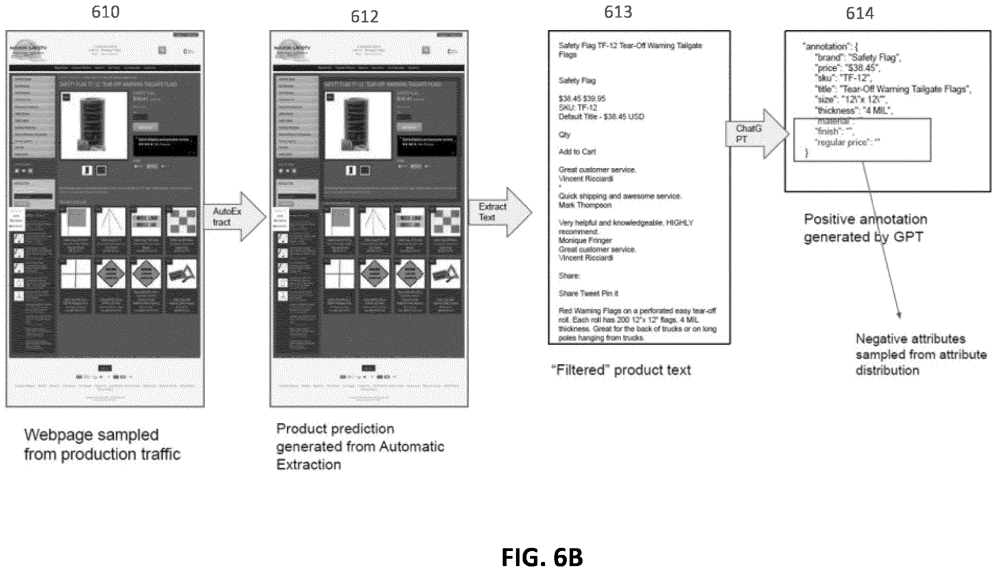

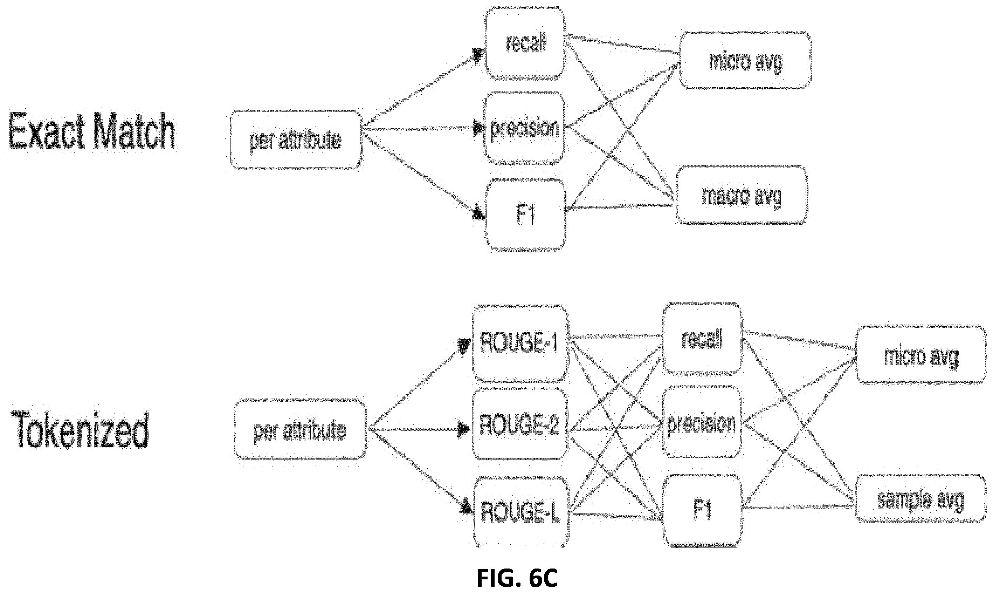

Referring now to FIG. 2E, a set of functional layers provided by an example cloud computing environment 50 is shown. The components, layers, and functions shown in FIG. 6 are illustrative, and embodiments as described herein are not limited thereto. As depicted, the following layers and corresponding functions are provided:

A hardware and software layer 80 can comprise hardware and software components. Examples of hardware components include, for example: mainframes 82; servers 83; servers 84; blade servers 84; storage devices 85; and networks and networking components 86. In some embodiments, software components include network application server software 87 and database software 88.

Virtualization layer 90 provides an abstraction layer from which the following examples of virtual entities can be provided: virtual servers 91; virtual storage 92; virtual networks 93, including virtual private networks; virtual applications and operating systems 94; and virtual clients 95.

In one example, management layer 35 can provide the functions described herein. Resource provisioning 33 provides dynamic procurement of computing resources and other resources that are utilized to perform tasks within the cloud computing environment. Metering and Pricing 62 provide cost tracking as resources are utilized within the cloud computing environment, and billing or invoicing for consumption of these resources. In one example, these resources can comprise application software licenses. Security provides identity verification for cloud consumers and tasks, as well as protection for data and other resources. User portal 64 provides access to the cloud computing environment for consumers and system administrators. In an implementation, the API Gateway generates cost records that are fed into to a Cassandra based billing systems and used for billing. The gateway also generates stats that are then fed into bigquery and then in turn a ML pipeline which powers a decision support and replacement system. Service level management 37 provides cloud computing resource allocation and management so that required service levels are met. Service Level Agreement (SLA) planning and fulfillment 38 provides pre-arrangement for, and procurement of, cloud computing resources for which a future requirement is anticipated in accordance with an SLA.

Workloads layer 15 provides examples of functionality for which the cloud computing environment can be utilized. Examples of workloads and functions that can be provided from this layer comprise those described herein with respect to scraping module application programming interface (API) gateway 30, a session management server 10, a configuration manager 20, browser farm 40, logging server 53, and session analysis server 60.

Although this disclosure describes embodiments on a cloud computing platform, implementation of embodiments as described herein are not limited to a cloud computing environment.

In at least one of the various embodiments, user interfaces other than user interfaces described herein can be employed without departing from the spirit and/or scope of the claimed subject matter. Such user interfaces can have more or fewer user interface elements which can be arranged in various ways. In some embodiments, user interfaces can be generated using web pages, mobile application the like. In at least one of the various embodiments, computers as described herein can include processes and/or APIs for generating user interfaces, such as the user interfaces as shown herein.

An exemplary system for AI powered scraping is described in U.S. Patent No. 10,984,066, filed as U.S. Pat. App. No. 16/279,504 on February 19, 2019, and issued on April 20, 2021, the entirety of which is incorporated by reference hereby. An exemplary system for scraping is also described in U.S. Pat. App. No. 18/060,213, filed on November 30, 2022, the entirety of which is incorporated by reference hereby.

One of ordinary skill in the art will appreciate that the architecture of the system is a non-limiting example that is illustrative of at least a portion of an embodiment. As such, more or less components can be employed and/or arranged differently without departing from the scope of the innovations described herein. System 1 is sufficient for disclosing at least the innovations claimed herein.

### Generalized Operation

The operation of certain embodiments will now be described with respect to FIGS. 1A to12BD. In at least one of various embodiments, processes or portions of processes as described in conjunction with FIGS. 1A-12B can be implemented by and/or executed on a single or multiple computers, such as computers shown in FIGS. 1A-3A. Embodiments are not limited, and various combinations of network computers, client computers, virtual machines, hardware devices or the like can be utilized. Further, in at least one of the various embodiments, the processes described in conjunction with FIGS. 3A to 6B and FIGS. 7A-12B can be operative in system with logical architectures such as those described in conjunction with FIGS. 1A-3A.

### Custom Templates

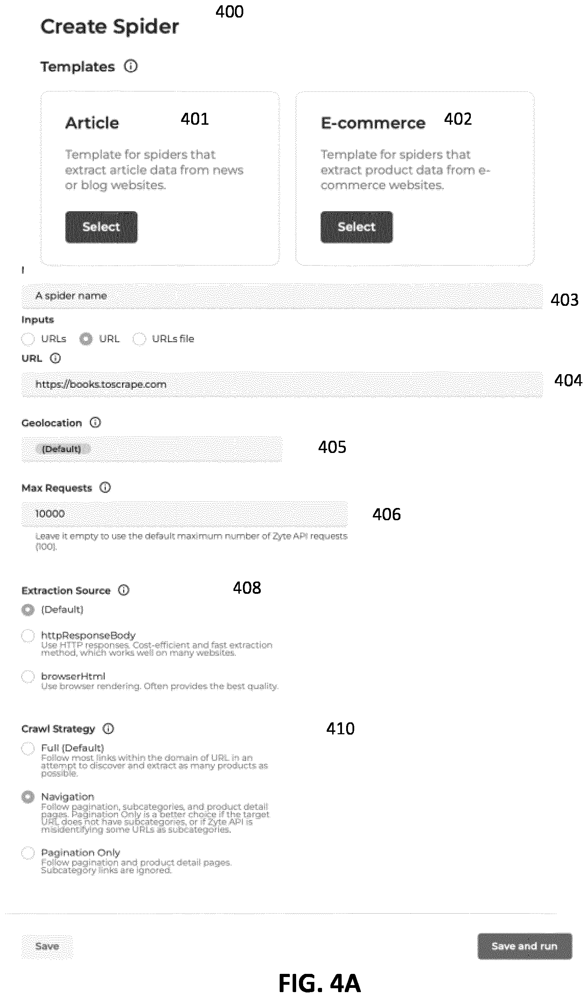

The operation of certain embodiments will now be described with respect to FIGS. 1A to4D. In at least one of the various embodiments, the processes described in conjunction with FIGS. 1A to 4D can be operative in system with logical architectures such as those described in conjunction with FIGS. 1A-3A. FIGS. 4A-4D represent graphical user interfaces for generating and running spider templates with at least one of the various embodiments.

FIG. 3A shows an architectural flow for an auto scraping API 365 and architecture. FIGS. 3B-3E show logical flows for API middleware. In FIG. 3A, at block 351, the API gateway is configured to allow the user to choose a Spider 350a, 350n or make a custom spider 360 and request an API crawl. At block 352, the system generates a Job ID for the spider. At block 353 the system then performs automatic crawling with the selected spider and stores the result in a data store 354 including hub storage and an object storage and/or an external object storage 364. At block 363, the system is also configured to employ autodelivery the storage 354. At block 355 the user can request a stop or status check on the crawl. At block 356, the system also allows the user to check a hubstorage API for results. At block 357, the system then returns requests to user via the API. At block 358, the system can also be configured to employ templates for a recurring crawl.

In an implementation, the system is configured to allow a user to define a spider using a template. A spider template can be defined for a specific scraping function. For example, a template can be defined for scraping ecommerce sites or articles.

In an implementation, an interface for defining a spider template comprises a Create Spider page 400 as a scraping project. FIG. 4A shows an exemplary interface for defining a custom spider. The interface includes one or more template selection objects to allow a user to select a template for the spider creation. For example, as shown in FIG. 4A, the interface includes Article Template spider template selection object 401 and an E-commerce spider template selection object 402. The interface includes a spider name input 403 to allow the user to enter a name for the spider and a URL input 404 to enter or upload one or more initial URLs. For example, for an e-commerce spider, the interface can allow a user to input the home page of an e-commerce website to get all products from the website, or to point to a category to get only products from that category and subcategories thereof. Geolocation 405 can allow a user to customize the country from which the target website will be crawled. In an implementation if unspecified, API can be configured to automatically select a geolocation to use based on the target website. In an implementation, The API can also include a maximum requests per seed selection 406 for each seed page. A Max Requests 406 sets a limit on the number of API requests that the spider can make, which determines the cost of a spider job. For example, to generate a small sample, the limit can be set to 100 requests.

The API can also include a maximum requests per seed selection 406 for each seed page. The API can also include a strategy selection 410 for a full or incremental strategy. In an implementation, the spider can follow pagination, subcategories, and product detail pages by default. The API can be configured with the crawl strategy selection 410 to allow a user to switch a crawl Strategy to "Full" to make the spider follow every link found.

The API can also be configured with an Extraction Source 408 configured to allow a user to select "httpResponseBody" to lower costs and run time on websites that do not require browser rendering, describe in more detail with respect to FIG. 3F. Accordingly, the API can be configured to directly extract products from the provided URLs, without any crawling. To use this strategy, pass individual product URLs to the spider, not the website or product category URLs. Common use cases are product monitoring and batch extraction.

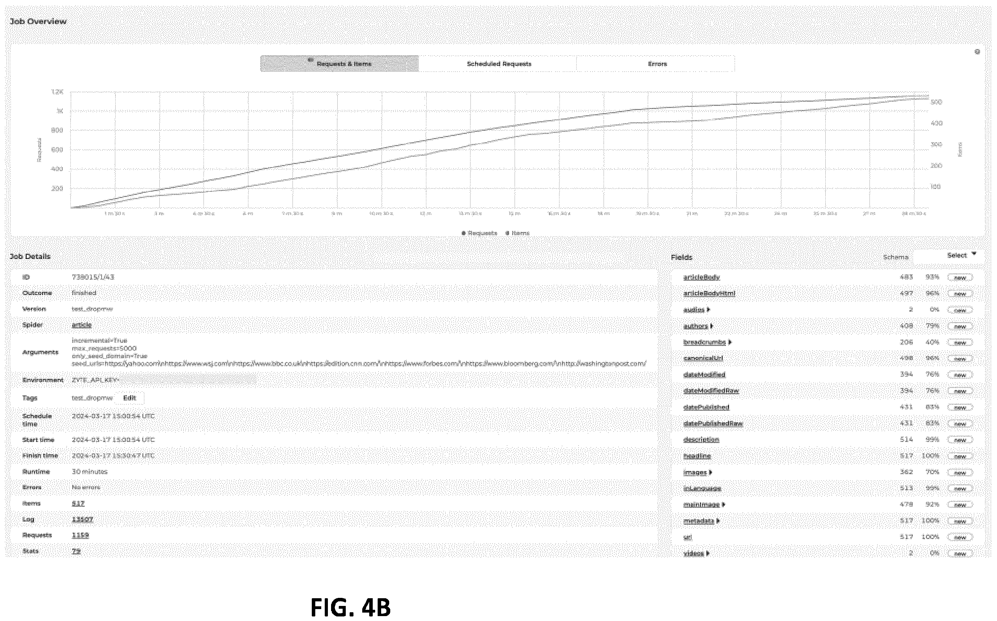

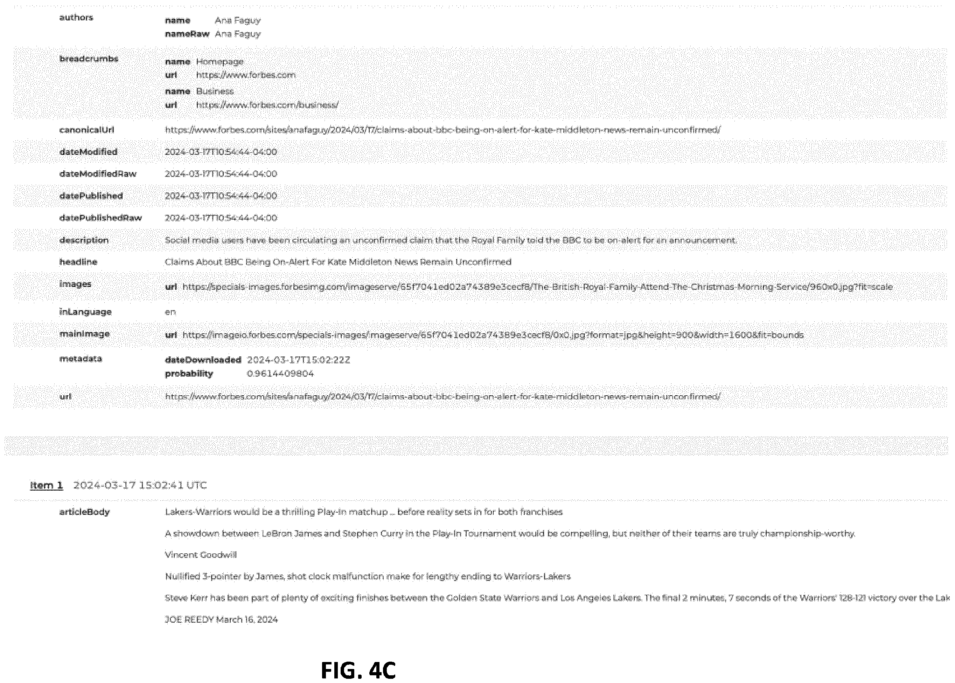

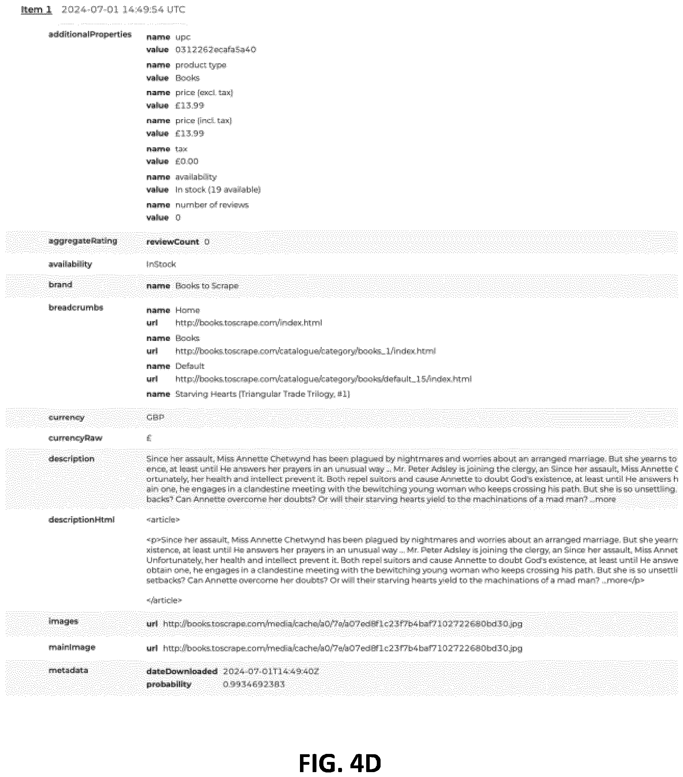

Once configured, a spider can be saved and run to finish creating the spider and start a first spider job. An exemplary interface for job overview for an article spider is shown in FIG. 4B. An exemplary interface showing a web scraping result for a job for an article spider is shown in FIG. 4C. An exemplary interface showing a web scraping result for a job for a custom book spider is shown in FIG. 4D. Once the job finishes, extracted product data (items) can be downloaded. A new job of the spider can be run at any time, and any number additional spiders can be created.

Accordingly, in an implementation, a user can use spider-templates-project as a template to create a new project that includes Al-powered spiders, make customizations on top of them, or even implement new spiders and spider templates from scratch, and deploy the resulting code into a platform or cloud project so the user can use it from, for example, a cloud Ul.

### A spider-templates-project

An exemplary starting template for a scraping project, with built-in integration with a scraping API can be implemented via a repository. The spider template project can be renamed to a module, for example, using a module name as the project ID. Configuration settings can be modified and updated (e.g. update scrapy.cfg and <projectlD>/settings.py (BOT_NAME, SPIDER_MODULES, NEWSPIDER_MODULE and SCRAPY_POET_DISCOVER settings) accordingly. For a local development, an API key can be assigned to an API Key environment variable.

A fresh repository can, can be created. For example, for a Github Git repository:
1. git init
2. git add -A
3. git commit -m "Initial commit"
4. Create a Python virtual environment and install requirements.bct into it:
5. python3 -m venv venv
6.. venv/bin/activate
7. pip install -r requirements.txt

### Usage

For a configured project, additional configuration specific to a user for a Cloud application can include
1. Create a Cloud project on the platform dashboard.
2. Obtain an API Key for Cloud runs, where the API key will be used automatically, or for local runs, set a setting or an environment variable, as described above.
3. Run shub login and enter the API key
4. Deploy the project with shub deploy 000000, replacing 000000 with a Cloud project ID (for example, in a project dashboard URL). Alternatively, put the project ID into the scrapinghub.yml file to be able to run simply shub deploy.

The steps above enable a user to create smart spiders for a cloud project A user also run the spiders locally, for example, using an ecommerce spider as described herein (scrapy crawl ecommerce -a url="https://books.toscrape.com/" -o output.jsonl).

In an implementation, by default all spiders and page objects defined in spider-templates can be made available in as project. A user can also:
- Subclass spiders from spider-templates or write spiders from scratch.
- Define spiders in Python files and modules within <project ID>/spiders/.
- Use web-poet and scrapy-poet to modify the parsing behavior of spiders, in all, some, or specific websites.
- Define page objects in Python files and modules within <project ID>/pages/.

In an implementation, the spider can be configured to extract article data from news or blog websites. The spider efficiently crawls one or more websites to yield articles, making it ideal for aggregating content from various sources. The spider follows a strategy aimed at maximizing the discovery and extraction of articles by following most links within each domain provided in the list of seed URLs.

The spider makes use of article machine learning model from a scraping API as described herein, allowing it to extract article content and discard any non-article links.

Crawling strategies include the following:
Full strategy: The spider follows most links within each domain from the seed URLs to discover and extract as many targeted links (e.g. articles or products) as possible.

In an implementation, if an input URL is a link to a particular category on a website, the spider can be configured to crawl products outside the category. This can be employed if other strategies miss items.

Incremental mode: Implementing item duplicate prevention, this mode ensures that only new articles are processed during subsequent crawls by storing URLs of collected items and checking them against previously stored URLs. In this mode, the spider visits only the articles and feed links (e.g., RSS) found on the main page.

Navigation strategy: In this strategy the spider crawls a section of the website, utilizing an articleNavigation or productNavigation model which provides a list of category links (e.g.: article links or product links on the page and a link to the next page in the list). Instead of following all links, the crawler only follows the links detected by categoryNavigation (e.g. article navigation, product navigation), improving efficiency and ensuring the spider stays within a specified starting category, e.g. when crawling finance news on a large news website, or a specific category of a block.

Input URL options:
- Input URLs can be provided in one of the following formats:
- Plain-Text file URL: A URL pointing to a plain-text file containing a list of URLs to crawl.
- Single initial URL: A single initial URL for the crawl.
- Multiple URLs: A list of URLs for the crawl.

FIGS. 3B-3E shows logical flows for middleware that can be enabled and configured to execute a spider based on a spider template. While the examples shown in FIGS. 3B-3D are shown for an article template, an ecommerce template, or both, middleware can be configured for other categories. As explained herein, templates and code therefor can also be customized as described herein.

At block 301, the API makes a Request. At block 302, a Final Hop Middleware is configured to enforce a limit on the number of hops the spider can scrape from the seed URL of a request. Features include:

*Navigation depth limit:* Enforces a limit on the number of hops the spider can make from the seed URL, controlling the crawling depth to avoid deep subcategory exploration. A middleware implementation for navigation depth limit includes a Final Hop Middleware and a Final Hop For Article Navigation Middleware. At block 302, the Final Hop Middleware sets a 'final_hop' parameter in a request's metadata. If the number of hops from the original seed URL exceeds a FINAL HOP_LIMIT setting. The FINAL_HOP_LIMIT setting defines maximum depth of links that the spider will follow from an original seed URL. For example: with FINAL_HOP_LlMIT=1, the spider will only crawl links directly found on the seed page and also links from feeds (e.g., RSS). With FINAL_HOP_LIMIT=2, the spider will crawl links directly found on the seed page and the links found on those pages, but not any further. As such, this middleware helps control the depth of crawling, preventing the spider from going too deep into subcategories.

Exemplary instructions for implementing a Final Hop Middleware comprises:

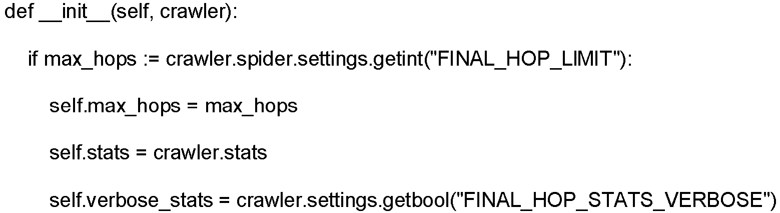

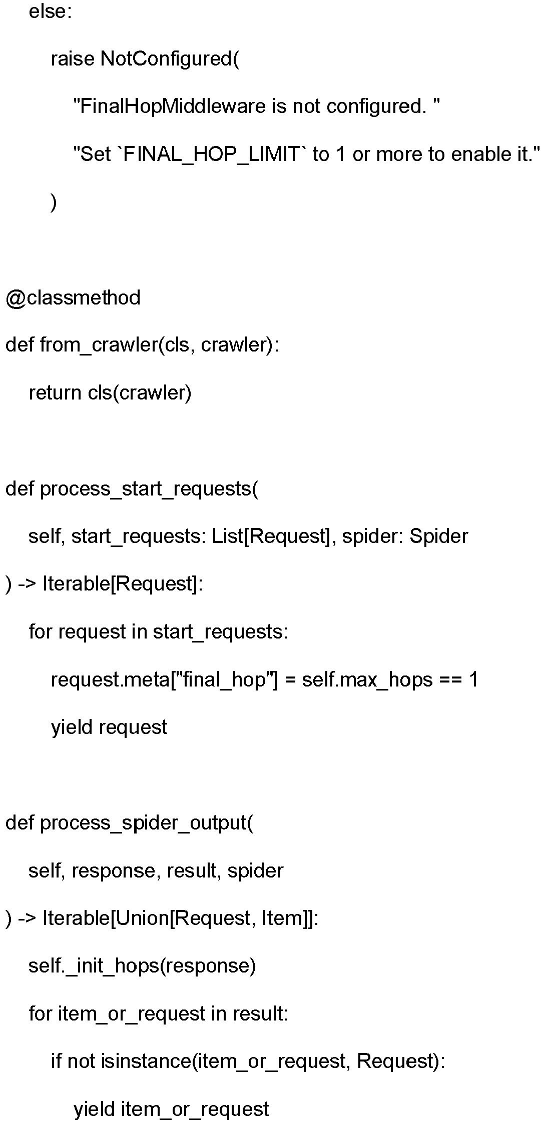

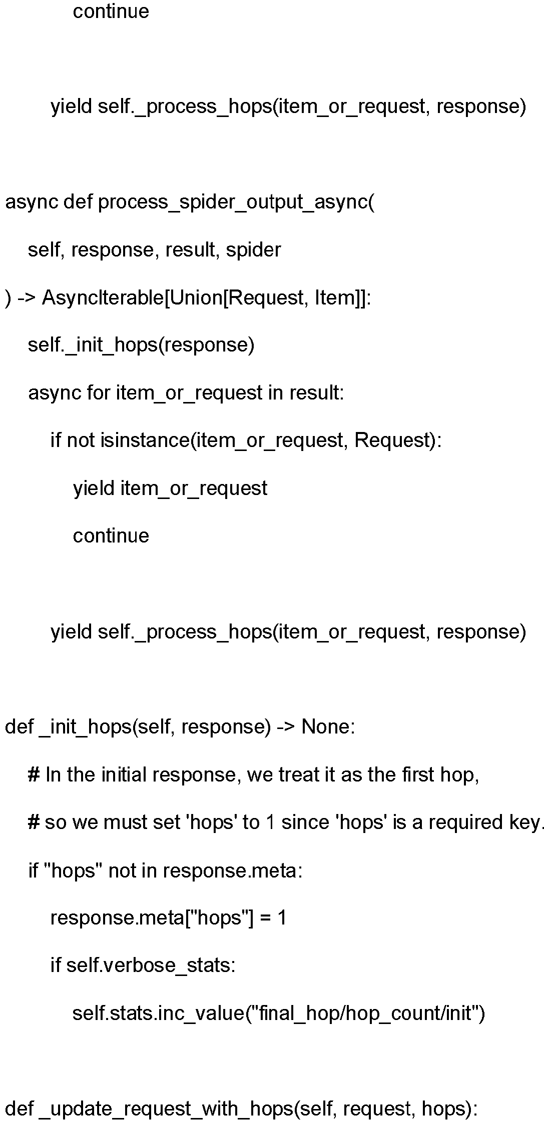

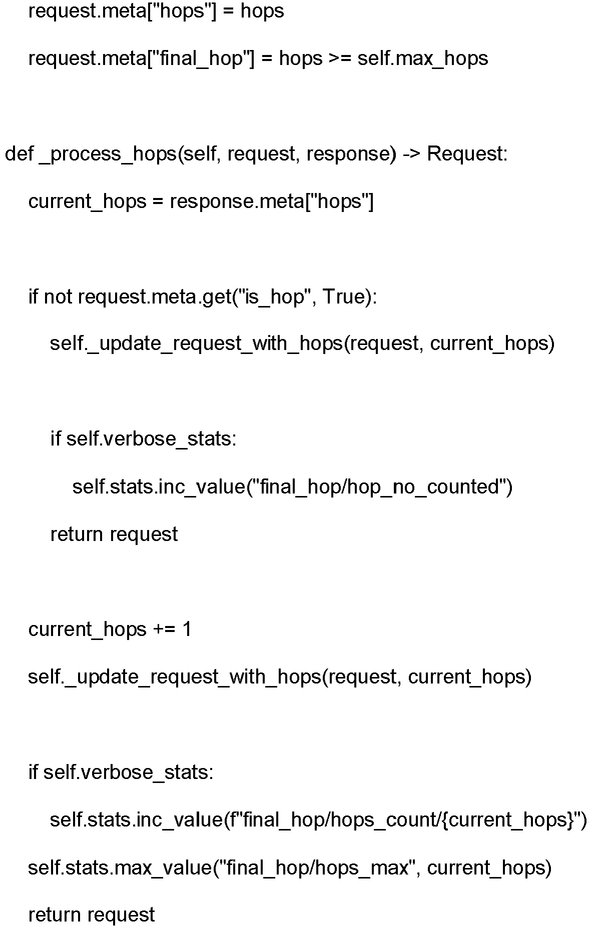

Exemplary instructions for implementing a Final Hop for Article Navigation Middleware comprises:
class FinalHopForArticleNavigationMiddleware:

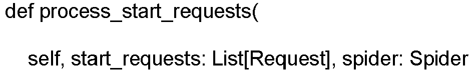

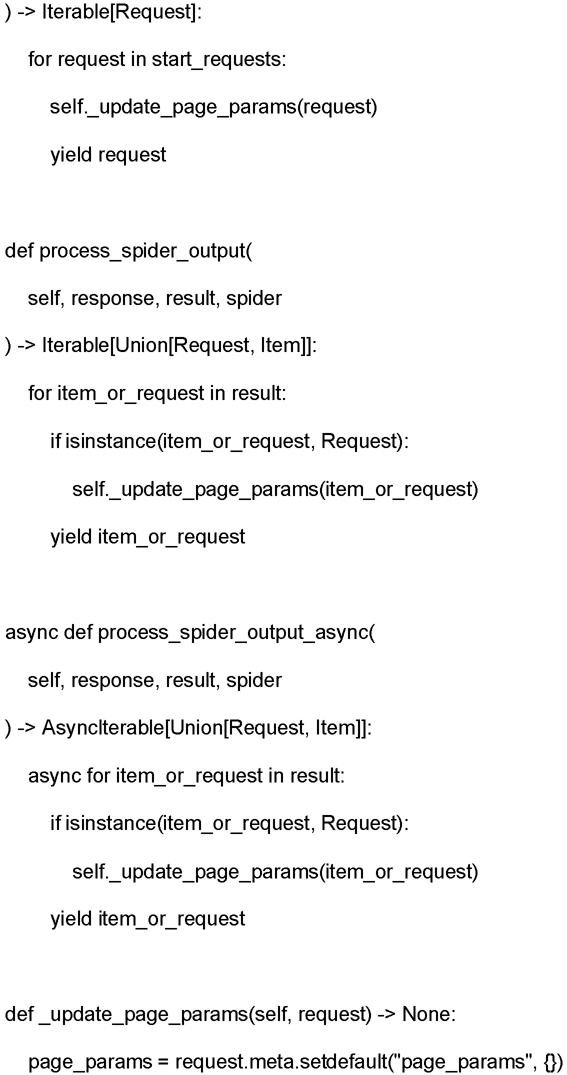

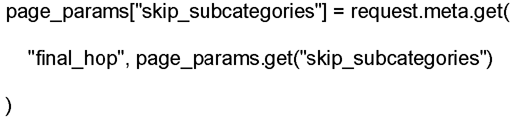

*Seed domain restriction:* Ensures that subsequent requests for each seed do not go outside the original seed's domain, except when redirected. In an implementation, seed domain restriction can be implemented at block 304 with middleware comprising Offsite Requests Per Seed Middleware. This middleware can ensure that subsequent requests for each seed do not go outside the original seed's domain. In an implementation, if the seed URL requests result in redirects, any new domains from those redirects can also be allowed. Exemplary instructions for implementing an Offsite Requests Per Seed Middleware comprises:

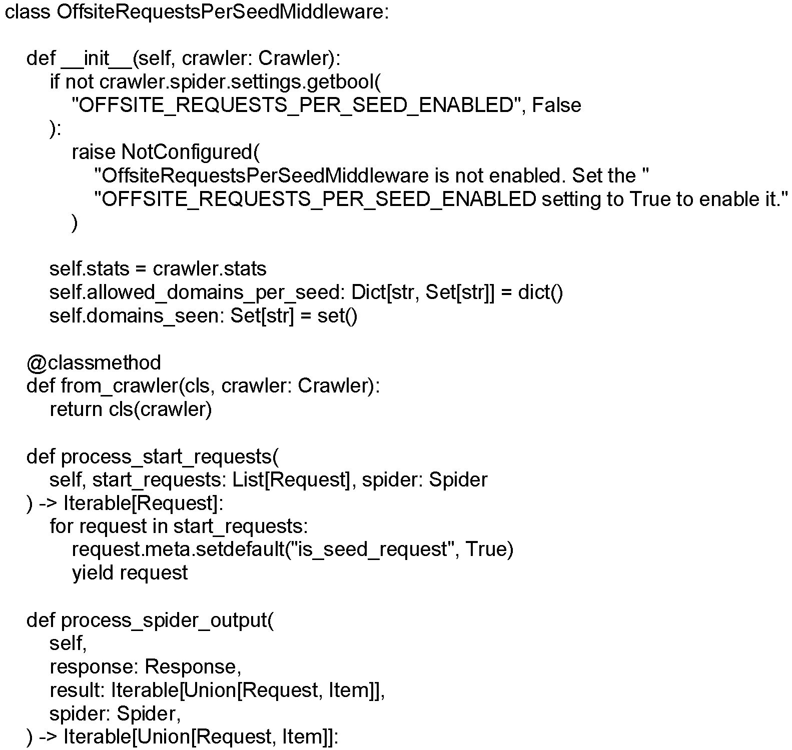

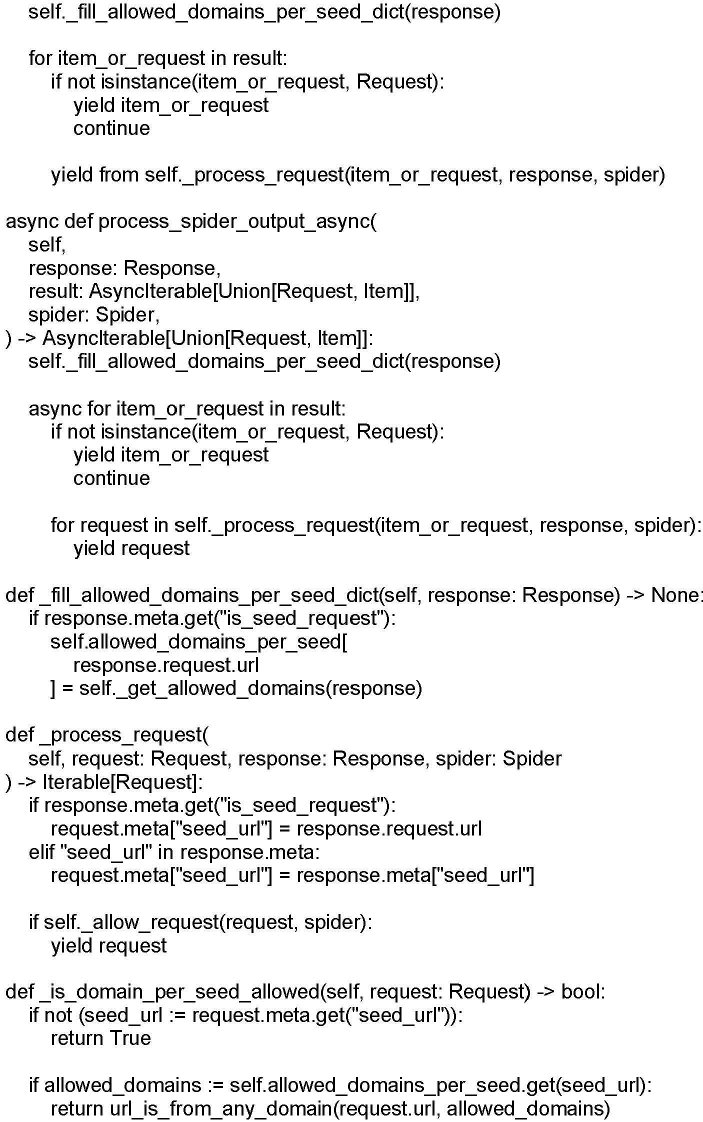

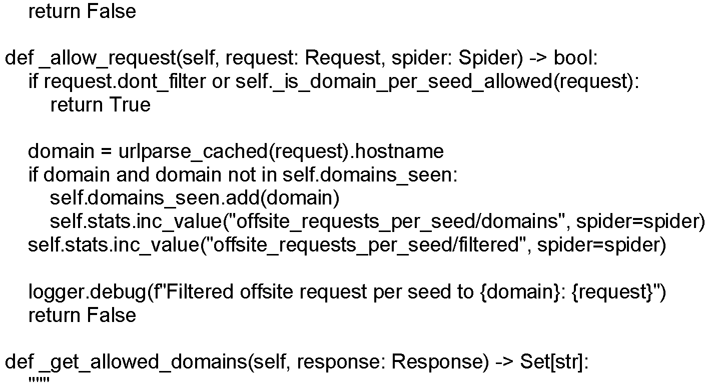

Returns the domains based on the URL attributes of items from a response and the originating request.

In cases where the original request URL was redirected to a new domain, the new domain would be included as well. """

```
def get_item_and_request_urls() -> Generator[str, None, None]:
      """Since the redirected URL and canonicalUrl are only in the Item,
      try to extract it from the first item encountered."""
      for _, maybe_item in response.cb_kwargs.items():
        if isinstance(maybe_item, Article):
          for url_type in ("canonicalUrl", "url"):
             if url := getattr(maybe_item, url_type, None):
               yield url
        else:
           logger.debug(
             f"This type of item: {type(maybe item)} is not allowed"
          )
           continue
      yield response.request.url
    return {get_domain(url) for url in get_item_and_request_urls()}
```

*Feed link filtering:* Filters requests to include only feed links (e.g., RSS) or links for items within feeds. A first option for Feed Link filtering middleware includes the class of Only Feeds Middleware. At block 303, Only Feeds Middleware comprises a Spider middleware to filter requests to only include feed links (e.g., RSS) or links for items within feeds. To enable this middleware, an "EXTRACT_ARTICLES_FROM_FEEDS_ONLY" setting is set to "True". When enabled, the middleware processes the spider output and filters out all requests that are not feed links or item links within feeds.

FIG. 3C shows a logical flow for feed link filtering. At block 311 the system extracts all links 312 from a webpage 310. Then, at block 313, the system splits the extracted links into two groups to filter links. For example, one group 314 of links includes items and feeds, while another group 315 includes subcategories and feeds. The subcategories and feeds group 315 filters out all requests that are not feed links or item links within feeds, for example, such as social networking navigation links. At block 316, the two groups of links are sorted into three further groups, article links 317, navigation links 318, and both article and navigation links 319. At block 320, the system extracts articles from the article link group and navigation link group. At block 321, the system makes a navigation request using the navigation link group. At block 322, the system makes a navigation request using the group for both article and navigation links 319. The navigation requests are then employed for further webpage 310 extraction at block 311.

Exemplary instructions for implementing Only Feeds Middleware comprises:

```
 class OnlyFeedsMiddleware:
 def_init_(self, crawler: Crawler):
    if not crawler.spider.settings.getbool("EXTRACT_ARTICLES_FROM_FEEDS_ONLY"):
      raise NotConfigured(
        "OnlyFeedsMiddleware is not configured."
        "To turn this middleware on, set the EXTRACT_ARTICLES_FROM_FEEDS_ONLY setting to
        True."
      )
  @classmethod
 def from_crawler(cls, crawler: Crawler):
    return cls(crawler)
 def process_spider_output(
    self, response: Response, result: Any, spider: Spider
 ) -> Iterable[Union[Request, Item]]:
    tracker = _NonFeedTracker()
    for item_or_request in result:
      yield from tracker.iter_entry(item_or_request)
    yield from tracker.iter_queued()
  async def process_spider_output_async(
    self, response: Response, result: Any, spider: Spider
 ) -> Asynclterable[Union[Request, Item]]:
    tracker = _NonFeedTracker()
    async for item_or_request in result:
      for request in tracker.iter_entry(item_or_request):
        yield request
    for non_feed_request in tracker.iter_queued():
      yield non_feed_request
```

Another option for feed link filtering includes Article Navigation Parameters Middleware together with Heuristics Article Navigation Page Middleware. Exemplary instructions for implementing Article Navigation Parameters Middleware can include:

```
 class ArticleNavigationParamsMiddleware:
 def process_start_requests(
    self, start_requests: List[Request], spider: Spider
 ) -> Iterable[Request]:
    for request in start_requests:
      self._update_page_params(request)
      yield request
 def process_spider_output(
    self, response, result, spider
 ) -> Iterable[Union[Request, Item]]:
    for item_or_request in result:
      if isinstance(item_or_request, Request):
        self._update_page_params(item_or_request)
      yield item_or_request
  async def process_spider_output_async(
    self, response, result, spider
 ) -> Asynclterable[Union[Request, Item]]:
    async for item_or_request in result:
      if isinstance(item_or_request, Request):
        setf._update_page_params(item_or_request)
      yield item_or_request
 def _update_page_params(self, request) -> None:
    page_params = request.meta.setdefault("page_params", {})
    page_params["only_feeds"] = request.meta.get(
      "only_feeds", page_params.get("only_feeds")
    )
```

FIG. 3D shows an exemplary flow for Heuristics Article Navigation for the feed link filtering. At block 320, when an article is extracted, at block 322 a feed item 321 is tested against probability threshold. At block 323, if the feed item is below the threshold, the middleware drops the item. If the feed item 321 is above the threshold, at block 324 the middleware gets/creates the item requested. Exemplary instructions for implementing Heuristics Article Navigation Page Middleware can include:

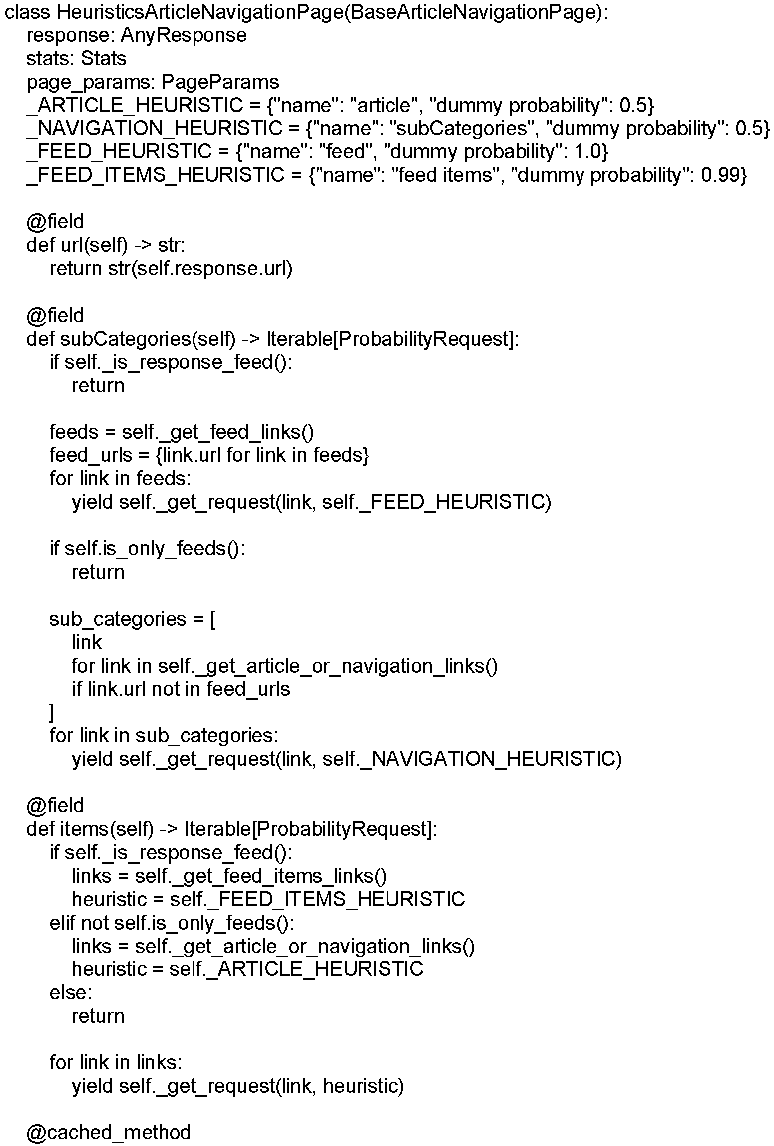

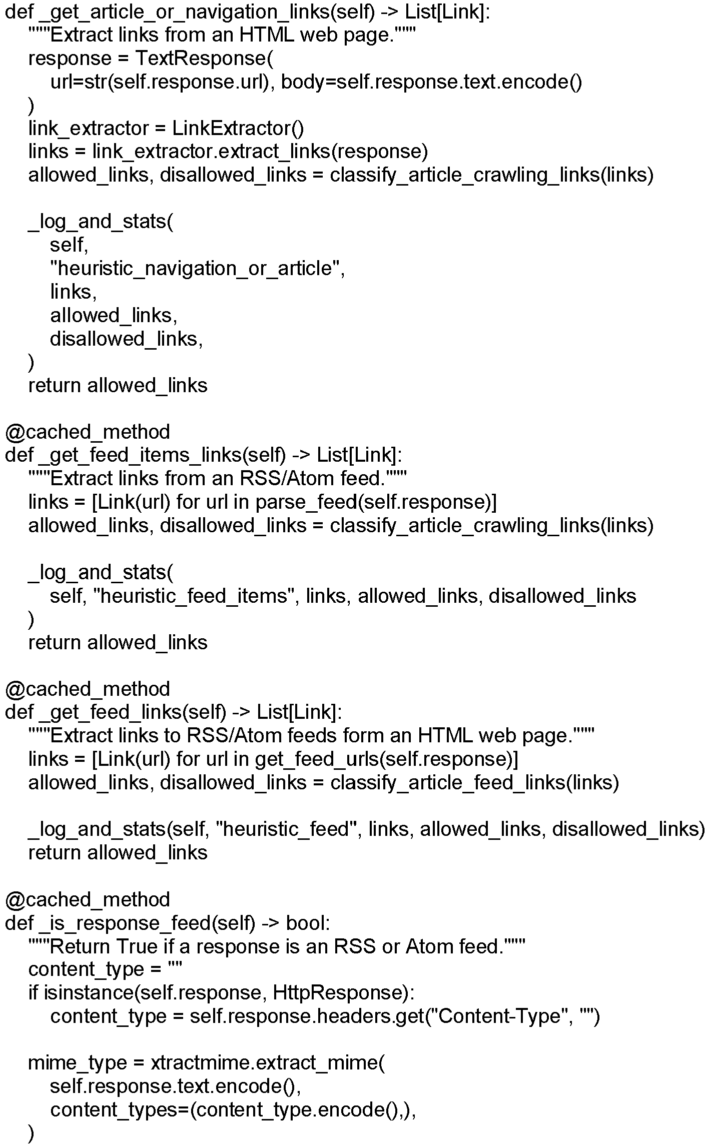

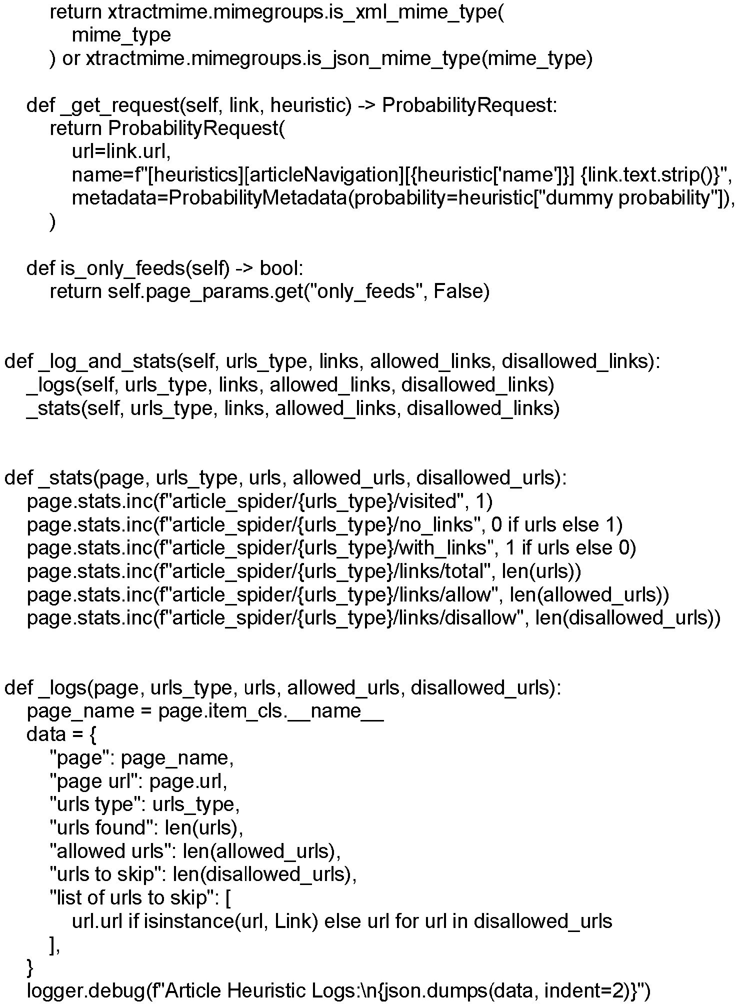

*Seed request limitation:* Limits the number of requests each seed request can subsequently make, helping to control the crawl scope. At block 306, a Maximum Requests Per Seed Spider Middleware can be implemented as shown below. To enable this middleware, a "MAX_REQUESTS_PER_SEED'' setting can be set to the desired positive value. A "0" disables this middleware. By default, all start requests can be considered seed requests, and all other requests are not. Exemplary instructions for implementing Maximum Requests Per Seed Spider Middleware can include:
class MaxRequestsPerSeedSpiderMiddleware:

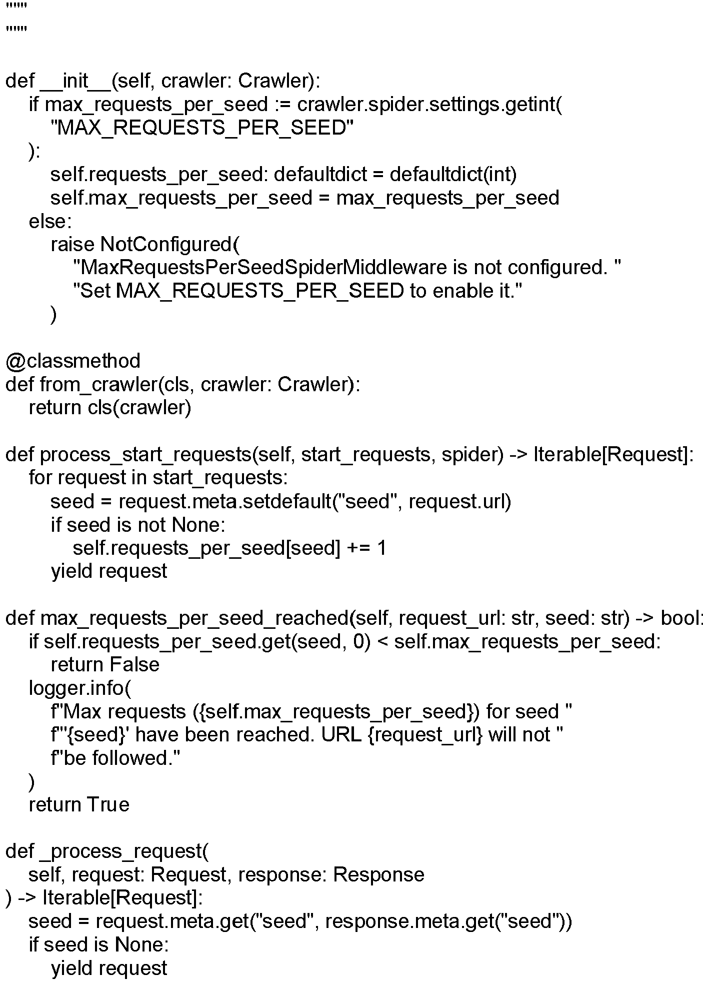

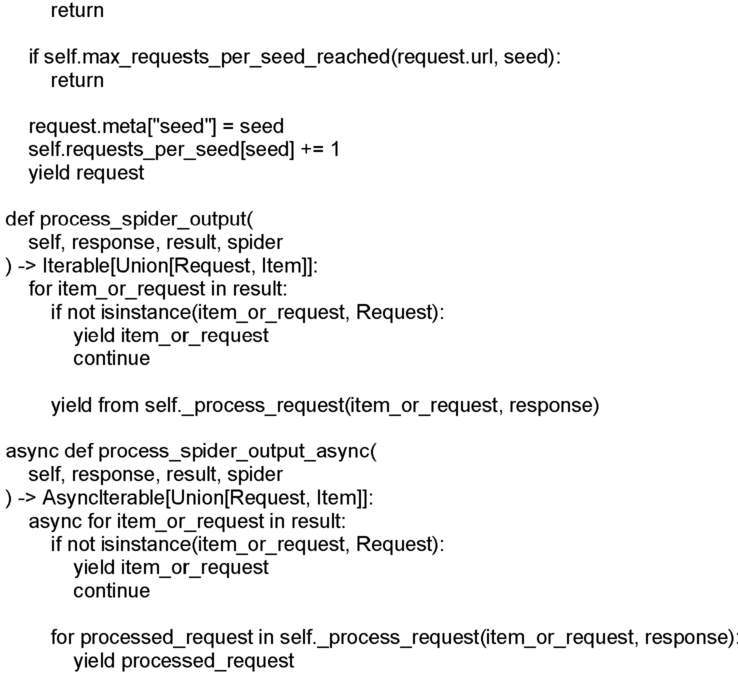

*Item duplicate prevention:* At block 305, Incremental Crawl Middleware prevents duplicate item extraction by storing URLs of collected items and checking them in subsequent crawls, ensuring each item is processed only once, improving efficiency. The middleware can be employed to skip items seen in previous crawls. The middleware can be configured to keep a record of seen URLs in a reference collection (e.g.: ref:'Zyte Scrapy Cloud collection <api-collections>') and skips items, responses and requests with matching URLs. In an implementation, the interface can be configured to allow a user to enable the middleware by, for example, setting the an "INCREMENTAL CRAWL ENABLED" setting to "True". In another implementation, an article spider template <article>', the interface can be configured to allow a user to set a command line parameter for an incremental crawl to "True" (e.g.: :data:'~zyte_spider_templates.spiders.article.ArticleSpiderParams.incremental' or '~zyte_spider_templates.spiders.ecommerce.EcommerceSpiderParams.incremental' is set to "True").

In an implementation, a default collection named after the spider (:attr:'Spider.name <scrapy.Spider.name>') can be employed, meaning that the middleware skips matching URLs from previous runs of the same spider during which this middleware can also be enabled.

In an implementation, an incremental crawl collection setting (setting:'INCREMENTAL_CRAWL_COLLECTION') can be set to set a different collection name. Using a different collection name can be advantageous, for example, if a user is using a number of virtual spiders based on reference templates (e.g.: :ref: 'virtual spiders <virtual-spiders>' based on :ref:'spider templates <spider-templates>') and the user wants each virtual spider to keep its own collection. Using different collection names is also advantageous if a user wants different spiders to share a collection.

Interactions with the collection, both saving new seen URLs and retrieving past seen URLs, can done in batches. An incremental crawl batch size setting (setting:'INCREMENTAL_CRAWL_BATCH_SIZE') can be configured to determine a number of records (seen URLs) per batch.

Exemplary instructions for implementing Incremental Crawl Middleware can include:
class IncrementalCrawIMiddleware:

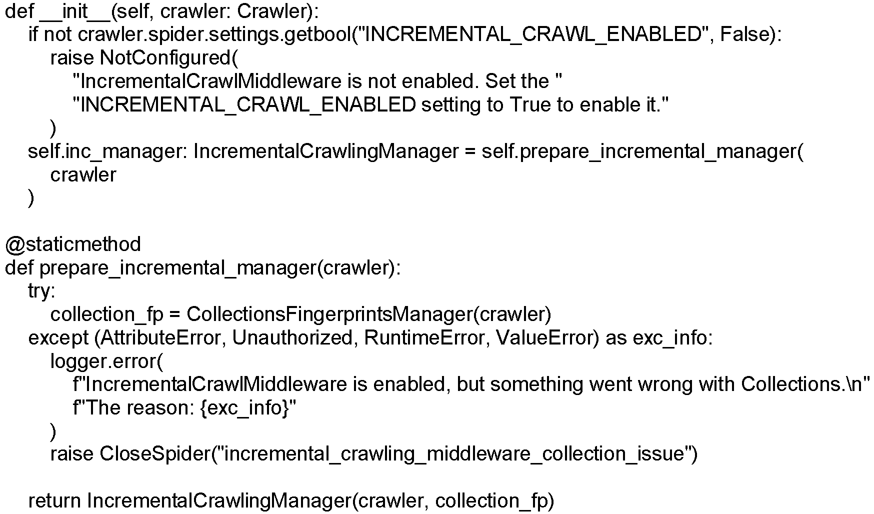

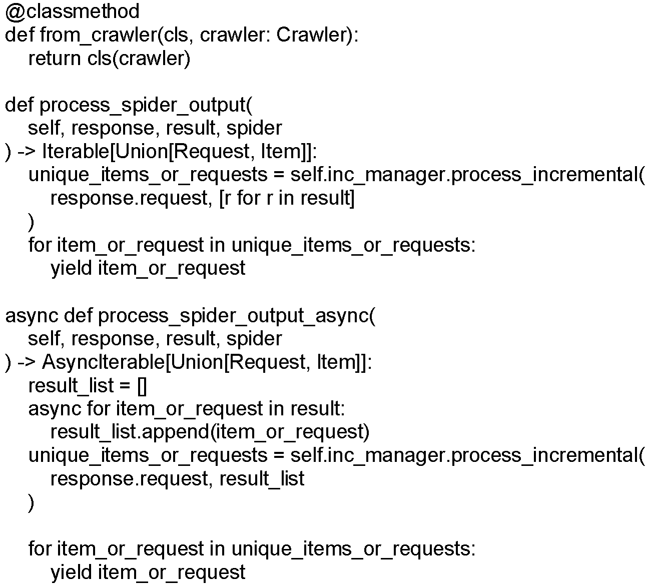

At block 307, the system can be configured with other middleware.

### Allow Offsite Middleware

At block 308, in an implementation, similar to the Offsite Requests for Seed, before starting a crawl, the spider can be configured to extract domains from each input URL. The domains can then then be assigned as an .allowed_domains instance variable of the spider. This ensures that discovered links that do not belong to the same domains as the input URLs will not be crawled.

However, in an implementation, the system can be configured to aggregate links from different domains. For example, in an ecommerce spider, in order to avoid filtering out offsite product links that are valid, the spider can be configured to allow all product links extracted from inside a productNavigation page.

### CrawlingLogsMiddleware

In an implementation, at block 309 the system can be configured to produce structured logs to enable tracking of discovered links from each page type. An exemplary log middleware for an ecommerce spider can include the following implementation:

```
 [zyte_spider_templates.middlewares] Crawling Logs
for https://www.pomocedlaseniora.pl/1269-skarpety-
 zdrowotne (parsed as: productNavigation-heuristics):
 Number of Requests per page type:
 - product: 6
 - nextPage: 0
 - subCategories: 0
 - productNavigation: 0
 - productNavigation-heuristics: 195
 - unknown: 0
 Structured Logs:
 {
 "time": "2024-10-21 18:35:22",
 "current": {
  "url": "https://www.pomocedlaseniora.pl/1269-skarpety-zdrowotne",
  "request_url": "https://www.pomocedlaseniora.pl/1269-skarpety-zdrowotne",
  "request_fingerprint": "91f3730cc5caca4d3067bc60fd46752dbb974ec9",
  "page_type": "productNavigation-heuristics",
  "probability": 0.1
 },
 "to_crawl": {
  "product": [
   {
    "name": "Bambusowe skarpetki zdrowotne",
    "probability": 0.9965927004814148,
    "page_type": "product",
    "request_url": "https://www.pomocedlaseniora.pl/
skarpety-zdrowotne/301-skarpetki-zdrowotne-z-
    przedzy-bambusowej.html",
    "request_priority": 199,
    "request_fingerprint": "18bccfe2b9d86e580e314d33d8938e6209d1882b"
   },
  ....
   
```

Since the logs are structured, it becomes machine-readable which allows easy debugging and analysis of crawls.

FIG. 3E shows a logical flow for a full strategy for products. After a start URL at block 330, at block 331 the system API extracts all links from a webpage 310 for product navigation 332. At block 333, product navigation employs heuristics to discover more web pages. In an implementation, the heuristics can be used only on the homepage for the website, or the heuristics can be used across some or all of the links for the website (full strategy). An example of heuristics can be implemented as described with respect to FIG. 3D for articles. At block 334, the heuristics identifies subCatagories for this product navigation link group. At block 339, the API passes the newly discovered URLs to the API for API extraction at block 331 to reiterate the process.

At block 335, the spider follows pagination 335, and at block 336 the API follows product detail pages as described herein. At block 337, the API extracts the identified product links

In another implementation, the system can be configured with a navigation strategy that does not use heuristics, and follows pagination 335, subcategories 334, and product links 336 only. If an input URL is a link to a particular category on a website, the spider is configured to stay within this category.

### Direct Extraction from HTTP Request Without Crawling

In another implementation, the system can be configured to directly extract products from the provided URLs, without any crawling. To use this strategy, the system is configured to pass individual product URLs to the spider, and not the website or product category URLs. Common use cases are product monitoring and batch extraction.

Embodiments described herein include machine learning components employing Deep Learning to extract and classify information from web pages. Embodiments also include a multi-modal neural network architecture that processes text content and HTML structure to achieve good quality and to do so efficiently to decrease extraction time. FIG. 3F is architecture and flow for a process in accordance with at least one of the various embodiments.

In an implementation, the scraping module 15 can include a template or code configured to allow a user to extracting a product via HTTP request:

```
 {
 "url": "https://example.com/foo",
 "product": true,
 "productOptions": {
  "extractFrom": "httpResponseBody"
   }
 }
```

In an implementation, the system can be configured for a default extraction by HTTP request, which can be configured to depend on a target website, with auto-configuration for new domains. Compared to extraction from a browser request, extraction using an HTTP request can typically be much faster and have a lower computational cost. For some websites, extraction from an HTTP request can produce poor results (such as low probability and missing fields), which often happens when JavaScript execution is required. Extraction from an HTTP request can be made available for all data types and can supports all fields supported by browser HTML extraction. In terms of implementation, extraction from an HTTP request can be configured using similar underlying technologies as an extraction from a browser request, with some notable differences.

In comparison to a web scraping tool as described in U.S. Patent No. 10,984,066, the entirety of which is incorporated by reference hereby, exemplary differences in a neural network architecture were implemented to reach good quality, such as applying a stacked bidirectional long short term memory network (BiLSTM) in the head which operates on a sequence of DOM elements and allows the model to better capture the context, while a model operating on browser request was able to use an image modality to capture the page context.

In at least one embodiment, the web scraping and classification engine is configured to process HTML from the web page. Block 340 in FIG. 3F shows an embodiment of the HTML processing part.

At block 382, a raw HTML snapshot is processed: text, HTML tags from a fixed set of tags, and CSS class attributes are preserved, while other information is removed. As disclosed hereinafter, other kinds of HTML processing are possible. The result is encoded to a byte string, for example using UTF-8 encoding. The length of the result is limited by truncating byte string in the end. For example, a limit can be set to 350KB.

At block 384, character embedding layer is used to convert the byte string to a 2D tensor, where each byte from the byte string is represented by 1D vector of certain size, for example size 64. The resulting 2D tensor is then processed to get a 2D feature map. For example, the 2D tensor can be processed using 1D convolutional neural network layers, Recurrent Neural Network layers (RNNs and their variants LSTM or GRU), Text Convolutional Neural Network (CNN) including a Feature Pyramid Network (FPN) with lateral connections, or other like neural networks. In at least one embodiment, at block 386, a plurality of 2D tensors are processed once per web page using a 1D convolution layer with kernel size 7, which produces a plurality of 2D feature maps (e.g.: len /1, len /2, len /4). The length of the 2D feature maps produced in this embodiment are the same as lengths of the input byte string, and depth is a parameter which can be chosen (for example, in an embodiment, the depth is set to 256).

At block 387, a plurality of candidate Regions of Interest (Rols) to extract data from are generated from the feature maps. These Rols are parts of the input HTML. Each respective region of interest of the input HTML corresponds to a respective region of interest on the byte string, and, accordingly, to a region of interest on a respective 2D feature map. In block 388, for each Rol (visible HTML element) regions on the 2D feature maps are then resized to a fixed length (3 in the embodiment), keeping depth of a feature map and using Rol pooling or a similar algorithm. Other fixed lengths are possible. For each Rol, the resulting feature vector is then passed as an input to final classification layers 395.

At block 390, output parameters for each of the plurality of regions are reshaped and then used as an input to final classification layers 395.

At block 374 for each possible HTML tag (e.g.: div, a, p, span), an embedding is computed during the training, which is a vector of a fixed size (64 in at least one embodiment). For each Rol, a HTML tag is extracted, and then looked up in an embeddings table, which at block 375 produces a feature vector representing HTML tag for the Rol. At block 380, each Rol resulting feature vector is then passed as an input to final classification layers 395.

In block 377, for the most popular (according to the training database) CSS classes or IDs, an embedding is computed during the training, which is a vector of fixed size (256 in an embodiment). In an embodiment, a number of most popular CSS classes or IDs are processed. Then for each Rol, all CSS classes and IDs are extracted, their embeddings are looked up, and then an average is computed element-wise, to produce a feature vector representing CSS classes and IDs for each Rol. At block 381, each Rol resulting feature vector is then passed as an input to final classification layers 395.

For each Rol, the final classification layers 395 receives feature vectors from the HTML processing part 345. At block 394 a first set of final classification layers and at block 396 a deep neural network is used. In an embodiment, at block 396 a neural network with two fully connected layers is used, with Batch Normalization layers enabled, ReLU activation function, and Dropout regularization. At block 397, a Bidirectional long short term memory (BiLSTM) RNN layer is configured for sequence processing model with two LSTMs, one taking the input in a forward direction, and the other in a backwards direction. The BiLSTM operates on a sequence of DOM elements and allows the model to capture the context. Previous elements and next elements are processed by the BiLSTM and output for final classification at block 398. At block 398, given an input from the HTML processing part 370, the final classification layers 395 outputs a probability score that a part of a web page belongs to a certain class.

Experiments for LSTM Head Models for a Product are described as follows. In an implementation, a bidirectional LSTM applied in the head, specifically, before a last layer, transforms from a 256 node embedding into class probabilities. Nodes are laid out in depth-first order, that is, in the same order as they appear when reading HTML sequentially. This allows them to use some of the context information. The system is configured to capture image context due to a large receptive field of the image network. Text context can be captured to some extent with the help of left context Rol pooling, and a non-zero (but not too large) receptive field of the text CNN. However, node modality context is not captured in the master.

In an implementation, experiments were done on branches: fc2lstm and fc2lstm-left-ctx branches. Hard negative mining (HNM) was implemented in the loss, with all nodes passed through the forward pass, and sampling done in the loss. HNM was used in the fine-tuning of product in master, and also used in base training (where previous experiments showed no benefit from it in the base training).

In the experiments, a baseline from the last 3 CT runs all had the same annotations, the only difference being that a "features" attribute was not present in one of them (product-fc2lstm-c8bf7b01c) where a HNM with a FC2LSTM head was applied, which is a bidirectional LSTM with hidden dimension, which is half of a head embedding dimension, and where outputs from two LSTM dimensions were concatenated. Also, a left context was removed, as LSTM should be able to capture, but the Rol size was kept the same, effectively making "main" Ro1 size larger, 5 instead of 3.

A product-fc2lstm-left-ctx-bba40ba1f, which is same as above with a left context as in master product-fc2lstm-ea7f7adf8, which is same as product-fc2lstm-c8bf7b01c but with text roi size set to 3 (same as in master), was still without the left text context.

A product-fc2lstm-6861465a2 was same as product-fc2lstm-ea7f7adf8 except for a different head model, FC2LSTMSkip. In this model a skip connection was introduced around LSTM, and also instead of concatenating backward and forward LSTM, they were added, together with the skip connection. This was added after seeing results from previous experiments, with the aim of combining strong sides of master and LSTM. Since backward and forward LSTM is added instead of concatenation, its hidden dimension is two times smaller.

Not included were experiments where no sampling and no HNM was done (both in master and with LSTM), as they showed worse performance in both cases, and were done due to not realizing that LSTM would be compatible with HNM.

Adding LSTM to the head added small overhead in terms of inference or training speed and model size, as dimensionality is low.

To check possible reasons for improvement of brand and mainlmage, as described below, a ci-2022-12-23-12-2 model was compared with product-fc2lstm-6861465a2. Where node modality was disabled, similar results were obtained, which contradicted the below analysis.

### Brand

Some examples where brand prediction was better for LSTM model included 8fa91 ef where brand is an image inside a <div class="box-brand"> element; c57e508 where brand is a <div class="logo"> inside the <a> element (although prediction was close to threshold); and 362a50c where a LSTM model was able to predict a brand from an image inside <span class="product-description-brand"> element 61d0955 where brand image is nested several levels below the <div class="listing-image--brand">.

Brand confusion between a brand at the top of the website and a product brand remained a significant issue, and LSTM tended to predict the website brand more often (and often this is not correct), although with a low probability. Feature extraction from class and id attributes may be improved if a split is implemented not only by space but also by underscore and hyphen.

### mainlmage

Some examples where mainlmage prediction was better for LSTM model:
- a1c436d, 1 aa903b where the first of same sized images is annotated as mainlmage.
- e4b0509, 198baa6, e41b319, 5b90627 where reasons for error in default model were unclear.
- 83edb10, where the image is not rendered, but perhaps the div parent and sequence of images gives a hint.
- 7b6214c where model is able to avoid a false positive from a less relevant part of the page (annotated mainlmage has empty extraction).

For mainlmage, a number of errors (for both models) happened because the main image has only base64 data URL, and this usually leads to a false positive (e.g. on Amazon).

Overall the reason for mainlmage difference was less clear compared to brand.

### Stability check

The following extra runs were executed:
- A master with HNM in base training, to check if maybe improvements are due to HNM and not the LSTM.
- Two more runs with FC2LSTMSkip

The main plots had a yrange=0.15:

### Check node modality

In the above, it was hypothesized that LSTM was able to use the mode modality to make an improvement. What happens the node modality is disabled was checked, comparing FC2LSTMSkip runs. Overall quality was very similar and attributes which saw a big improvement from LSTM are not affected. From that it was concluded that node modality is not used much by the LSTM, and has little effect otherwise, which was quite surprising.

### Check if only left context in LSTM would be enough.

A bidirectional LSTM was used in the experiments above, mostly because it is more expressive compared to a regular LSTM, and there was no need to make assumptions regarding the kind of attributes are in the model. However, taking only the left context was also investigated to determine if it would improve results. Across the attributes, a left-only LSTM performed clearly worse for mainlmage, image, and slightly worse for a few other attributes such as breadcrumbs, additionalProperties, features. This showed that a right context can be important for some attributes (and likely it would not be replicated if a right context was added via the text network for attributes like image and mainlmage).

### Base training behavior

A base training quality appeared to be lower with LSTM, compared to the baseline, at least for the FC2LSTMSkip (same applied to base training done with regular sampling instead of HNM).

Attributes were noticeably weaker, while item presence was much better (which is expected as it is able to capture global context better, as item presence head is not in the base training).

It is considered that an LSTM model was able to better fit the base training dataset (hence the lower loss), but since the validation dataset is different, it performs worse - that could be checked if validation was run on a subset of base training dataset instead.

### Conclusions

As shown herein, LSTM in the heads brings consistent improvements to brand, mainlmage and image attributes, and that having both left and right context is advantageous. LSTM with a skip connection indicates it is advantageous as it did have such a drop for description attribute, and brings a consistent overall improvement.

In the present disclosure, feature extraction for node modality (HTML classes and ids) thus is improved and a different architecture is used, as the model relies more on this information in absence of the image modality that is described in U.S. Patent No. 10,984,066. Experimentation demonstrating the improved architecture and model for feature extraction for node modality was performed.

Further, the present disclosure describes the use of datasets annotated for browser extraction to train a model intended for extraction from an HTTP request, which employed a sequence of transformations.

Scheme
- 6 datasets were used:
- test-v4 - current dataset
- no_dom_annot - test-v4 dataset without dom annotations (
- text nodes
- and css properties)
- all_visible - no_dom_annot dataset with all nodes marked as visible
- originals - first HTML response from splash history without JS processing (to emulate DirectDownloader) with all nodes marked as visible
- python_dom - test-v4 dataset with python dom annotations
- originals_pd - like originals, but with python dom annotations

### Recipes

Ground truth

```
python scripts/inference_to_annotation.py \
 scripts.inference_to_annotation_extractors.AnnotationsExtractor \
 --dataset /data/web-rcnn/datasets/product/test-v4/ \
 --n-jobs 10 \
 --extractor-config product \
 --output /data/nikita/run/web-rcnn//2022-11-04/annotations/originals.json
```

Same ground truths were used for evaluation. They were extracted from a test-v4 dataset

Originals dataset (plus filtered annotations)

```
 D=/data/nikita/run/web-rcnn//2022-11-
 04/datasets/originals/ rm -rf $D
   python scripts/mutate_dataset.py \
   scripts.mutate_dataset_mutators.UncorkFilter,
scripts.mutate_dataset_mutators.OriginalFromS3,scripts.m
   utate_dat
   --dataset /data/web-rcnn/datasets/product/test-v4/ \
   --limit-by-annotations /data/nikita/run/web-rcnn//2022-11-04/annotations/originals.json \
   --n-jobs 10 \
   --output-dir $D \
   --output-annotations /data/nikita/run/web-rcnn//2022-11-04/annotations/s3_presented.json \
   --mutator1-capability product
```

Originals could not be collected for all pages. About 20% of all pages were lost.

**Table 1**

| |
|---|
| ```
D=/data/nikita/run/web-rcnn//2022-11-
 04/datasets/no_dom_annot/ rm -rf $D
 python scripts/mutate_dataset.py \
 scripts.mutate_dataset_mutators.OldFormat,scripts.mutate_dataset_mut
 ators.RemoveDomAnnotations \
 --dataset /data/web-rcnn/datasets/product/test-v4/ \
 --limit-by-annotations /data/nikita/run/web-rcnn//2022-11-
 04/annotations/s3_presented.json \
 --n-jobs 10 \
 --output-dir $D
``` |

### No dom annotation

```
 D=/data/nikita/run/web-rcnn//2022-11-
 04/datasets/originals_pd/ rm -rf $D
 python scripts/mutate_dataset.py \
     scripts.mutate_dataset_mutators.UncorkFilter,scripts.mutate_dataset_mutator
     s.OriginalFromS3,scripts.muta
 --dataset /data/web-rcnn/datasets/product/test-v4/ \
 --limit-by-annotations /data/nikita/run/web-rcnn//2022-11-
 04/annotations/originals.json \
 --n-jobs 10 \
 --output-dir $D \
 --output-annotations /data/nikita/run/web-rcnn//2022-11-
 04/annotations/s3_presented.json \
 --mutatorl-capability product
```

### All visible

### Python Dom

```
D=/data/nikita/run/web-rcnn//2022-11-
 04/datasets/python_dom/ rm -rf $D
 python scripts/mutate_dataset.py \
   scripts.mutate_dataset_mutators.RemoveDomAnnotations,scripts.mutate_dataset_
  mutators.PythonDomAnnotations \
   --dataset /data/web-rcnn/datasets/product/test-v4/ \
   --limit-by-annotations /data/nikita/run/web-rcnn//2022-11-
   04/annotations/s3_presented.json \
   --mutator0-bboxes 0 \
   --n-jobs 10 \
   --output-dir $D
```

### Originals with Python DOM

```
 D=/data/nikita/run/web-rcnn//2022-11-04/datasets/originals_pd/
 rm -rf $D
 python scripts/mutate_dataset.py \
 scripts.mutate_dataset_mutators.UncorkFilter,scripts.mutate_dataset_mutators.O
 riginalFromS3,scripts.muta
 --dataset /data/web-rcnn/datasets/product/test-v4/ \
 --limit-by-annotations /data/nikita/run/web-rcnn//2022-11-
 04/annotations/originals.json \
 --n-jobs 10 \
 --output-dir $D \
 --output-annotations /data/nikita/run/web-rcnn//2022-11-
 04/annotations/s3_presented.json \
 --mutatorl-capability product
```

### Model and Semantic Markup

**Table 2**

| attribute | ct-2022-11-04 + markup on test-v4 | | | no-image-no-css + markup on originals | | | dF1 |
|---|---|---|---|---|---|---|---|
| | F1 | precision | recall | F1 | precison | recall | |
| price | 0.940 ± 0.012 | 0.944 ± 0.012 | 0.937 ± 0.015 | 0.810 ± 0.020 | 0.819 ± 0.020 | 0.801 ± 0.022 | -0.130 |
| name | 0.938 ± 0.013 | 0.938 ± 0.013 | 0.939 ± 0.013 | 0.856 ± 0.019 | 0.858 ± 0.019 | 0.855 ± 0.019 | -0.082 |
| brand | 0.640 ± 0.032 | 0.612 ± 0.033 | 0.671 ± 0.033 | 0.556 ± 0.033 | 0.531 ± 0.032 | 0.583 ± 0.036 | -0.104 |
| sku | 0.881 ± 0.017 | 0.873 ± 0.018 | 0.888 ± 0.017 | 0.830 ± 0.021 | 0.822 ± 0.022 | 0.839 ± 0.021 | -0.051 |

### Model only

**Table 3**

| attribute | ct-2022-11-04 on test-v4 | | | no-image-no-css on originals | | | dF1 |
|---|---|---|---|---|---|---|---|
| | F1 | precision | recall | F1 | precison | recall | |
| price | 0.927 ± 0.013 | 0.944 ± 0.011 | 0.910 ± 0.017 | 0.789 ± 0.023 | 0.815 ± 0.022 | 0.764 ± 0.026 | -0.138 |
| name | 0.937 ± 0.013 | 0.937 ± 0.013 | 0.937 ± 0.013 | 0.855 ± 0.021 | 0.858 ± 0.021 | 0.853 ± 0.021 | -0.082 |
| brand | 0.537 ± 0.035 | 0.542 ± 0.035 | 0.533 ± 0.038 | 0.431 ± 0.033 | 0.437 ± 0.033 | 0.424 ± 0.036 | -0.106 |
| sku | 0.686 ± 0.028 | 0.860 ± 0.024 | 0.571 ± 0.032 | 0.621 ± 0.030 | 0.773 ± 0.030 | 0.520 ± 0.033 | -0.067 |

### Analysis of effects

### Different Models

**Table 4**

| attribute | ct-2022-11-04 on test-v4 | | | no-image-no-css on test-v4 | | | dF1 |
|---|---|---|---|---|---|---|---|
| | F1 | precision | recall | F1 | precison | recall | |
| price | 0.927 ± 0.013 | 0.944 ± 0.011 | 0.910 ± 0.017 | 0.795 ± 0.021 | 0.801 ± 0.021 | 0.789 ± 0.022 | -0.132 |
| name | 0.937 ± 0.013 | 0.937 ± 0.013 | 0.937 ± 0.013 | 0.867 ± 0.021 | 0.867 ± 0.022 | 0.867 ± 0.021 | -0.071 |
| brand | 0.537 ± 0.035 | 0.542 ± 0.035 | 0.533 ± 0.038 | 0.442 ± 0.037 | 0.457 ± 0.038 | 0.429 ± 0.039 | -0.095 |
| sku | 0.686 ± 0.028 | 0.860 ± 0.024 | 0.571 ± 0.032 | 0.664 ± 0.029 | 0.839 ± 0.027 | 0.550 ± 0.033 | -0.022 |

### Dom Annotations Absence

**Table 5**

| attribute | no-image-no-css on test-v4 | | | no-image-no-css on no_dom_annot | | | dF1 |
|---|---|---|---|---|---|---|---|
| | F1 | precision | recall | F1 | precison | recall | |
| price | 0.795 ± 0.021 | 0.801 ± 0.021 | 0.789 ± 0.022 | 0.805 ± 0.020 | 0.818 ± 0.020 | 0.793 ± 0.023 | +0.010 |
| name | 0.867 ± 0.021 | 0.867 ± 0.022 | 0.867 ± 0.021 | 0.878 ± 0.020 | 0.880 ± 0.020 | 0.877 ± 0.020 | +0.012 |
| brand | 0.442 ± 0.037 | 0.457 ± 0.038 | 0.429 ± 0.039 | 0.440 ± 0.037 | 0.469 ± 0.038 | 0.415 ± 0.038 | -0.002 |
| sku | 0.664 ± 0.029 | 0.839 ± 0.027 | 0.550 ± 0.033 | 0.637 ± 0.032 | 0.841 ± 0.029 | 0.513 ± 0.034 | -0.027 |

### Visibility Info Absence

**Table 6**

| attribute | no-image-no-css on test-v4 | | | no-image-no-css on no_dom_annot | | | dF1 |
|---|---|---|---|---|---|---|---|
| | F1 | precision | recall | F1 | precison | recall | |
| price | 0.795 ± 0.021 | 0.801 ± 0.021 | 0.789 ± 0.022 | 0.805 ± 0.020 | 0.818 ± 0.020 | 0.793 ± 0.023 | +0.010 |
| name | 0.867 ± 0.021 | 0.867 ± 0.022 | 0.867 ± 0.021 | 0.878 ± 0.020 | 0.880 ± 0.020 | 0.877 ± 0.020 | +0.012 |
| brand | 0.442 ± 0.037 | 0.457 ± 0.038 | 0.429 ± 0.039 | 0.440 ± 0.037 | 0.469 ± 0.038 | 0.415 ± 0.038 | -0.002 |
| sku | 0.664 ± 0.029 | 0.839 ± 0.027 | 0.550 ± 0.033 | 0.637 ± 0.032 | 0.841 ± 0.029 | 0.513 ± 0.034 | -0.027 |

### Without JS Rendering

**Table 7**

| attribute | no-image-no-css on all_visible | | | no-image-no-css on originals | | | dF1 |
|---|---|---|---|---|---|---|---|
| | F1 | precision | recall | F1 | precison | recall | |
| price | 0.798 ± 0.021 | 0.804 ± 0.021 | 0.793 ± 0.022 | 0.789 ± 0.023 | 0.815 ± 0.022 | 0.764 ± 0.026 | -0.009 |
| name | 0.871 ± 0.019 | 0.870 ± 0.019 | 0.871 ± 0.019 | 0.855 ± 0.021 | 0.858 ± 0.021 | 0.853 ± 0.021 | -0.016 |
| brand | 0.426 ± 0.034 | 0.420 ± 0.033 | 0.434 ± 0.036 | 0.431 ± 0.033 | 0.437 ± 0.033 | 0.424 ± 0.036 | +0.005 |
| sku | 0.644 ± 0.029 | 0.780 ± 0.029 | 0.548 ± 0.031 | 0.621 ± 0.030 | 0.773 ± 0.030 | 0.520 ± 0.033 | -0.023 |

### Python DOM Annotations

**Table 8**

| attribute | no-image-no-css on all_visible | | | no-image-no-css on python_dom | | | dF1 |
|---|---|---|---|---|---|---|---|
| | F1 | precision | recall | F1 | precison | recall | |
| price | 0.798 ± 0.021 | 0.804 ± 0.021 | 0.793 ± 0.022 | 0.781 ± 0.022 | 0.784 ± 0.021 | 0.777 ± 0.023 | -0.017 |
| name | 0.871 ± 0.019 | 0.870 ± 0.019 | 0.871 ± 0.019 | 0.858 ± 0.020 | 0.858 ± 0.020 | 0.859 ± 0.020 | -0.013 |
| brand | 0.426 ± 0.034 | 0.420 ± 0.033 | 0.434 ± 0.036 | 0.422 ± 0.035 | 0.420 ± 0.033 | 0.434 ± 0.036 | -0.004 |
| sku | 0.644 ± 0.029 | 0.780 ± 0.029 | 0.548 ± 0.031 | 0.652 ± 0.029 | 0.766 ± 0.028 | 0.568 ± 0.032 | +0.008 |
| Weighted Composed PR AUC | 0.488 ± 0.013 | | | 0.481 ± 0.014 | | | -0.007 |

**Table 9**

| attribute | no-image-no-css on originals | | | no-image-no-css on originals_pd | | | dF1 |
|---|---|---|---|---|---|---|---|
| | F1 | precision | recall | F1 | precison | recall | |
| price | 0.789 ± 0.023 | 0.815 ± 0.022 | 0.764 ± 0.026 | 0.769 ± 0.024 | 0.793 ± 0.023 | 0.747 ± 0.027 | -0.020 |
| name | 0.855 ± 0.021 | 0.858 ± 0.021 | 0.853 ± 0.021 | 0.837 ± 0.020 | 0.838 ± 0.020 | 0.835 ± 0.020 | -0.018 |
| brand | 0.431 ± 0.033 | 0.437 ± 0.033 | 0.424 ± 0.036 | 0.425 ± 0.033 | 0.420 ± 0.033 | 0.431 ± 0.035 | -0.008 |
| sku | 0.621 ± 0.030 | 0.773 ± 0.030 | 0.520 ± 0.033 | 0.624 ± 0.030 | 0.754 ± 0.031 | 0.532 ± 0.031 | +0.003 |
| Weighted Composed PRAUC | 0.461 ± 0.017 | | | 0.449 ± 0.016 | | | -0.012 |

When integrating into an exemplary extraction API, disclosed is an auto-configuration system which ensures that the system can advantageously use the most cost-effective method (raw or browser) under the hood without requiring the user to run any comparisons, while at the same time providing high quality results for unseen domains. This can be achieved by first efficiently and transparently running extraction using both methods, gathering statistics about better performing method using top-level and attribute probability, and then switching to the best performing method.

### Qualitative check

Some URLs which were identified by the vendor to have issues without JS. These were compared results of 3 models:
raw HTML with JS off
raw HTML with JS on
full model with JS on.

The following items were omitted:
- Items which do not render, without checking them with httpResponseBody.
- Items which have good results with raw HTML even despite some parts not rendering. An extreme example of this is https://de.iherb.com/pr/Zarbee-s-Baby-Soothing-Chest-Rub-with-Eucalyptus-Lavender-Beeswax-1-5-oz-42-g/78114, which does not render without JS at all, but results are perfectly fine.
- Given the way pages were collected, pages which render fine without JS, but where raw model would be worse were ignored.

The percentage of pages which have issues with JS out of all pages checked by the vendor was estimated to be around 15% for product.

### Results

**Table 10**

| URL | raw HTML: JS off compared to JS on | JS on: full model vs raw HTML |
|---|---|---|
| https://www.buckmason.com/pro ducts/coyo te-cascade-down-expedition-vest | probability works (very high p with JS enabled, very low with JS disabled), only image shows up without JS, but many attributes still extracted | same |
| https://shop.mango.com/gb/me n/shirts- printed/regular-fit-geometric-print-shirt_77050514.html | probability works | similar, a bit more attributes |
| https://www.asos.com/topshop /topshop- mom-jean-in-authentic-blue-wash/prd/24146558? colourwayid=60542668&cid=30 226 | similar prob, missing attributes without JS | similar, some attributes worse, some better |
| https://photo.walgreens.com/store/ magnets -details?tab=photo_Gifts-Magnets-4x6#!/pdpview | probability works | similar, some attributes worse, some better |
| https://www.fast-growing-trees.com/products/persian-bearss-lime- tree | similar prob, missing attributes without JS. Picking up incorrrect price from related products if main price is missing | somehow the main price loads here |
| https://www.playstation .com/en-us/games/beat-saber/ | similar prob, only features missing with JS (so probably should use raw?) | same |
| https://www.camplify.com.au/r v/caravan- rental-wantirna-south-vic-jb- dreamtime/3534 | probability works, although it's only 0.73, but page is indeed unusual | no check |
| https://www.galeton.com/frog wear-reg- high-visibility-ansi-class-e-lightweight- mesh-leg-gaiters/13291-product/ | probability works, have clear indication of need for JS | no check |
| https://drop.com/buy/drop-skylight-series- keycap-set?defaultSelectionIds=970400 | probability works, have clear indication of need for JS, although some attributes still extracted | no check |
| https://herschel.com/shop/headwe ar/baby- | a few attributes missing (e.g. price) | no check |

On some pages probability was enough to tell JS was needed.

On some pages probability was similar, indicating attributes could be checked. Pages usually do not give any clear indication that JS should be enabled (only 2 gave it out of pages checked).

It was unclear if there are pages where raw HTML model with JS on would be better than full model with JS on, or even when "raw HTML model with JS on" > "raw HTML model with JS off" > "full model with JS on" - but they were not seen in this small sample.

### Constraints on the design

After rendering with raw HTML, a question was whether JS ON should be retried. If probability is low it can be a negative page, if probability is high it cannot be determined if more attributes would appear with JS ON (and this looks unsolvable, unless most important attributes are extracted). So raw results can be compared with results with JS ON. When comparing results on positive pages, it can be determined which mode is better (if there is a difference), either by item probability or by attributes. Without any positive pages, it cannot be determined what is optimal. It was unclear if checks should be done using a raw HTML model and only varying whether JS is ON or OFF, to avoid one extra degree of variability, or whether to take into account that full model can be better (or worse if rendering is broken, although no cases like that were seen yet). One more aspect is, what do to do on pages which render fine without JS, but where raw model is worse.

These constraints make "online" mode challenging. If able to get httpResponseBody and browserHtml in one response, then a comparison can be implemented (for example, on the web-rcnn side, if both kinds of results are sent in one request), the only issue is that the final decision cannot be determined until a positive page is shown. However, the overhead for running this comparison would be minimal compared to running browserHtml extraction (<10%).

An online implementation can be as follows:
- An API makes unCork request getting both httpResponseBody and browserHtml, with JS enabled. A potential issue is what if browser fails but httpResponseBody succeeds, - can an incomplete response be returned from unCork, or is a retry needed.
- It sends to web-rcnn both results and extraction is executed using 2 or 3 methods, return a single best extraction result, and also indicates some better was found (note on optimal solution - if results are similar, a httpResponseBody result can be returned).
- Once the extraction API collects enough of these indications (for example, less than 10), it hard-codes extraction for this domain to a particular method, so the logic on platform API side is relatively simple (although implementation still not simple as this state needs to be managed).
- Alternatively, this logic and state management can be implemented in a separate service: web-rcnn sends events regarding which method worked best, the service accumulates this statistics and updates the DB with decisions, and the platform API reads this DB.

An offline implementation can require less work on API side, a drawback being bad results out of the box for new domains, if defaulted to httpResponseBody. If defaulted to browserHtml for new domains, then the drawback is that once httpResponseBody works, results still might slightly change, potentially invalidating initial testing.

In an implementation, a semi-offline system can be configured to maintain a low latency (1-2 minutes), and not require significant work from the API as well.

### Online approach

An objective is to provide a consistent experience (in terms of quality most importantly) when doing extraction for new domains, when a user does not specify exact extraction method (httpResponseBody or browser-based), and to quickly determine optimal method for new domains.

It is assumed that it is possible to get both httpResponseBody and browser rendering results (for xod script) from the unCork API.

An implementation can touch 3 services: existing an API server, an Extractor API, and a Feedback API service, as well as a database. The following pseudo-code explains the interaction between them:

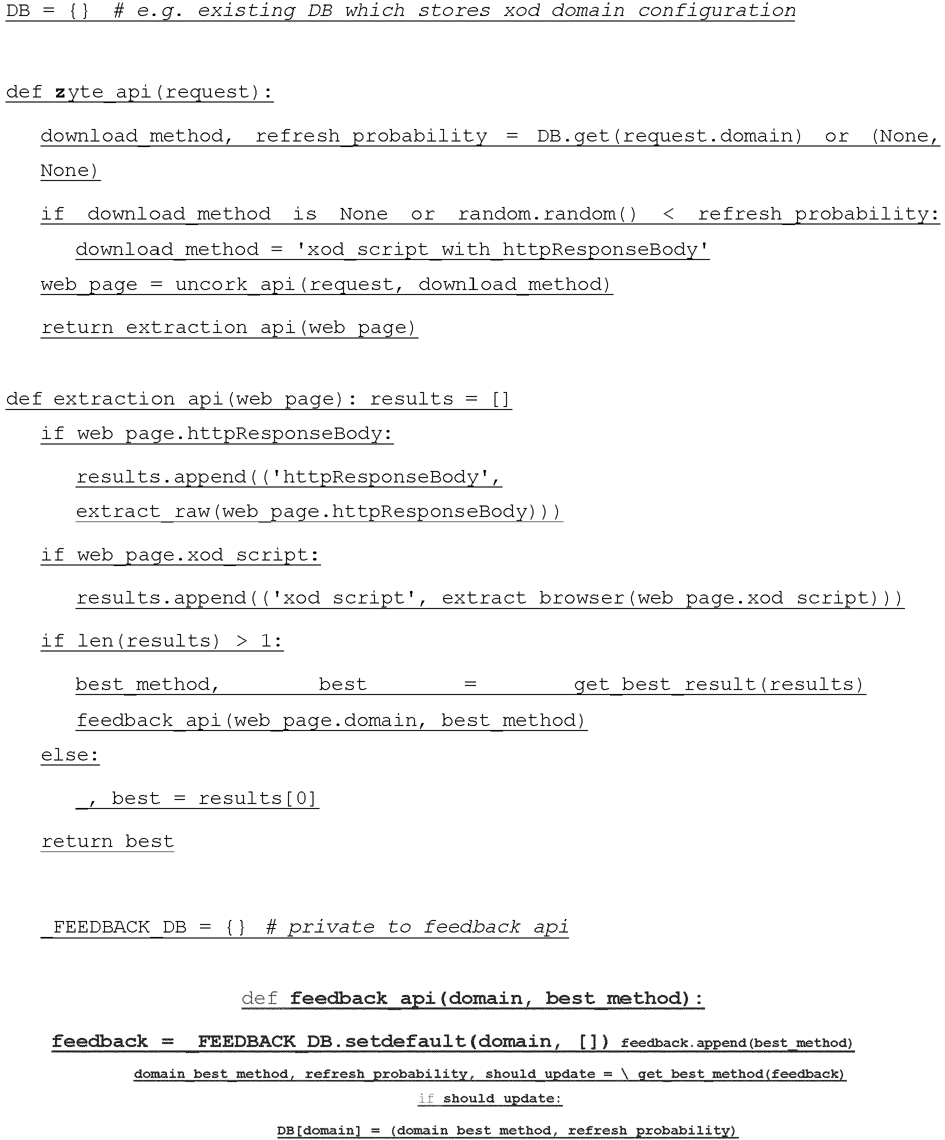

In an implementation, most of the implementation can be in a Feedback API. It can be a part a platform API or an Extraction API. It can also be implemented as a separate service. In such an implementation, the Feedback API manages state in _FEEDBACK_DB, and it can handle a small service

A refresh_probability can be added to periodically re-check an optimal configuration and a preferred over expiration to avoid a sudden latency increase for all requests, in case pinned to httpResponseBody extraction. It can be smaller for more popular domains.

The database can also be readable by other teams, e.g. by the pricing calculator.

This database does not need to be large -currently used domains and be kept (say 10k - 100k) and old entries trimmed down.

An article can have JS off or can be implemented for auto-configuration.

The granularity of the database can be configured for different settings for different data types. Per-domain granularity can be fine, or netlocs can be implemented.

### API changes

The API can be configured to allow {'product': true, 'browserHtml': true} but not to allow {'product': true, 'httpResponseBody': true}. In an implementation where a traction mode is automatic, options can also include:

Allow {'product': true, 'httpResponseBody': true} and make it force httpResponseBody-based extraction, and do the same for browserHtml.

Allow {'product': true, 'httpResponseBody': true} and have it use best extraction method (can be browser-based), but still return httpResponseBodyl. The same may not be implemented for browserHtml.

Continue as above, do not allow {'product': true, 'httpResponseBody': true} without explicitly specifying httpResponseBody extraction method.. This may have an asymmetry with allowing {'product': true, 'browserHtml': true}.

This is related to a typical use-case for when the system is configured to do extraction and also request an override of extraction results.

### Alternatives to online approach

In an implementation, the default can be switched to to httpResponseBody extraction, and make sure existing users are fine - either pinning configuration for currently used domains where it is needed, or pinning a different default for old users. A drawback is that crawling can fail because a domain does not work with raw extraction. Accordingly, the crawler can include an implementation to switch to the browserHtml extraction. In an implementation inside the API, multiple requests can be made instead of one (which is less efficient and less reliable).

In an implementation, an offline process can be configured to cover many domains, ensuring that most new domains which users come by are covered. The database can be configured to be much bigger (in the millions), and the system can be configured to cover newly appearing domains.

### Custom Attributes

Described herein are embodiments of technology to obtain structured data, including text, image and other kinds of data, from web pages, and process them for, among other advantages, more efficient web crawling, website analysis, creating knowledge databases and graphs, and providing more useful web page representation for other automated web page processing components. For example, embodiments described herein include machine learning components employing Deep Learning to extract and classify information from web pages. Embodiments also include a multi-modal neural network architecture that processes text content and HTML structure to achieve good quality and to do so efficiently to decrease extraction time.

Current ML models which power API extraction can get some common attributes from common data types (such as product, article, job posting). For example, a product schema can cover more than 20 attributes. For many projects, there are a extra attributes which users want, and they can differ from project to project. For an API extraction platform, this is addressed with custom development, as it is not practicable or possible to include every possible attribute into a model, and the conventional approach of annotating data and re-training the model is slow. To reduce the need for this custom development, described are implementations to add custom attribute extraction to an API extraction platform.

The operation of certain embodiments will now be described with respect to FIGS. 5-6C. In at least one of various embodiments, processes 500 and 600 described in conjunction with FIGS. 5-6C, respectively, can be implemented by and/or executed on a single computer, such as computer 1 of FIGS. 1A-1C. In other embodiments, these processes or portions of these processes can be implemented by and/or executed on a plurality of computers. Embodiments are not limited, and various combinations of network computers, client computers, virtual machines, hardware devices or the like can be utilized. Further, in at least one of the various embodiments, the processes described in conjunction with FIGS. 5-6C can be operative in system with logical architectures such as those described in conjunction with FIGS. 2A-E.

FIG. 5 illustrates a flowchart for process 500 for performing web page analysis in accordance with at least one of the various embodiments.

At block 502, the scraping module accepts user input for a website url and custom attributes for web scraping.

In an implementation, in an API and/or a crawler, the scaping module 15 can include a template or code configured to allow a user to describe and input custom attributes they wish to extract. An example usage can include, for example:

```
              {
        "url": "http://books.toscrape.com/catalogue/a-light-in-the-attic_1000/index.html",
        "product": true,
        "customAttributes": {
              "weight": true,
              "materials": "all materials, comma separated"
        }
       }
```

An example response being:

```
       {
        "url": "http://books.toscrape.com/catalogue/a-light-in-the-attic_1000/index.html",
        "product": {
        },
        "customAttributes": {
              "weight": "12 kg",
              "materials": "wood, steel"
        }
       }
```

The interface is thus configured to allow a user to provide custom attribute names and, optionally, their descriptions. The scraping module 15 and system is then configured to execute the extraction. Besides doing direct extraction, the system can be configured for more complex use-cases. For example, along with text extraction from the web page, the platform can be also configured to provide processing as described in the attribute description, e.g.:
- is_poetry: whether this book is about poetry, output "yes" or "no"
- height: output a number in meters
- summary: provide a two sentence summary
- sentiment: a number between 0 and 1, with 1 for most positive sentiment toward the main subject, 0 for most negative

At block 504, a web page can be downloaded using either browser rendering or raw HTTP downloading. In at least one implementation, a web scraping and classification engine is configured process HTML from the web page. At block 306, the system then extracts the text of the web page that it downloaded, any user-supplied text entered into a textbox, and user-supplied attributes. For example, the scraping module can be configured to perform data type-specific extraction using ML models as described herein, which also identify the main text of the extracted item. For a further example, the data can be processed using 1D convolutional neural network layers, Recurrent Neural Network layers (RNNs and their variants LSTM or GRU), or other like neural networks.

At block 506, the scraping module outputs the extracted text from the web page, user supplied text, and user-supplied attributes and inputs them to an LLM. At block 508, a prompt is input to instruct the LLM to run extraction. At block 510, the LLM thus prompted does custom attribute extraction and extracts the attributes. At block 512, output of the model is parsed (if syntactically valid), and the attributes extracted. At block 514, the custom extracted attributes are displayed to the user.

In the implementation above, a combination of relatively lightweight ML models (e.g. web-Recurrent Neural Network (web-rcnn) layers, lightweight neural nets, and so on.) which process a web page source document together with more powerful but computationally expensive LLMs to do custom attribute extraction provide an unexpected advantage, as passing a web page document directly into an LLM is very expensive, and sometimes not possible because of the web page being too long.

In an implementation, a web page can be converted into the text while excluding "related products" and other matter from the area of the main item with the help of a lightweight ML model. The system including the lightweight ML can also be configured to handle links by including simplified URLs of the links into the web page text.

In an implementation, for a custom model, model training can include obtaining datasets using a more powerful LLM, for example, an OpenAI model or other LLM models. Powerful LLM models include models that are able to perform new complex tasks from a description alone without extra fine tuning. FIG. 6A is a flowchart showing a process for model training. Training a custom LLM can comprise, at block 602 extracting text from public web pages using an existing model (for example as described at block 604 below) or annotations from a ML extracted page (e.g. from data store 23 for human-provided annotations). Annotations here can be employed instead of using an ML model to identify the main element on the page and what to exclude. A human annotator can identify (e.g.: point and click on desired and undesired elements), these annotations can be used to construct the text input, without using the model.

An exemplary data generation process providing training data is shown in FIG. 6B. At block 610, a webpage is sampled from production traffic from a public webpage. At block 612, a product prediction is generated from automatic extraction. At block 613, extracted text from the automatic extraction is filtered for product text. Then, at block 614, a large LLM (e.g.: OpenAl's Chat GTP) generates ML annotations, including negative attributes sampled from the attribute distribution.

Returning to FIG. 6A, the ML model is trained on extracted text or annotations. At block 604, a powerful LLM, for example the OpenAl model, is prompted to generate attributes which can be extracted from this text and their values, for example as shown above with respect to FIG. 5. At block 606 the LLM generated data from the prompt is used to fine-tune an existing, lightweight LLM model, for example an open-source model, so that the model learns behavior similar to that of a more powerful open source LLM (e.g.: OpenAl, Gemini).

Datasets for fine-tuning language models for custom attributes have the following features: "Filtered" text from webpage (to reduce noise and length), and Annotations for arbitrary set of attributes. To address it:
- Use the product model for "filtering" text from webpage
- -Use an LLM for generating annotation and arbitrary set of attributes.

In an implementation, an LLM generative Al can be used to generate synthetic product descriptions. For example, in an implementation, OpenAl (for example) can be used to generate synthetic product descriptions.

As shown in Table 11, an analysis showed GPT4 extracted -50% more attributes compared to GPT3.5 for annotation.

**Table 11**

| Name | Annotator(GPT3.5 or GPT4) | # of samples | Cost of annotation |
|---|---|---|---|
| **product-autoannotated-gpt3_5** | GPT3.5 | 3775 | $8 |
| **product_ammo_10k_chatgpt3_5** | GPT3.5 | 10683 | $28 |
| **product_ammo_6k_chatgpt4** | GPT4 | 5926 | ~$200 |
| **article** | GPT4 (multistep) | 188 | ~$70 |
| **job_posting** | GPT4 (multistep) | 190 | ~$70 |
| **product-many-attributes** | GPT4 (multistep) | 100 | ~$35 |

A chart of evaluation metrics is shown in FIG. 6C.

**Table 12**

| **Attribute** | **Ground Truth** | **What the model extracted** |
|---|---|---|
| weight unit | pounds | lb or lbs |
| | grams | g |
| | kilograms | kg or kgs |
| dimension unit | meters | m or mtr |
| weights | 9.75 | 9 ¾ |
| warranty length | 5 years | Five years |

As will be appreciated, larger LLM models than GPT3 or GPT4 can be used, for example Llama 2 13b.

For another example, a LoRA (Low-Rank Adaptation of Large Language Models) model is steered with examples, which is not a regular fine-tune. The model can be adapted using a single, relatively small GPU (NVIDIA L4).

Model memory usage can be reduced via quantization (e.g.: to 4 bits). The model can be sped by running it with custom kernels (64 bits vs. 16 bits).

In an implementation, the system can be configured for extractive question answering. Extractive question answering addresses the same problem as extracting user-defined attributes, but instead of generating the extracted result, the system is configured to identify the span of the source document which includes the extracted value. Extractive question answering can be re-purposed for extraction, as well as to allow for multiple attributes to be extracted in a single pass, whereas standard extractive QA only answers one question. Advantages as compared to generative approach includes the of use more light-weight models, for example NER models such as BERT, which lowers runtime cost, even when using relatively large transformers. This provides a technical advantage as it solves generative Al's hallucination problem, and guarantees that the system only extracts data from a source document. Extractive question answering, however, does not allow the extraction of attributes which require extra processing, such as summarization, described above in the examples in using generative Al.

To explain, initially considered is how extractive (single) question answering problem is formulated. The problem is formulated as a decoder transformer two-label token classification.

Tokenization: The questions and context are tokenized and concatenated together using a [SEP] token to indicate to model that a separation between the question and answer.

Since the model considers the context completely, for each token, an entire context and entire question is considered during prediction. An example of decoded tokenized sample is: "[CLS] what is product color? [SEP] home > commercial > commercial fixtures > commercial toilet bowl > product de * images are representative of products listed and may not be actual product. item only available for pick up in install bolt cap kit, white 7381251 - 200. 0200a login to see inventory sale : $ 253. 92 sell unit: ea $ 253. 9"

For each token, a model is trained to predict two values:
- A probability that the token is start of the answer.
- A probability that the token is end of the answer.

During inference, processing is executed and the answer is extracted from the highest probability start token to the highest probability end token.

Accordingly, disclosed is a Multi-Question Answering formulation. In an implementation, the system is configured to (1) embed multiple questions in the representation and (2) keep the model architecture close to the original, so the knowledge is transferred from pre-trained models.

### Formulate model predictions

Following the current architecture, the system is configured to extend the above model for Multi-Question Answering by formulating it as a N-Question Answering problem. Here N is a hyper-parameter and is fixed in the model. N indicates the number of questions model can answer. By keeping a fixed N the model output is modified to predict 2*N outputs for each token. For each token, the model predicts start and end of the answer for each of the N questions, therefore there are 2*N predictions for each token.

### Formulate tokenization

To indicate to the model the separation between the multiple questions, the multiple questions are concatenated together with a [SEP] token and then the context is concatenated. An example tokenization (N=2) is:
"[CLS] what is product color? [SEP] what is product material? [SEP] home > commercial > commercial fixtures > com * images are representative of products listed and may not be actual product. item only available for pick up in install bolt cap kit, white 7381251 - 200. 0200a login to see inventory sale : $ 253. 92 sell unit: ea $ 253. 9"

When sample has less than N questions, then second question can be left blank. In such cases the tokenized sample would appear as follows.

"[CLS] what is product color? [SEP] [SEP] home > commercial > commercial fixtures > commercial toilet bowl > pro * images are representative of products listed and may not be actual product. item only available for pick up in install bolt cap kit, white 7381251 - 200. 0200a login to see inventory sale : $ 253. 92 sell unit: ea $ 253. 9"

It will be noted that this kind of tokenization, when there are less than N questions, does not work as the model predictions for the 2nd answers are often very noisy and model is unable to understand what the space corresponding to the second question implies. And the empty question ([SEP] [SEP]) breaks the structure of the input as the context starts at different positions for different samples.

To overcome this issue and to give more structure to the representation, the N questions are set in the representation. To keep the number of questions to N, dummy attributes are used to add a "fake" question. This can provide a consistent structure for the model to remember the location of the attributes it is looking for in the input. Tokenization is as follows

When there are N questions (N=2):
"[CLS] what is product color? [SEP] what is product material? [SEP] home > commercial > commercial fixtures > com * images are representative of products listed and may not be actual product. item only available for pick up in install bolt cap kit, white 7381251 - 200. 0200a login to see inventory sale : $ 253. 92 sell unit: ea $ 253. 9"
"[CLS] what is product material? [SEP] what is product length? [SEP] home > commercial > commercial fixtures > co * images are representative of products listed and may not be actual product. item only available for pick up in install bolt cap kit, white 7381251 - 200. 0200a login to see inventory sale : $ 253. 92 sell unit: ea $ 253. 9

When there are less than N questions, the tokenization is:
"[CLS] what is product color? [SEP] what is product delivery? [SEP] home > commercial > commercial fixtures > com * images are representative of products listed and may not be actual product. item only available for pick up in install bolt cap kit, white 7381251 - 200. 0200a login to see inventory sale : $ 253. 92 sell unit: ea $ 253. 9 1 2 3 1 2 3"

In the token above, delivery ([SEP] what is product delivery? [SEP]) is a fake attribute.

It can be observed in the first two examples the location of attributes ("color", "material" and "material", "length") is consistent in the context. This allows the model to learn which position embedding it should attend to while answering the questions, therefore the structure of the questions is kept.

The samples where fake attributes are used are ignored in the loss function as these do not impact the learning.

### Experimental setup

Since the experiment tested the hypothesis that a Multi-Question Answering approach can learn multiple attribute, the experiment was restricted to very few attributes in data: color, weight, material.

N was set to 2 and during inference for each sample two runs were made as there were three attributes to predict. A dummy attribute was added during inference to have two complete runs for each sample. All four attributes were run in order to detect the false positives on negative attribute pages.

Train: test dataset was split with 80:20 ratio. The split was based on domain, so there is no domain overlap.

A DistillBert model was used as the base. It has 67M parameters.

The results for three attributes are shown below in Table 13.

**Table 13**

| **Attribute** | **Precision@0.95** | **Recall@0.95** | **F1@0.95** |
|---|---|---|---|
| color | 0.5368 | 0.4869 | 0.5107 |
| weight | 0.3690 | 0.4901 | 0.4210 |
| material | 0.3043 | 0.4315 | 0.3569 |
| average | 0.4034 | 0.4695 | 0.4295 |

The metric above is low, however the goal was not to achieve a high metric as a hyper-parameter had not been optimized. There was also quite a bit of overfitting, as a very high threshold was used above, as the predictions have very high probability. Notably, all three attributes were predicted to acceptable quality. Therefore, an approach to have Multiple Questions can be scaled up on this approach by adding more attributes.

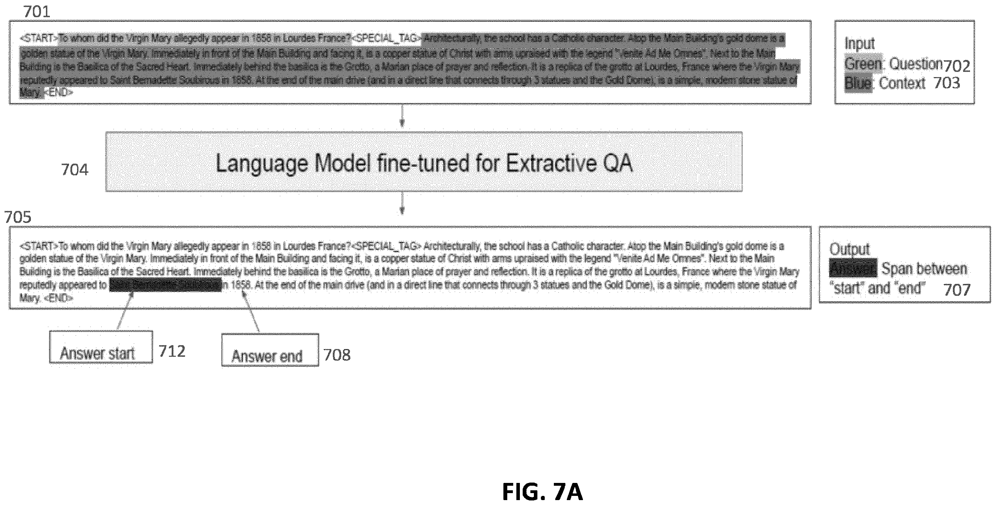

Accordingly, in an implementation, extractive QA uses only a pre-trained Language model. An example process is shown in FIG. 7A. As shown in FIG. 7A, at block 701, the inputs a question 702 and text 703 are concatenated. At block 704, the language model is trained to predict the position (start, end) of answer in text. At block 705, the language model outputs the token with Answer text 707 spanned between the predicted Answer start 706 and Answer end 708 to the question.

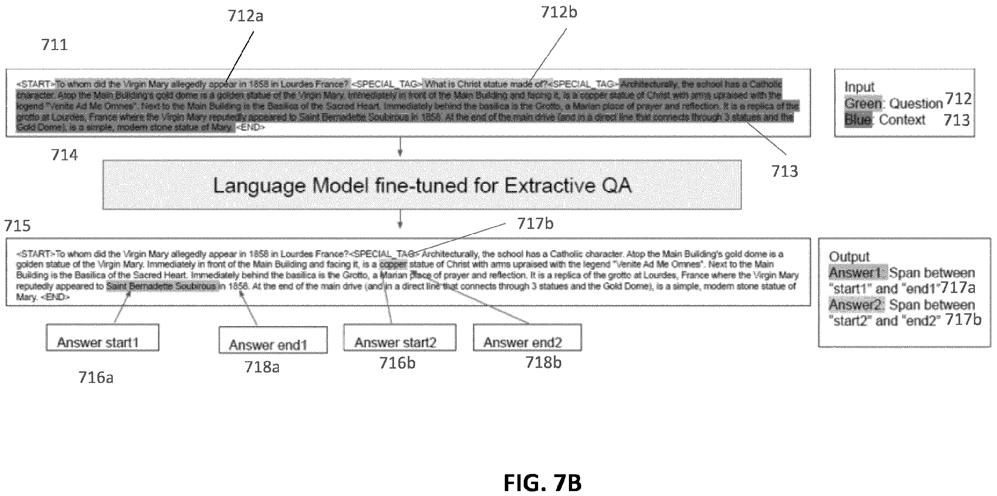

An example of extractive QA for Multiple Questions is shown in FIG. 7B. As shown in FIG. 7B, at block 711, the input's multiple questions 712a, 712b and text 713 are concatenated. At block 714, the language model is trained to predict the position (start, end) of multiple corresponding answers in text 713. At block 715, the language model outputs the token with Answer 1 text 717a spanned between the predicted first Answer start 716a and first Answer end 718a to the first question 712a. The language model also outputs the token with Answer 2 text 717b spanned between the predicted second Answer start 716b and second Answer end 718b to the second concatenated question 712b.

In order to fine-tune the model, datasets are similar to the ones used in with generative Al, with extra post-processing to identify the spans of extracted values in the source document. The training includes innovative approaches as described herein to allow multiple attributes to be extracted in one pass. This provides unexpected advantages as this approach, which uses NER with user-defined classes, is not a conventional approach to problem formulation. It is also novel and unconventional to have multiple attributes be extracted. Other advantages include:
- Simple formulation, small model size (around 100 million) - fast processing (up to 20 items per second with current model);
- -No hallucinations; and
- Can extract up to 8-10 attributes in single pass (compared to 1 attribute in baseline).

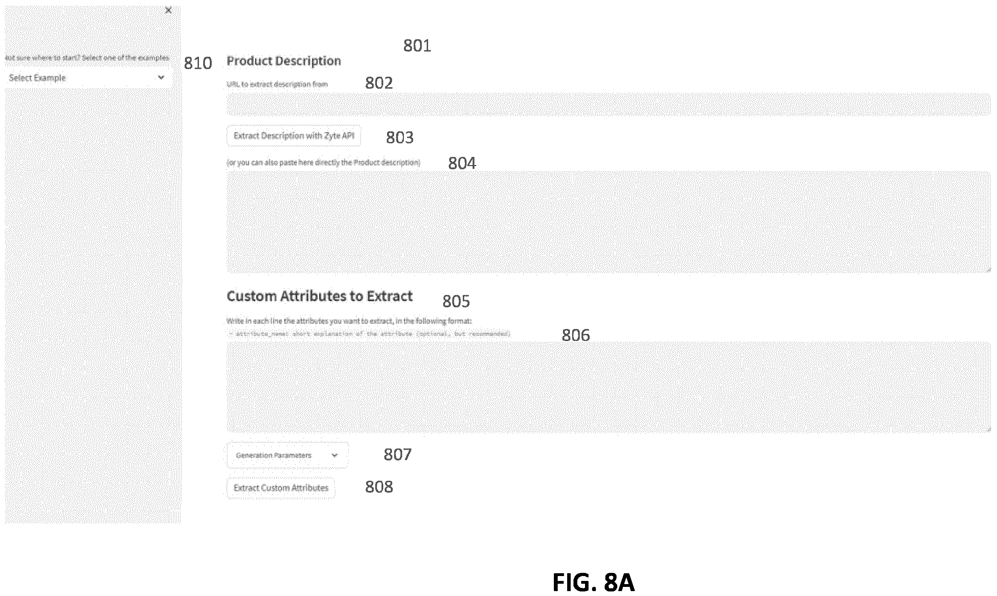

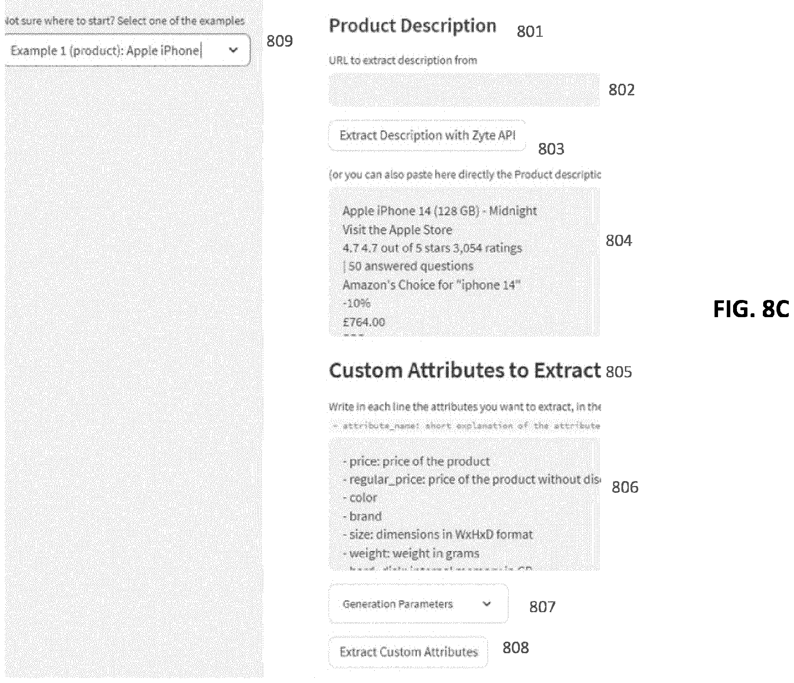

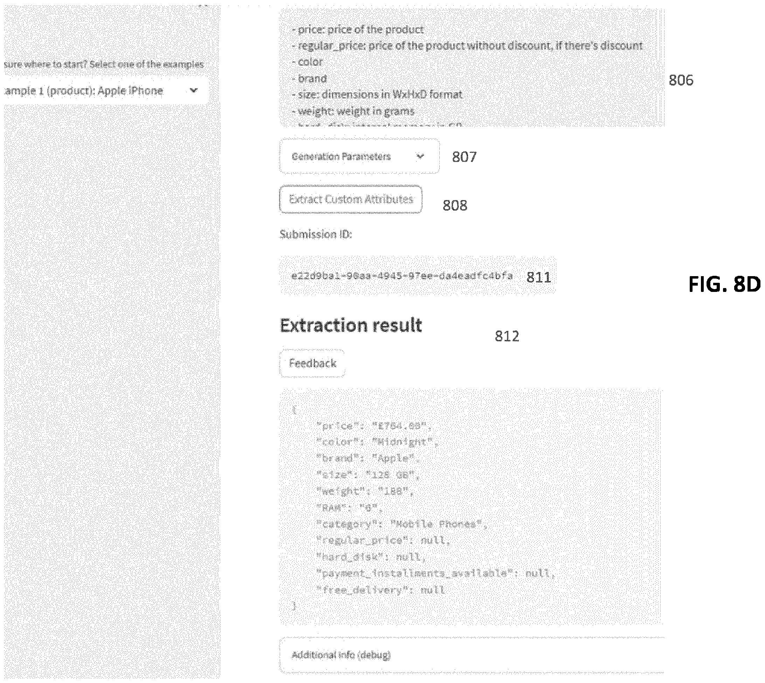

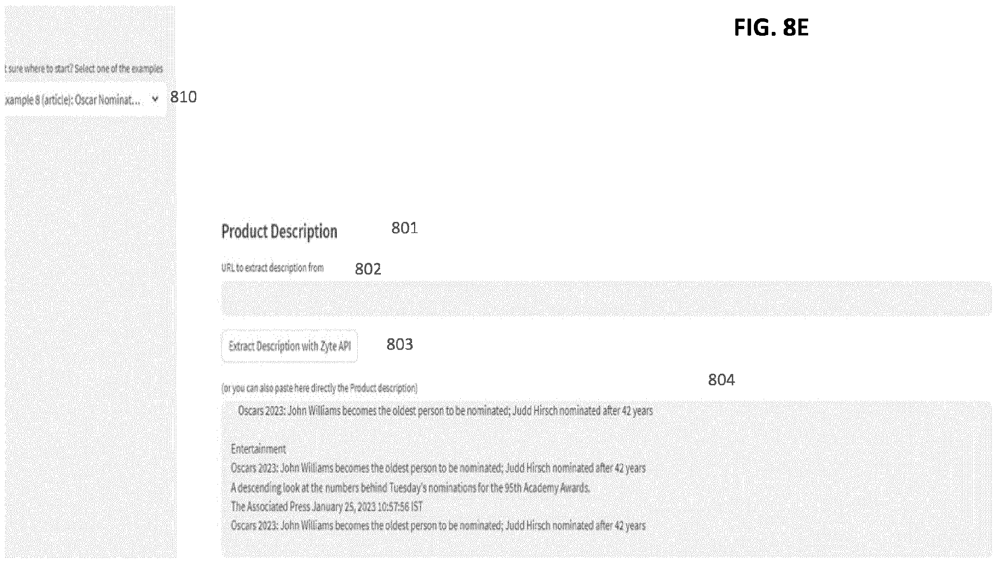

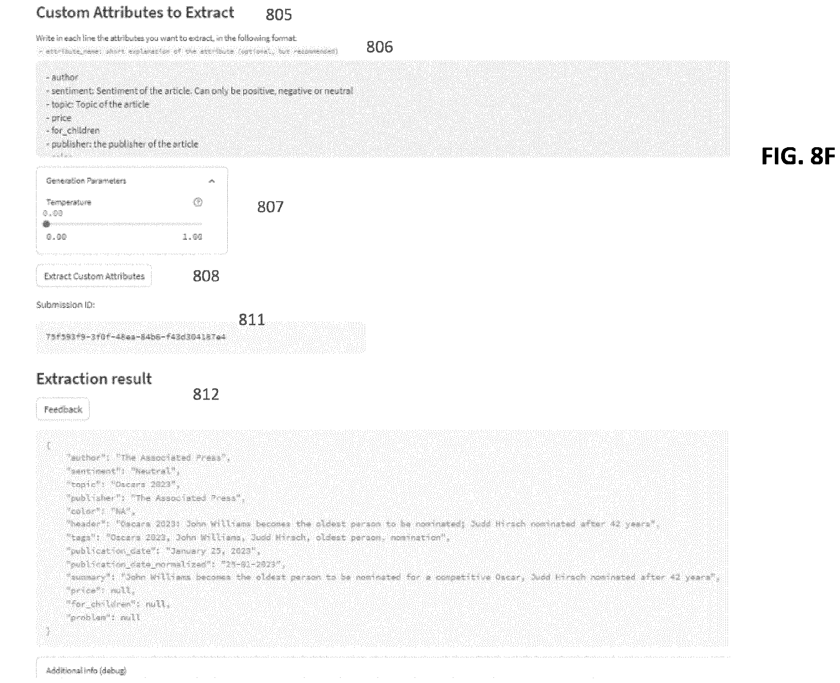

FIGS. 8A-8D show web interface for an implementation of the API for custom attribute extraction. In the example, the custom attribute extraction is shown for an Apple iPhone 14 ^{™}. FIGS. 8E-8F show the web interface for an implementation of the API for custom attribute extraction for an article, the example being for an article on Oscar Nominations.

As shown therein, the interface includes a Product Description section 801 including a URL field 802 to allow a user to input a URL and an extract button object 803 to execute the API to extract a product description from the URL. The Product Description section 801 also includes an extraction field 804 to allow a user to directly insert the product description. A Custom Attributes Extract section 805 includes a Custom Attributes field 806 where the user can input in each line the attribute the user wishes to extract, including a schema for the attribute name, and optionally, a short explanation of the attribute. The Custom Attributes Extract section 805 also includes drop down menu for Generation Parameters 807 and a Custom Attribute Extract button object 808 to execute the API to extract the Custom Attributes. Generation Parameters 807 can include, for example, a Temperature parameter (0.00-1.00) to target the sensitivity of the attribute extraction.

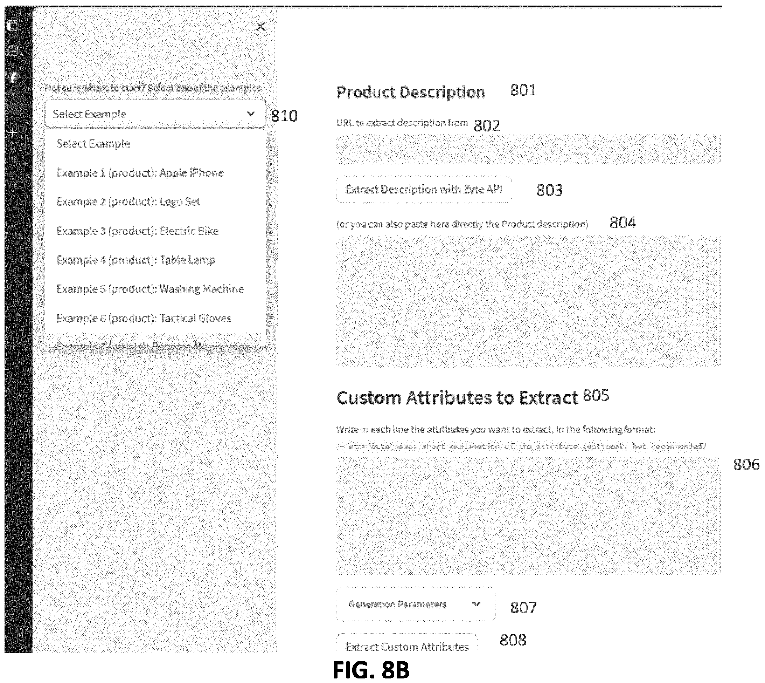

In an implementation, the interface can include objects to guide the user in selecting attributes for Custom Attribute extraction. For example, the interface can include an Examples drop down menu 810 giving examples of Products for the user to select. As shown in FIGS. 8B-8D, the exemplary drop down menu 810 includes a number of example products, from which the user selects an Apple iPhone 14 ^{™} Example 1. Then, when the user selects a Product, the interface populates the extraction field 804 with the product description properly formatted in the correct schema for API extraction. The interface can also populate the Custom Attributes field 806 with exemplary attributes and optional descriptions, such as, for example, price, color, brand, size, weight, and so on.

When the user enters the Product Description 801 and Custom Attributes 805 and executes the API 803, the system identifies the submission with a Submission ID 811 and executes the Extraction to output an extraction result 812. The API is able to then extract the features identified by the user, including those defined by the user themselves, using the custom attribute model as described herein.

"Quick Fix" Override of ML extraction in a Spider

Conventional methods for correcting errors for a machine learning extraction model for webpage extraction are slow and uncertain. Annotating problematic webpages and re-training the model does not require custom development and is robust vis-a-vis website changes, but is very slow, requires a separate model verification and deployment step, and does not guarantee a fix.

Another method is overriding ML extraction in a spider with custom code. This approach requires custom development, and by default is not robust to website changes.

Described herein are embodiments of technology to obtain structured data, including text, image and other kinds of data, from web pages, and process them for, among other advantages, more efficient web crawling, website analysis, creating knowledge databases and graphs, and providing more useful web page representation for other automated web page processing components. For example, embodiments described herein include machine learning components employing Deep Learning to extract and classify information from web pages. Embodiments also include a multi-modal neural network architecture that processes text content and HTML structure to achieve good quality and to do so efficiently to decrease extraction time.

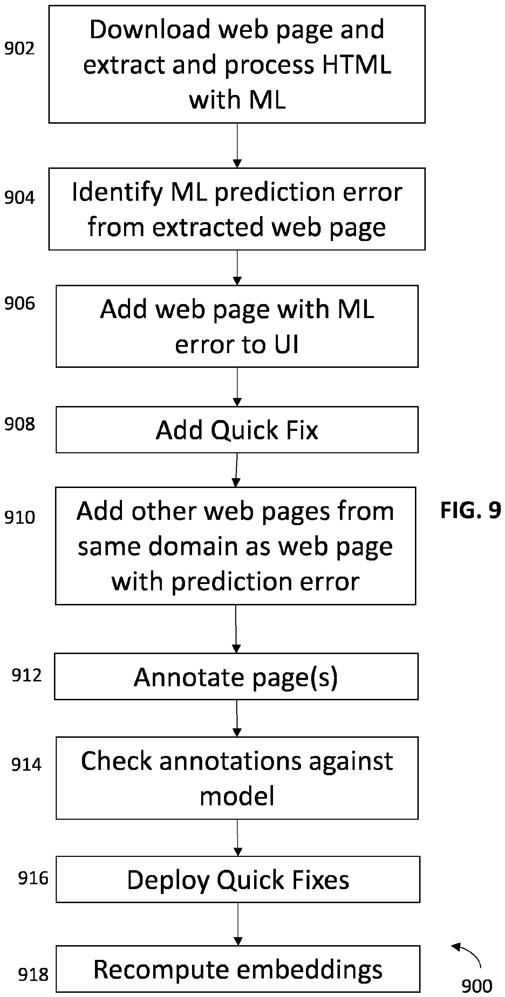

FIG. 9 illustrates a flowchart for process 900 for performing web page analysis in accordance with at least one of the various embodiments.

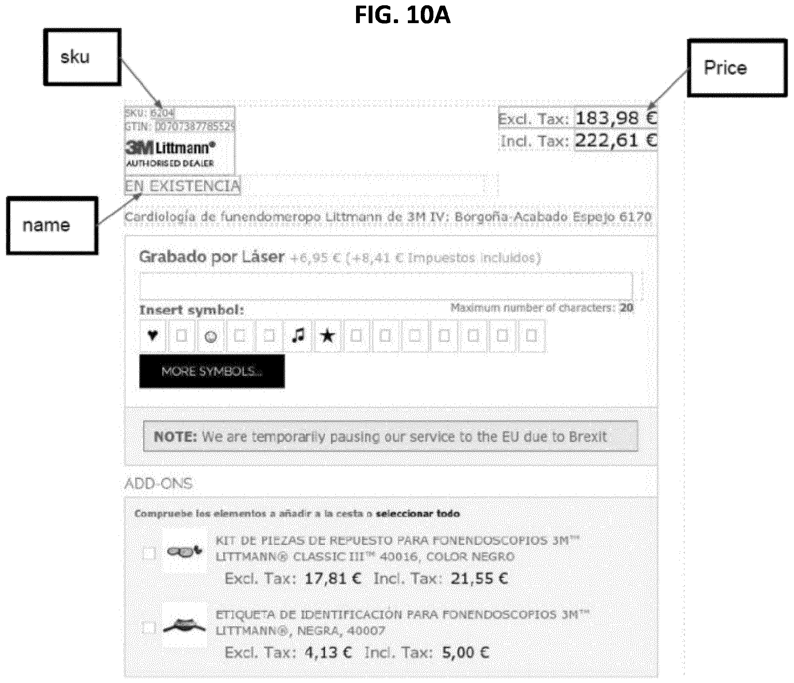

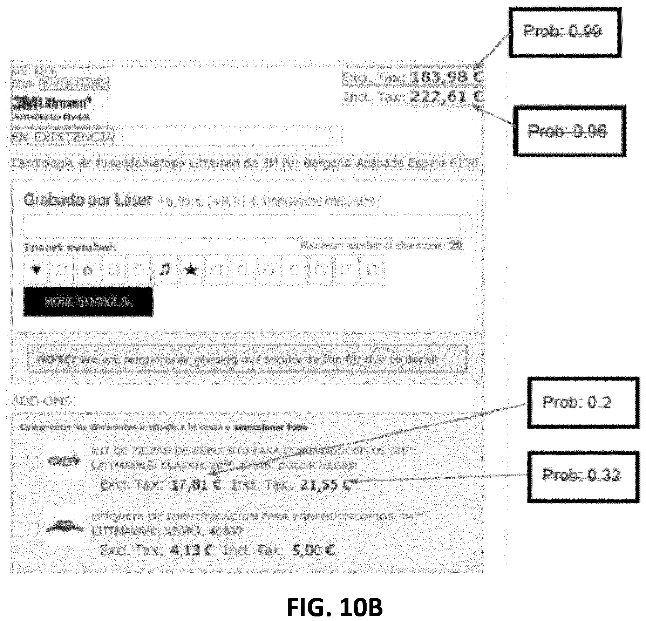

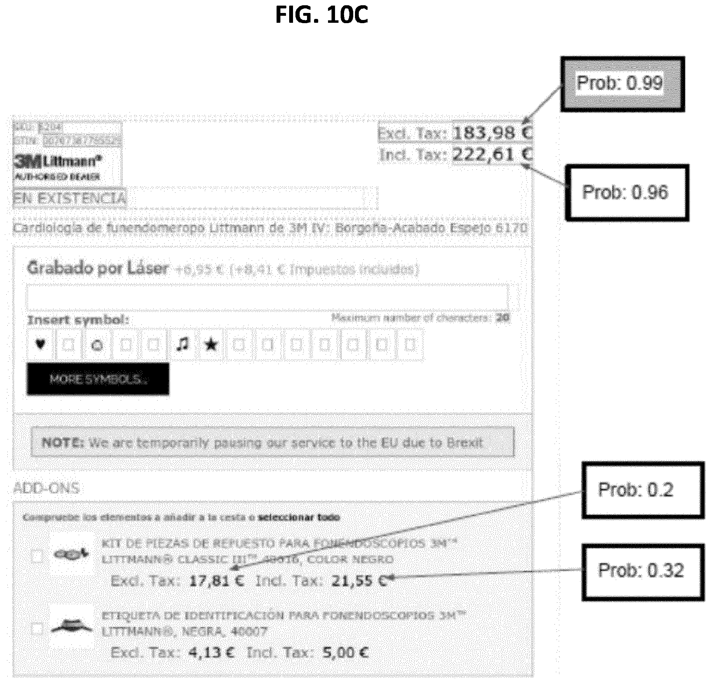

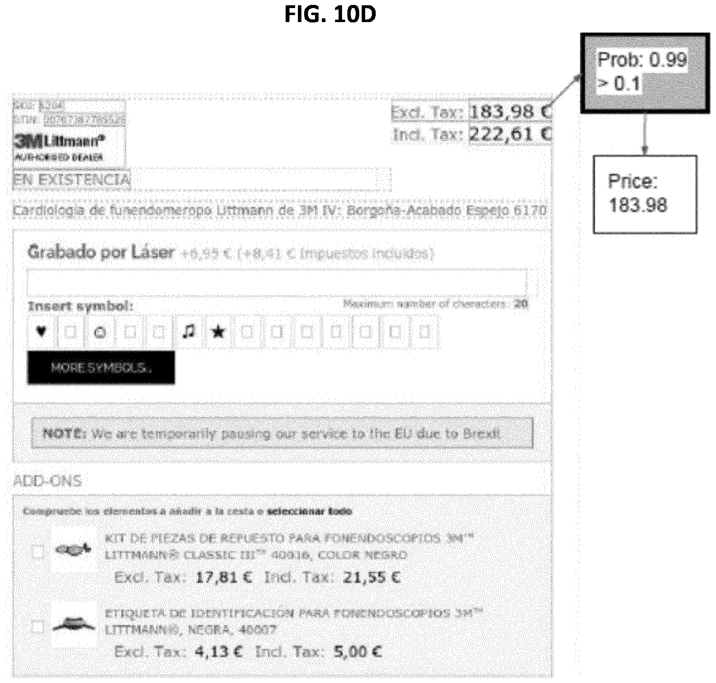

Quick fixes are applied on top of an ML system, which works by first predicting an HTML element belonging to a particular class, e.g.: "price", and then running an extraction code for a particular class. Quick fixes can be generated to fix a prediction error with respect to predicting a correct HTML element. Exemplary prediction errors include: the correct element is not predicted, a different element is predicted, or an element is predicted when none should be predicted. Elements are predicted when a model assigns probability to a data element which is higher than a predefined threshold. For some classes, e.g.: "price", only one element is predicted, which has the highest probability among those with probability above the threshold. For other classes, e.g.: "image", all elements with probability above the threshold are predicted. An example of a machine learning (ML) extraction employing an Autoextract model and an extraction API where the ML Model is trained to predict attributes (price, sku, name, etc) from a page is shown in FIGS. 10A-10D. The model predicts "price" probability for each element on the page. Then, the model selects the element with highest probability. If probability is above a preset threshold (0.1), element is predicted as "price. As noted above, incorrect elements can get higher probability than correct element.

At block 902, a webpage a HTML element is extracted using web scraping module API ML extraction model. In at least one implementation, a web scraping and classification engine is configured to process HTML from the web page. The scraping module can be configured to perform data type-specific extraction using ML models, which also identify the main text of the extracted item. For example, the data can be processed using 1D convolutional neural network layers, Recurrent Neural Network layers (RNNs and their variants LSTM or GRU), or other like neural networks. An exemplary system for Al powered scraping is described in U.S. Patent No. 10,984,066, filed as U.S. Pat. App. No. 16/279,504 on February 19, 2019, and issued on April 20, 2021, the entirety of which is incorporated by reference hereby. An exemplary system for scraping is also described in U.S. Pat. App. No. 18/060,213, filed on November 30, 2022, the entirety of which is incorporated by reference hereby.

At block 904, an operator identifies one or more ML prediction errors with respect to the ML prediction of a correct HTML element.

At block 906, the webpage with the error is added to a UI, where an operator can see the rendered page, and can see model predictions overlayed over the page.

At block 908, the interface is configured so that an operator can add one or more fixes for each class.

For example, a fix can include an "Include XPath" fix to use hints to prioritize specific (correct) nodes. An "Include XPath" XPath expression restricts the model to a specified area of the page, and if there are elements with probability which is above a threshold assigned by an ML model, the element is considered for selection. If no such element is found, elements from the whole page are considered. The "Include XPath fix can include an "ignore threshold" option. If the "ignore threshold" option is selected, then the threshold inside the specified area is reset to a very low value, and an element with the highest probability is selected.

The interface can be configured to allow the operator to enter an XPath expression manually. The system can also be configured to present the user with candidates based on selected elements, in which case the operator does not need XPath knowledge to resolve most issues. For example, in an implementation, the system can be configured to a DOM tree, and an operator can clearly see how many matches across the page each XPath display expression produces, and can navigate up and down the DOM tree to find the best element to base the XPath on.

A fix can also include an "XPath full text" fix. The "XPath full text" fix is similar the "Include XPath" fix, but instead of restricting considered elements to those within a region, the operator can restrict considered elements to just the ones which are specified by the XPath. This option can be useful and advantageous if a model prefers an element which is too narrow, for example, such as omitting the decimal part of the product price, or part of an article body. The "XPath full text fix" fix can include an "ignore threshold" option. If the "ignore threshold" option is selected, then the threshold inside the specified area is reset to a very low value, and an element with the highest probability is selected.

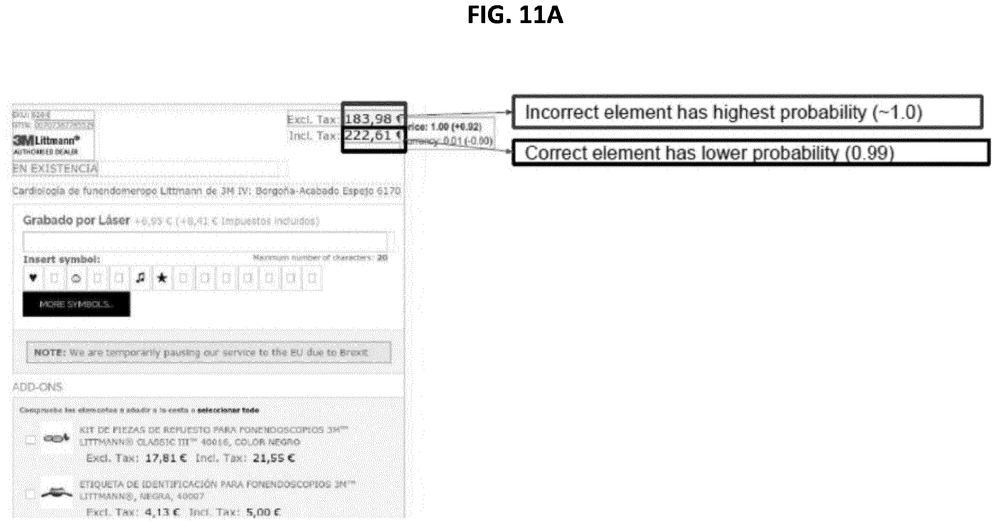

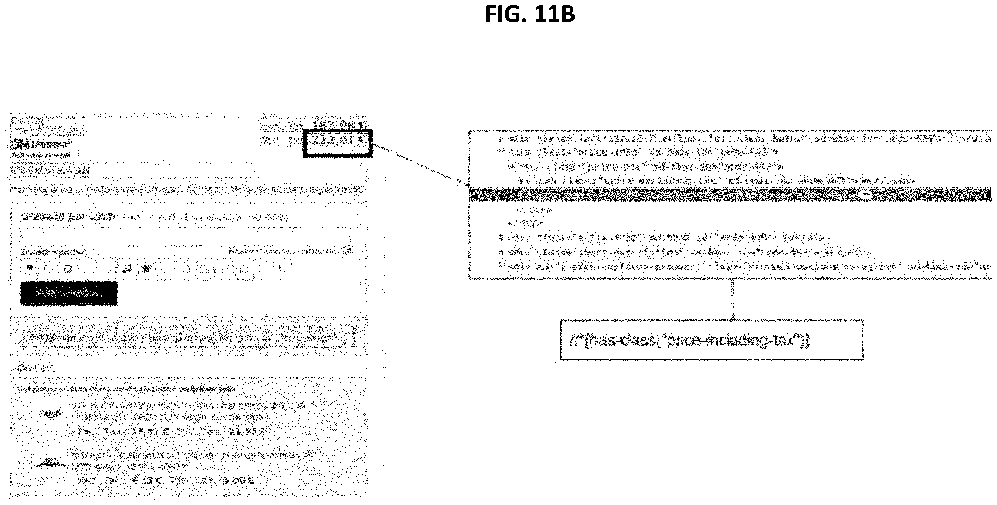

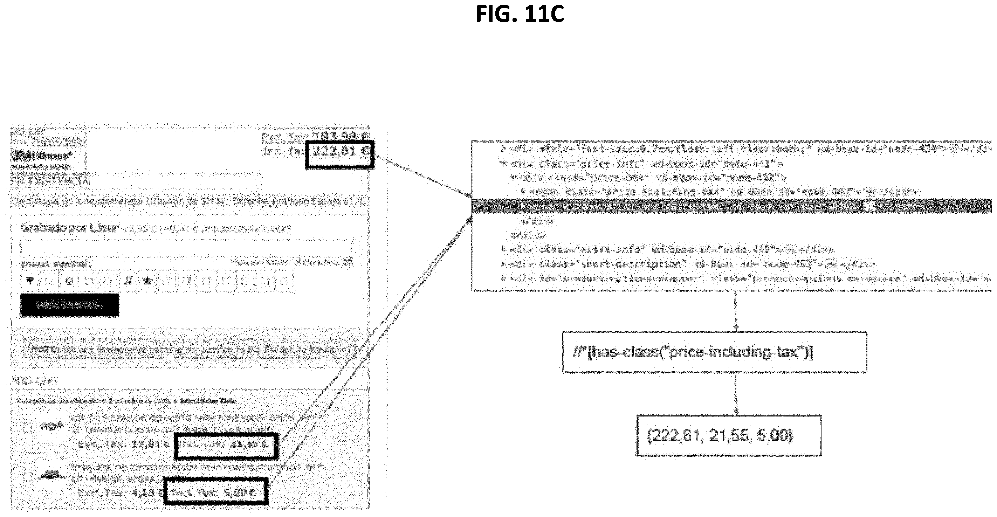

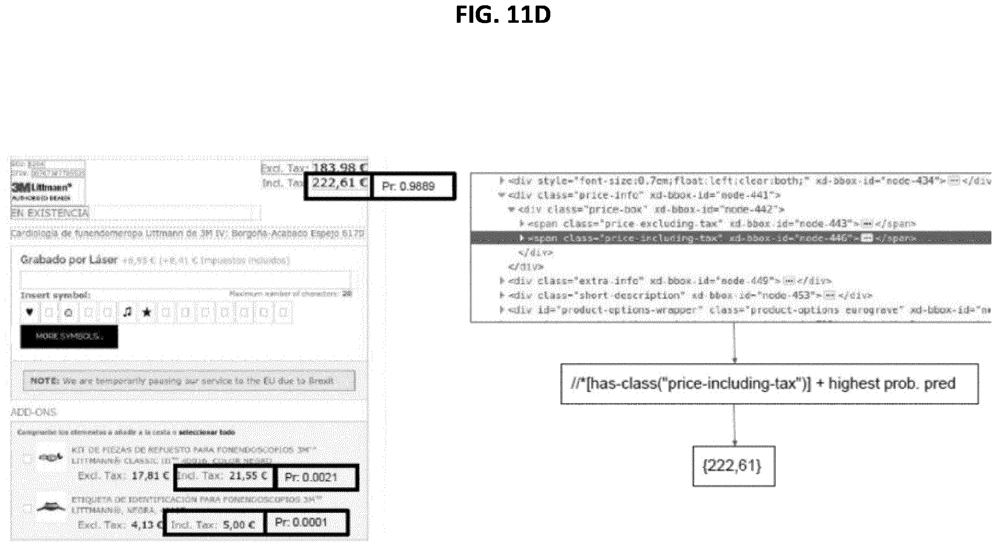

FIGS. 11A-11B show an Include XPath example using simple XPath (with semantics) to provide supplemental information. As shown in the example, a "//*[has-class("price-including-tax")]" identifies values {222,61, 21,55, 5,00}. FIG. 11B shows an Include XPath example where element probabilities and XPath information are combined.

A fix can also include an "Exclude XPath" configured to allow a user to exclude an area of the page specified by the XPath. For example, the "Exclude XPath" fix can be configured to suppress predictions coming from a section on a product webpage with "related items" on a webpage for a single product item. Thus the "Exclude XPath" uses the hint to suppress certain nodes.

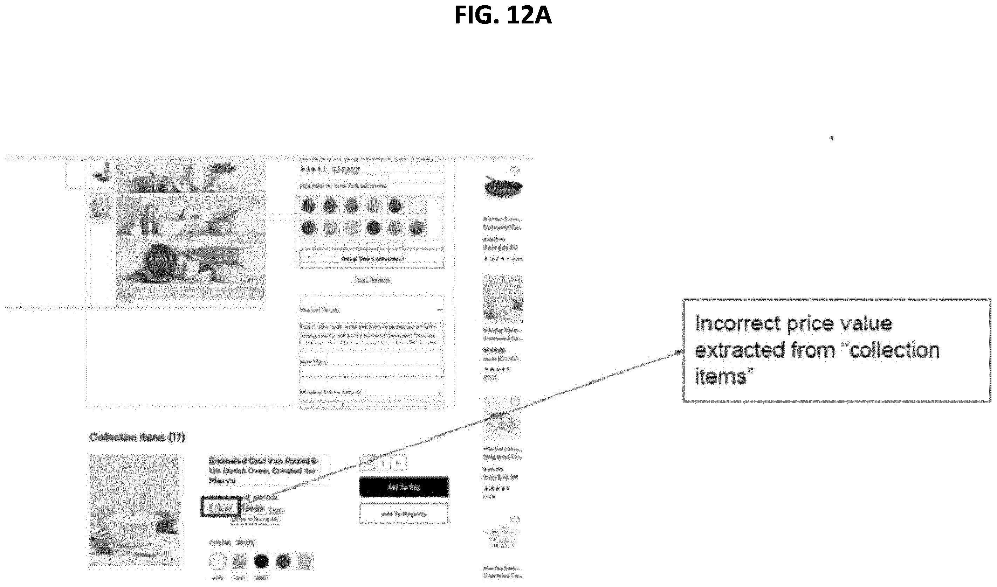

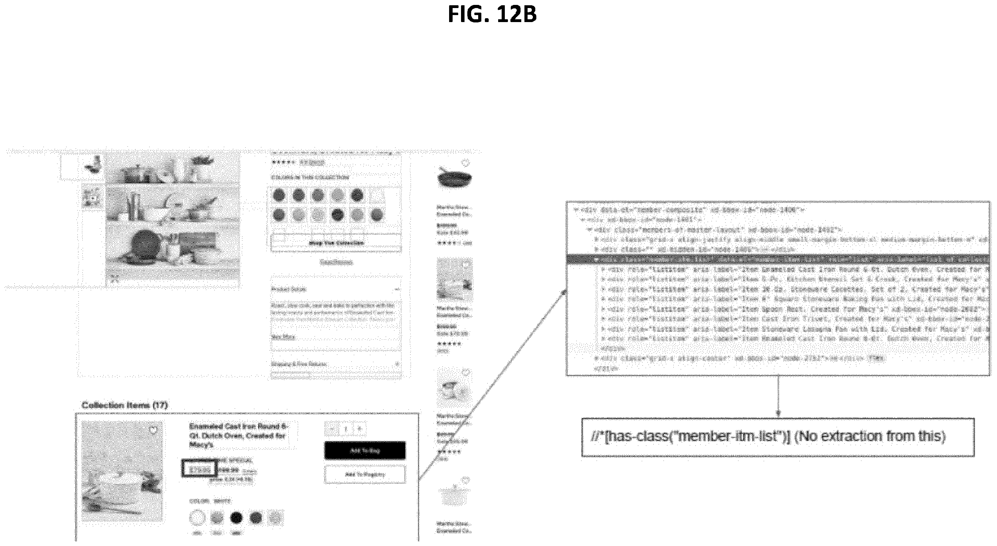

FIG. 12A shows an example where an incorrect price value is extracted. A value is extracted, but no correct value is present. As shown in FIG. 12B, an XPath is employed to blacklist page sections for extraction of specific attributes. In the example, a "//*[has-class("member-itm-list")]" is employed so there is no extraction from this element.

A fix can also include an "Embedding hint" fix. The "Embedding hint" is not based on XPaths, and instead is based on similarity between HTML elements computed by the underlying ML model. For the "Embedding hint" fix, the system is configured with a predefined threshold for an embedded element hint. The system is configured to calculate a cosine similarity between an embedding of an element selected as a hint, and all elements on a new webpage. When there are elements with a similarity above the predefined threshold for the embedded element hint, these elements are selected as candidates for extraction, instead of using the ML model predictions. An advantage of this fix is that the embedding hint can work even when no reliable XPath expression is available.

At block 910, the system is configured to allow an operator to also select one or more other web pages from the same domain as the webpage with the error. At block 912, the system is configured to allow the operator to perform regular annotation on one or more or all of the web pages, where the operator can annotate the attributes which are being fixed. At block 914, the annotations are then checked against model predictions with quick fixes enabled. At block 916, if predictions are correct, the quick fixes can be deployed. Quick fixes are deployed by publishing their description, which includes XPath expressions and types of quick fixes, as well as source pages for embedding hints. At block 918, all embeddings can be recomputed at runtime using the current model.

In an implementation, the system can be configured so that if a target website changes, the system can be configured to fall back to an underlying ML extraction model. For example, if for all XPath hints, an XPath is not found due to a website change, then ML model predictions can be used for this class. For embedding hints, if there are no elements above the threshold, ML model predictions can be employed as well.

An advantage of the implementations described herein is that quick fixes are not tied to a particular model, and as such the system can continue to work similarly if the underlying model is updated. This happens because embedding hints are recomputed at runtime using the current model, and the only the inputs used to compute embeddings are stored. XPath hints do not depend on the model explicitly, they only guide the model towards or away from particular regions of the webpage.

Another exemplary advantage is that quick fixes do not require ML model re-training. As such, quick fixes are lightweight, have safeguards in place, and can be deployed to production within minutes.

It will be understood that each block of the flowchart illustration, and combinations of blocks in the flowchart illustration, can be implemented by computer program instructions. These program instructions can be provided to a processor to produce a machine, so that the instructions, which execute on the processor, create means for implementing the actions specified in the flowchart block or blocks. The computer program instructions can be executed by a processor to cause a series of operational steps to be performed by the processor to produce a computer-implemented process such that the instructions, which execute on the processor to provide steps for implementing the actions specified in the flowchart block or blocks. The computer program instructions can also cause at least some of the operational steps shown in the blocks of the flowchart to be performed in parallel. Moreover, some steps can also be performed across more than one processor, such as might arise in a multi-processor computer system or even a group of multiple computer systems. In addition, one or more blocks or combinations of blocks in the flowchart illustration can also be performed concurrently with other blocks or combinations of blocks, or even in a different sequence than illustrated without departing from the scope or spirit of the present innovations.

Accordingly, blocks of the flowchart illustration support combinations of ways for performing the specified actions, combinations of steps for performing the specified actions and program instruction means for performing the specified actions. It will also be understood that each block of the flowchart illustration, and combinations of blocks in the flowchart illustration, can be implemented by special purpose hardware-based systems, which perform the specified actions or steps, or combinations of special purpose hardware and computer instructions. Special purpose hardware can include, but is not limited to, graphical processing units (GPUs) or Al accelerator application-specific integrated circuits. The foregoing example should not be construed as limiting and/or exhaustive, but rather, an illustrative use case to show an implementation of at least one of the various embodiments of the present innovations.

## Claims

1. A system for a computer comprising an input and a memory including a non-transitory program memory for storing at least instructions and a processor that is operative to execute instructions for scraping and processing a web page, comprising:
an Application Programming Interface (API) including a smart crawling selector and further comprising;
custom spiders and template spiders configured to implement a crawling strategy;
a Machine Learning (ML) module configured for extraction, including an ML rendering extraction module, an ML HTML extraction module for extracting raw HTML, or an LLM enhanced ML Custom Attributes extraction module, or any combination thereof; and/or
an interface module configured to allow a user to select a fix for at least one ML prediction error.

2. The system of claim 1 comprising
the plurality of spiders including template spiders and custom spiders; and
the non-transitory program memory for storing the instructions that, when executed by the processor enable actions comprising: extracting a web page and extracting target data from the web page with at least one of the plurality of spiders.

3. The system of claims 1 or 2, wherein the instructions, when executed by the processor, enable further actions comprising:
generating the custom spider from a template spider; and
extracting the target data from the web page with the custom spider; and
wherein an input of API preferably comprises an input to allow a user to enter a name of the custom spider and one or more URLs; and
wherein the template spider preferably comprises a customizable spider template.

4. The system of any of claims 2-3 wherein the template spider includes an article template and/or an e-commerce template.

5. The system of any of claims 2-4, wherein the API includes a strategy selection interface for selecting a full strategy, an incremental strategy, or a navigation strategy, and
wherein the smart crawling selector is preferably configured to automatically adjust a crawling strategy.

6. The system of any of claims 2-5, wherein the system comprises middleware including the non-transitory program memory for storing the instructions that, when executed by the processor enable actions comprising at least one of:
a navigation depth limit middleware configured to enforce a limit on the number of hops the spider scrapes;
a seed domain restriction middleware configured to restrict extraction requests to an original seed URL domain;
a feed link filtering middleware configured to include filter requests to feed links;
a seed request limitation middleware configured to limit the number of requests from a seed request;
a duplicate item extraction prevention middleware configured to skip items extracted from a prior crawl;
an allow offsite middleware configured to ensure that category links that do not belong to a same domain are crawled;
a crawling logs middleware; or
any combination thereof; and
wherein the feed link filtering middleware is preferably configured to, when executed by the processor, enable actions comprising:
extract all links from a from a web page;
split the links into a plurality of groups;
filter target feed links into one of the groups, and
extract only the targeted data from the target feed links;
and the feed link filtering preferably comprises a feed item probability threshold,
and the feed link filtering middleware is configured to, when executed by the processor, enable actions comprising:
determining if a feed item in the extracted targeted data meets the probability threshold, and if so, extracting or generating the feed item from the extracted targeted data.

7. The system of any of claims 2-6, wherein the system comprises the Machine Learning module configured to employ ML to extract the website content; wherein the ML module is preferably configured to filter or discard non-targeted web content,
wherein the ML module comprises a pre-trained machine extraction for defined schemas; and/or
wherein the ML module comprises one or more of the ML rendering extraction module, the ML HTML extraction module for extracting raw HTML, and/or the ML Custom Attributes extraction module.

8. The system for processing a web page of any of the above claims, wherein the system comprises the non-transitory program memory for storing the instructions that, when executed by the processor enable actions comprising at least one of:
accepting inputs for custom attribute data from a user;
accessing a web page from a website;
extracting HTML text from the web page;
processing the HTML text from the web page with a lightweight machine learning (ML) artificial intelligence (Al) model preferably including a neural net;
inputting data from the ML Al model and the custom attribute data from the user to a Large Language Model (LLM) Al;
prompting the LLM Al to perform extraction;
obtaining LLM Al extracted attributes from the LLM Al;
wherein the non-transitory program memory for storing at least instructions and the processor that is operative to execute instructions that enable actions preferably comprises:
a template or code configured to allow the user to describe an input custom attributes.
the scraping module is preferably configured to execute data type-specific extraction using the ML models, which also identify the main text of the extracted item; and

9. The system of claim 8, wherein the non-transitory program memory for storing at least instructions and the processor that is operative to execute instructions that enable actions further comprise:
extracting the HTML text from the web page; and
using the ML Al model to identify and exclude portions of the extracted webpage from the extraction of the HTML text; and
wherein the actions preferably further comprise:
extracting HTML text from a web page; and
annotating the extracted web page to identify main elements and elements to exclude.

10. The system for processing a web page of any of the above claims, further comprising:
a computer comprising an input and a memory including non-transitory program memory for storing at least instructions and a processor that is operative to execute instructions that enable actions comprising:
tokenizing a source text as N-question tokens and a context concatenating the N question tokens and the context,
wherein N is a hyper-parameter indicating the number of questions the model can answer,
wherein the concatenating the N question tokens preferably comprises concatenating the N question tokens with a dummy question token when the input has only one underlying question to provide NER model consistency;
training a Named Entity Recognition (NER) model to predict, for each of the N question tokens, a probability that the token is a start of an answer and a probability that the token is the end of an answer; and
extracting N answers from the source text using the highest probability start token and the highest probability end token for each of the N question tokens.

11. The system for scraping and processing a web page of any of the above claims, comprising:
a computer comprising an input and a memory including non-transitory program memory for storing at least instructions and a processor that is operative to execute instructions that enable actions comprising:
accessing a web page from a website;
extracting data from the web page;
processing the data from the web page with a machine learning (ML) model to generate predictions for web page elements, wherein the ML model assigns a probability to the web page elements that are higher than an ML model threshold;
identifying at least one ML prediction error from the predictions;
providing an interface to an operator including a fix for the at least one ML prediction error,
wherein the non-transitory program memory for storing at least instructions and the processor that is operative to execute instructions that enable actions preferably comprise providing the interface for the operator to add other web pages from the same domain as the extracted web page with the error and annotate the other web pages; and check the annotations against the ML model;
and preferably provide the interface with an overlay to display the fixes.

12. The system of claim 11, wherein processor device is operative to execute instructions further comprising:
recompute an embedding identified and fixed via the fix made by the user via the interface;
and preferably further comprising:
identifying one or more candidate fixes for the at least one error; and
presenting the one or more candidate fixes on the interface for selection by the operator;
and wherein the fix is preferably at least one of:
an Include XPath fix that restricts the ML model to a specified region of the web page;
a XPath full text fix that restricts the ML model to a specified element of the web page;
an Exclude Xpath fix that excludes the ML model from a specified region of the web page;
an Embedding hint fix based on similarity between HTML elements computed by the ML model, wherein the Embedding hint fix is preferably configured to calculate a cosine similarity between an embedding of an element selected as a hint and all elements on the webpage, and when the similarity is above a predefined threshold, the elements that meet the threshold are selected as extraction candidates; or
any combination thereof.

13. The system of any of the above claims, wherein processor device is operative to execute instructions further comprising:
wherein the fix preferably comprises an ignore threshold option configured to set a lower probability threshold for a prediction than the ML model probability threshold for the prediction; and
wherein the Include XPath fix and the X Path full text fix each preferably include the ignore threshold option; and
wherein the system is preferably configured so that if a target website changes after a fix is implemented, the system is configured to employ ML model predictions without the fix.

14. The system for scraping and processing a web page of any of the above claims, further comprising memory for storing at least instructions and a processor that is operative to execute instructions that enable actions for a method comprising:
auto extracting HTML text from web page based on an HTTP request;
applying a stacked bidirectional long short term memory network (BiLSTM) in a head configured to operate on a sequence of DOM elements to capture a web page context, wherein the BiLSTM preferably comprises a skip connection and preferably employs a left context or a right context or both, and
operating a Machine Learning model on a browser request to use an image modality to capture the page context.

15. The system for scraping and processing a web page of claim 13, further comprising memory for storing at least instructions and a processor that is operative to execute instructions that enable actions for a method comprising:wherein the method preferably further comprises:
obtaining a raw HTML snapshot comprising HTML tags and CSS attributes;
processing the raw HTML snapshot to obtain a plurality of 2D feature maps using a neural network;
generating a plurality of Regions of Interest (Rol) from the 2D feature maps;
generating a HTML feature vector for each of the Rols; and passing each HTML Rol feature vector to the classification layer;
generating a CSS class and ID feature vector for each Rol by computing an average of the CSS classes and IDs;
passing the CSS class and ID Rol feature vectors to the classification layer; processing the classification layer with a deep neural network (DNN), wherein the DNN preferably comprises the classification layer, Batch Normalization, ReLU activation, and dropout regularization; and the BiLSTM comprises an RNN layer configured for sequence processing model with a forward direction LSTM and a backward direction LSTM;
processing the DNN output with the BiLSTM; and
outputting final classification of N classes including a probability score that a part of a web page belongs to a particular class;
wherein the method preferably further comprises:
removing information other than the HTML tags and CSS attributes from the HTML snapshot;
encoding the HTML snapshot to a byte string;
converting the byte string to a 2D tensor using a character embedding layer;
processing the 2D tensor to obtain a plurality of 2D feature maps using a neural network, wherein the lengths of the 2D feature maps are the same lengths of the input byte string, and wherein the depth parameter can be chosen; and
generating the plurality of Regions of Interest (Rol) from the 2D feature maps, wherein each Rol corresponds to a respective Rol on the byte string and respective 2D feature maps;
resizing each Rol to a fixed length, wherein the resizing keeps a depth of the feature map and uses ROI pooling; and
passing the resized Rols to a classification layer;
wherein the method also preferably further comprises:
for each possible HTML tag,
computing an embedding during training, the embedding being a vector of a fixed size; and
for each of the Rols,
extracting an HTML tag;
looking up the HTML tag in an embeddings table;
generating the HTML feature vector for the Rol; and passing each HTML Rol feature vector to the classification layer; and
wherein the method also preferably further comprises
computing an embedding for popular CSS classes or ids during training, the embedding being a vector of fixed size;
for each of the Rols, extracting all CSS classes and IDs;
looking up the CSS classes and IDs in a table;
generating the CSS class and ID feature vector for each of the Rols by computing an average of the CSS classes and IDs; and
passing the CSS class and ID Rol feature vector the classification layer.
